# EUROPEAN PATENT SPECIFICATION

(11) **EP 4 502 540 B1**
(45) Date of publication and mention of the grant of the patent: **18.03.2026**
(21) Application number: 24187453.6
(22) Date of filing: 09.07.2024
(51) Int. Cl.: G01C 21/20, G01C 21/34, G01C 21/36, G08G 5/00

(54) **ENHANCED TRIP PLAN-BASED VEHICLE BATTERY SITUATIONAL AWARENESS**
VERBESSERTES SITUATIONSBEWUSSTSEIN FÜR FAHRZEUGBATTERIE AUF GRUNDLAGE EINES FAHRTPLANS
SENSIBILISATION À LA SITUATION DE BATTERIE DE VÉHICULE BASÉE SUR UN PLAN DE DÉCLENCHEMENT AMÉLIORÉ

(30) Priority: 31.07.2023 US 202318362605
(43) Date of publication of application: 05.02.2025
(73) Proprietor: Honeywell International Inc., Charlotte, NC 28202 (US)
(72) Inventor: BALASUBRAMANIAN, Jayasenthilnathan, Charlotte, 28202 (US); LETSU-DAKE, Emmanuel, Charlotte, 28202 (US); GUDINO, Roberto, Charlotte, 28202 (US)
(74) Representative: Haseltine Lake Kempner LLP

(56) References cited:
- EP-A1- 3 613 974
- US-A1- 2017 030 728

## Description

### TECHNICAL FIELD

Embodiments of the present invention generally relate to safely managing a trip plan associated with the operation of a vehicle, and specifically to generating predictive model-based battery energy overlays for multiple electronic displays associated with the vehicle that are characterized by one or more battery system performance parameters related to the vehicle.

### BACKGROUND

As the aerospace industry continues to deploy more electric aerial vehicles it is imperative that the battery health and operational capacities of the electric aerial vehicles are known to an operator at all times, particularly if the electric aerial vehicles are operating in an autonomous flight mode. Furthermore, it is especially important for an operator to monitor and keep abreast of the performance of an autonomous electric aerial vehicle when operating in in densely populated urban environments as airports, vertiports, and/or safe landing zones may be scarce.

Furthermore, in many circumstances, there are multiple factors that can impact the efficiency, safety, and/or operation of an electric aerial vehicle. Various sensors, monitors, and systems associated with the electric aerial vehicle may provide raw data related to particular operational components of the aerial vehicle to provide situational awareness, contextual information, and/or other helpful data to operator(s) of the electric aerial vehicle. However, as multiple adverse situations impacting the operation of the electric aerial vehicle occur, the operator(s) of the electric aerial vehicle may have a limited amount of time and/or knowledge with which to evaluate the specific scope and criticality of the adverse situations and, as such, may not be able to accurately determine an appropriate mitigative action with which to address the adverse situations.
Inventors have discovered problems with current implementations of vehicle management techniques related to electric aerial vehicles. Through applied effort, ingenuity, and innovation, the inventors have solved many of these problems by developing the solutions embodied in the present invention, the details of which are described further herein.

US 2017/030728 A1 discloses a method including receiving information corresponding at least to (i) a state of charge of an energy storage of a vehicle, (ii) route information corresponding to a planned driving route for the vehicle, and (iii) a predicted driver characteristic; determining using the received information, and presenting to a driver of the vehicle, a first energy-versus-distance measure for the planned driving route; receiving a user input indicating a proposed change in at least the driver characteristics, and determining using the received information and the user input, and presenting to the driver, a second energy-versus-distance measure for the planned driving route that takes into account the proposed change.

EP 3,613,974 A1 discloses a method for monitoring an extra-fuel consumption of a terrestrial vehicle, in particular a commercial or industrial vehicle, comprising at least the following steps in succession: (Step 1) a first acquisition of at least a first set of input parameters related to environmental and mission conditions, a second set of input parameters related to vehicle specifications and a third set of input parameters related to a vehicle driving style, (Step 2) estimating a first expected fuel consumption in time, based on said first, second and third set of input parameters, (Step 3) a second acquisition of a measured fuel consumption in time, (Step 4) comparing, preferably in real time, said expected fuel consumption with said measured fuel consumption, thereby obtaining an error value in time, (Step 5) checking: whether said error value increases abruptly (5 = Yes), if so (Step 6) activating a flag indicating a condition of extra-fuel consumption.

### BRIEF SUMMARY

In general, embodiments of the present invention herein provide enhanced trip plan-based vehicle battery situational awareness. Other implementations will be, or will become, apparent to one with skill in the art upon examination of the following figures and detailed description. It is intended that all such additional implementations be included within this description be within the scope of the invention and be protected within the scope of the following claims.

In accordance with a first aspect of the present invention, a computer-implemented method for providing enhanced trip plan-based vehicle battery situational awareness is provided. The computer-implemented method is performable by one or more specially configured computing device(s) embodied in hardware, software, firmware, and/or any combination thereof, for example as described herein. The computer-implemented method includes monitoring a current energy expenditure of a vehicle as the vehicle executes a first trip plan. The computer-implemented method also includes determining that the current energy expenditure of the vehicle does not match a predicted energy expenditure of the vehicle.

The computer-implemented method also includes, in response to determining that the current energy expenditure of the vehicle does not match the predicted energy expenditure of the vehicle, generating, based on output from a vehicle performance prediction model, a predicted energy overlay representing the predicted energy expenditure of the vehicle, where the predicted energy overlay comprises a visualization of one or more defined travel legs between two or more waypoints associated with the first trip plan, where the predicted energy overlay associated with the first trip plan is configured to display over a respective electronic display associated with one or more computing devices depicting an environment of the vehicle, and where the predicted energy overlay associated with the first trip plan is color-coded based on one or more predicted values associated with one or more battery parameters associated with a battery system of the vehicle related to the predicted energy expenditure. The computer-implemented method also includes determining a safety boundary characterized by a maximum safe travel time, where the safety boundary is determined based on one or more current values of the one or more battery parameters, a current operational health of one or more vehicle systems associated with the vehicle, and a current location of the vehicle. The computer-implemented method also includes causing display of the predicted energy overlay, and optionally the safety boundary, on at least one of the one or more computing devices.

In one embodiment, the computer-implemented method further includes executing a vehicle performance validation process by calculating an impact of one or more trip parameters on the one or more vehicle systems associated with the vehicle, where the one or more trip parameters comprise at least one of a vehicle type, a vehicle battery system, a number of passengers, a vehicle payload weight, or one or more environmental factors. The computer-implemented method of the embodiment also includes receiving the first trip plan. The computer-implemented method of the embodiment also includes determining, based on inputting results from the vehicle performance validation process and the first trip plan into the vehicle performance prediction model, whether the first trip plan is feasible, where determining whether the first trip plan is feasible comprises determining whether the battery system of the vehicle will have a required amount of energy reserves relative to an available energy capacity of the battery system after arriving at a final destination associated with the first trip plan.

The computer-implemented method of the embodiment also includes, in response to determining that the first trip plan is not feasible when it is determined that the battery system will not have the required amount of energy reserves, causing transmission of a notification prompting entry of a second trip plan, where the notification is configured to be displayed on the one or more computing devices. The computer-implemented method of the embodiment also includes, in response to determining that the first trip plan is feasible when it is determined that the battery system will have the required amount of energy reserves, causing display of one or more interactive interface elements associated with a first trip plan selection confirmation on at least one of the one or more computing devices. The computer-implemented method of the embodiment also includes determining, based on an interaction with the one or more interactive interface elements associated with the first trip plan selection confirmation, whether to cause execution of the first trip plan.

In one embodiment, the computer-implemented method further includes detecting, based at least in part on a comparison of one or more current values associated with the one or more battery parameters, the current operational health of the one or more vehicle systems, and the predicted energy expenditure of the vehicle, an adverse situation impacting operation of the vehicle. The computer-implemented method of the embodiment also includes, in response to detecting an adverse situation impacting the operation of the vehicle, determining a severity level associated with the adverse situation. The computer-implemented method of the embodiment also includes generating, based at least in part on the severity level of the adverse situation, one or more recommendations to mitigate the adverse situation. The computer-implemented method of the embodiment also includes causing display of one or more interactive interface elements associated with the one or more recommendations on the one or more computing devices, where the one or more interactive interface elements associated with the one or more respective recommendations are configured to, in response to an interaction with a respective interactive interface element of the one or more interactive interface elements, cause execution of a respective recommendation of the one or more recommendations.

In one embodiment, the computer-implemented method further includes where the one or more recommendations comprise at least one or more of a recommendation to cause the vehicle to navigate to a candidate travel hub, a recommendation to cause the vehicle to navigate to an optimal travel hub, a recommendation to cause the vehicle to engage an economy operation mode, or a recommendation to cause the vehicle to execute an emergency navigation procedure.

In one embodiment, the computer-implemented method further includes, in response to detecting an adverse situation impacting the operation of the vehicle, determining an optimal travel hub for the vehicle to navigate to, where determining the optimal travel hub comprises ranking one or more candidate travel hubs based on at least one of a distance between a respective candidate travel hub of the one or more candidate travel hubs and the vehicle, the safety boundary, or the predicted energy expenditure of the vehicle, The computer-implemented method of the embodiment also includes causing display of the one or more candidate travel hubs and the optimal travel hub for selection via the one or more computing devices. The computer-implemented method of the embodiment also includes causing the vehicle to navigate to a candidate travel hub of the one or more candidate travel hubs or the optimal travel hub based on the selection.

In one embodiment, the computer-implemented method further includes where the selection of the candidate travel hub or the optimal travel hub is executed automatically by an onboard vehicle battery situational awareness (VBSA) system, and where the vehicle is caused to navigate to the candidate travel hub or the optimal travel hub based on the selection of the candidate travel hub or the optimal travel hub by the onboard VBSA system.

In one embodiment, computer-implemented method further includes where the one or more candidate travel hubs and the optimal travel hub are color-coded based on at least one of a relative location to the safety boundary, the distance between the one or more candidate travel hubs and the vehicle, a distance between the optimal travel hub and the vehicle, or the predicted energy expenditure of the vehicle.

In one embodiment, computer-implemented method further includes where the one or more battery parameters comprise at least one of a state of charge (SoC), a state of health (SoH), a state of function (SoF), or a temperature associated with the battery system of the vehicle.

In one embodiment, the computer-implemented method further includes where a waypoint of the two or more waypoints associated with the first trip plan is associated with at least one predicted value of the one or more respective predicted values associated with the one or more battery parameters.

In one embodiment, the computer-implemented method further includes where the predicted energy overlay is configured in a first-person perspective, and where the predicted energy overlay is characterized by the first trip plan such that one or more travel legs between the current location of the vehicle and one or more upcoming waypoints associated with the first trip plan can be visualized relative to a current heading, a current altitude, and a current velocity of the vehicle.

In one embodiment, the computer-implemented method further includes where the predicted energy overlay is displayed over a primary flight display associated with the vehicle.

The computer-implemented method of the embodiment further includes receiving, during execution of the first trip plan, an alternate trip plan. The example computer-implemented method also includes, in response to receiving the alternate trip plan, generating, based on inputting the alternate trip plan and results from a vehicle performance validation process associated with the first trip plan into the vehicle performance prediction model, a predicted energy overlay representing the predicted energy expenditure of the vehicle associated with the alternate trip plan, where the predicted energy overlay corresponds to one or more defined travel legs between two or more waypoints associated with the alternate trip plan, where the predicted energy overlay associated with the alternate trip plan is configured to display over the respective electronic display associated with the one or more computing devices depicting the environment of the vehicle, and where the predicted energy overlay associated with the alternate trip plan is color-coded based on the one or more predicted values associated with the one or more battery parameters associated with the battery system of the vehicle related to the predicted energy expenditure.

The computer-implemented method of the embodiment also includes causing display of the predicted energy overlay associated with the alternate trip plan on at least one of the one or more computing devices. The computer-implemented method of the embodiment also includes causing display of one or more interactive interface elements associated with an alternate trip plan selection confirmation on at least one of the one or more computing devices. The computer-implemented method of the embodiment also includes determining, based on an interaction with the one or more interactive interface elements associated with the alternate trip plan selection confirmation, whether to cause execution of the alternate trip plan.

In an example retained here for understanding the invention, a computer program product for providing enhanced trip plan-based vehicle battery situational awareness is provided. In one example computer program product, the computer program product includes at least one non-transitory computer-readable storage medium having computer program code stored thereon that, in execution with at least one processor, configures the computer program product for performing any one of the computer-implemented methods described herein.

In accordance with a second aspect of the invention, an apparatus for providing enhanced trip plan-based vehicle battery situational awareness is provided. The apparatus includes at least one processor and at least one memory having computer-coded instructions stored thereon, where the computer-coded instructions in execution with the at least one processor causes the apparatus to perform any one of the computer-implemented methods described herein. In an alternative example apparatus, the apparatus includes means for performing each step of any one of the example computer-implemented methods described herein.

It will be appreciated that the scope of the present invention as defined by the appended claims encompasses many potential embodiments in addition to those here summarized, some of which will be further described below. Other features, aspects, and advantages of the subject will become apparent from the description, the drawings, and the claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example system that enables enhanced trip plan-based vehicle battery situational awareness in accordance with at least some example embodiments of the present invention.
FIG. 2 illustrates an example vehicle apparatus in accordance with at least some example embodiments of the present invention.
FIG. 3 illustrates an example vehicle battery situational awareness (VBSA) platform in accordance with at least some example embodiments of the present invention.
FIG. 4 illustrates an example vehicle operations center apparatus in accordance with at least some example embodiments of the present invention.
FIG. 5 illustrates an operational example of an electronic display configured to display one or more predicted energy overlays in accordance with at least some example embodiments of the present invention.
FIG. 6 illustrates an operational example of primary flight display configured to display a first-person predicted energy overlay in accordance with at least some example embodiments of the present invention.
FIG(s). 7A-B illustrate operational examples of electronic displays configured to display a third-person vehicle operation display and a corresponding predicted energy overlay respectively in accordance with at least some example embodiments of the present invention.
FIG. 8 illustrates an operational example of an electronic display configured to display an optimal route to an optimal travel hub relative to a safety boundary associated with a vehicle in accordance with at least some example embodiments of the present invention.
FIG. 9 illustrates a flowchart depicting example operations of an example process for providing enhanced trip plan-based vehicle battery situational awareness for one or more vehicles associated with a VBSA platform in accordance with at least some example embodiments of the present invention.
FIG. 10 illustrates another flowchart depicting example operations of an example process for providing enhanced trip plan-based vehicle battery situational awareness for one or more vehicles associated with a VBSA platform in accordance with at least some example embodiments of the present invention.

### DETAILED DESCRIPTION

Embodiments of the present invention now will be described more fully hereinafter with reference to the accompanying drawings, in which some, but not all, embodiments of the invention are shown. Indeed, embodiments of the invention may be embodied in many different forms and should not be construed as limited to the embodiments set forth herein, rather, these embodiments are provided so that this invention will satisfy applicable legal requirements. Like numbers refer to like elements throughout.

### OVERVIEW

As the various branches of the transportation industry move ever towards semi-autonomously and autonomously controlled vehicles, upcoming operators, pilots, drivers, and/or crew members in the field may have further limited knowledge and/or limited experience with which to make crucial decisions regarding one or more adverse situations impacting the operation of the vehicle. In this regard, the cognitive workload for the operator to gain a complete situational awareness based at least in part on disparate data coming from a multitude of sources remains high or even may increase, and, in some circumstances, it is difficult or impossible for an operator to make an accurate decision and perform a corresponding action based at least in part on the many nuances of a given, often time-sensitive, situation.

Furthermore, in scenarios in which the semi-autonomously and autonomously controlled vehicles are electric vehicles, it becomes critical that the operators, pilots, drivers, and/or crew members associated with a respective electric vehicle understand the amount of energy required for the execution of a particular trip plan, especially in densely populated urban environments. For example, an operator of an electric vehicle should be constantly aware of the battery state of function (SoF) related to the electric vehicle before a trip begins and throughout the duration of the trip. It is therefore desirable to have a system that enables quick decision-making for an operator responsible for an electric vehicle, as well as to have a system for quickly visualizing the energy requirements for the safe execution of a particular trip plan related to the electric vehicle. Furthermore, in an emergency, an operator should be able to review and understand a contingency trip plan generated based on the prevailing battery system conditions as well as the various environmental conditions associated with the electric vehicle.

Embodiments of the present invention are configured to address the limitations of traditional vehicle management systems by providing a vehicle battery situational awareness (VBSA) platform configured to both predict an expected energy expenditure of a particular electric vehicle as well as monitor the operation of the electric vehicle to identify and/or mitigate one or more adverse situations that may impact the safe operation of the vehicle.

In this regard, embodiments of the present invention provide connectivity between a vehicle operations center and an onboard VBSA system that monitors the various vehicle systems of a respective vehicle (e.g., a battery system). The vehicle operations center is configured to host computations that are remotely configured, executed, and/or broadcast to one or more onboard VBSA systems associated with one or more respective multiple vehicles associated with the VBSA platform. The VBSA platform provides multiple services including, but not limited to, a predictive energy expenditure service, a configurable data logging service for both normal and abnormal operational situations, as well as an adverse situation monitoring and mitigation service.

Embodiments of the present invention feature an onboard VBSA system associated with a vehicle that is in constant communication with the vehicle operations center. In some embodiments, the onboard VBSA system embodies and/or integrates with an application instance configured to integrate with one or more vehicle systems and/or apparatuses associated with a vehicle managed by the VBSA platform. As such, one or more onboard VBSA system(s) associated with one or more vehicles (e.g., a fleet of vehicles associated with a particular enterprise) can enable the vehicle operations center to function as a centralized system for facilitating the management of the one or more vehicles. In various embodiments, the onboard VBSA system can integrate with, or be embodied by, a computing device such as a line replaceable unit (LRU) associated with a vehicle.

The onboard VBSA system is configured to generate, based on the output of an associated vehicle performance prediction model, a predicted energy overlay. In various contexts, the predicted energy overlay corresponds to a predicted energy expenditure of the vehicle for one or more defined travel legs between two or more waypoints associated with a trip plan associated with the vehicle. The predicted energy overlay is configured to display over a respective electronic display associated with one or more computing devices depicting an environment of the vehicle.

As a non-limiting example, the predicted energy overlay can be configured in a first-person perspective characterized by the trip plan such that a predicted energy expenditure of the vehicle associated with one or more defined travel legs between a current location of the vehicle and one or more upcoming waypoints associated with the trip plan can be visualized relative to a current heading, altitude, and/or velocity of the vehicle. As such, the predicted energy overlay can be displayed via an electronic display associated with one or more respective computing devices (e.g., a primary flight display of an aerial vehicle). Furthermore, the predicted energy overlay is color-coded based on one or more predicted values associated with one or more battery parameters associated with a battery system (e.g., a current SoC, SoH, and/or SoF) of the vehicle related to the predicted energy expenditure of the vehicle based at least in part on the trip plan being executed by the vehicle and/or a remaining distance to cover between a current location of the vehicle and a final destination associated with the trip plan. In a first non-limiting example scenario, if a vehicle (e.g., an aerial vehicle) is predicted to have a certain energy level (e.g., a certain SoC associated with the battery system) when arriving at a final destination (e.g., a predicted energy level corresponding to 30% of an available energy capacity of the battery system) and the predicted energy level associated with the final destination is above a predefined battery reserve requirement (e.g., a battery reserve requirement of 15%), the predicted energy overlay associated with one or more travel legs to be covered enroute to the final destination may be colored green.

However, in a second non-limiting example scenario, if, due to an adverse situation (e.g., related to a battery malfunction and/or suboptimal environmental factors), the battery discharge is faster than usual and the onboard VBSA system determines (e.g., predicts) that the vehicle (e.g., the aerial vehicle) will not reach the final destination with an energy level that was originally predicted (e.g., a predicted energy level corresponding to 30% of an available energy capacity of the battery system), the onboard VBSA system may associate the predicted energy level originally corresponding with the final destination (e.g., the predicted energy level of 30%) with an intermediate waypoint (e.g., a closer waypoint to the vehicle) of an upcoming travel leg. As such, in various contexts, the predicted energy overlay may only be colored green when associated with one or more travel legs to be covered prior to reaching the intermediate waypoint now associated with the predicted energy level that originally corresponded to the final destination (e.g., the predicted energy level of 30%).

Furthermore, in response to determining that the vehicle (e.g., the aerial vehicle) will not reach the final destination with an energy level that was originally predicted (e.g., the predicted energy level corresponding to 30%), the VBSA system may determine (e.g., predict) at which point during the trip plan the predicted energy expenditure of the vehicle will reach and/or fall below a predefined battery reserve requirement associated with the vehicle (e.g., a battery reserve requirement of 15%). As such, the predicted energy overlay associated with one or more travel legs to be covered after passing the intermediate waypoint now associated with the predicted energy level originally corresponding to the final destination (e.g., the predicted energy level of 30%) may be shown in yellow. In such a context, the predicted energy overlay may be shown in yellow until the predicted energy expenditure of the vehicle reaches a point (e.g., a respective waypoint) in the trip plan associated with the predefined battery reserve requirement (e.g., the battery reserve requirement of 15%). The predicted energy overlay associated with any travel legs and/or waypoints associated with a predicted energy expenditure falling below the predefined battery reserve requirement (e.g., the battery reserve requirement of 15%) may be colored red.

Additionally or alternatively, in various embodiments, the predicted energy overlay may be characterized by one or more shading schemes, patterns, transparencies, and/or gradients associated with a predicted energy expenditure associated with a particular vehicle that is executing a respective trip plan. Furthermore, in various embodiments, the color-coding, shading schemes, patterns, transparencies, and/or gradients associated with the predicted energy overlay may be configured based on one or more system configuration preferences defined for a particular VBSA platform (e.g., defined via the vehicle operations center apparatus).

In various contexts, the onboard VBSA system is configured to determine a safety boundary associated with the vehicle, where the safety boundary is characterized by a maximum safe travel time associated with the vehicle. The safety boundary is determined based on at least one of one or more current values of one or more battery parameters associated with a battery system of the vehicle, a current operational health of one or more vehicle systems, and/or a current location of the vehicle. In various contexts, the onboard VBSA system can cause display of the safety boundary on at least one of the one or more computing devices, where the safety boundary is rendered on an electronic map (e.g., as generated by a navigation system of the vehicle) and centered over a representation of the vehicle based on the current location of the vehicle.

In various contexts, the onboard VBSA system is configured to execute a vehicle performance validation process by calculating an impact of one or more trip parameters on the one or more vehicle systems associated with the vehicle, where the one or more trip parameters comprise at least one of a vehicle type, a vehicle battery system, a number of passengers, a vehicle payload weight, and/or one or more environmental factors. Additionally, the onboard VBSA system can receive one or more trip plans associated with a respective vehicle. The onboard VBSA system is configured to determine, based on inputting results from the vehicle performance validation process and a particular trip plan into the performance prediction module, whether the particular trip plan is feasible. In various contexts, determining whether the particular trip plan is feasible comprises correlating the particular trip plan and/or the results from the vehicle performance validation process with one or more current values associated with one or more battery parameters associated with the battery system of the vehicle.

Additionally or alternatively, the onboard VBSA system may determine whether the particular trip plan is feasible based in part on a predefined battery reserve requirement associated with the vehicle. For example, in various contexts, one or more vehicles associated with a respective VBSA platform may be configured to adhere a predefined battery reserve requirement (e.g., a battery reserve requirement of 15%) regulating that a battery system of a respective vehicle must have a required amount of energy reserves relative to an available energy capacity of the battery system after arriving at a final destination associated with the particular trip plan.

The onboard VBSA system comprises, among other components, a performance monitor configured to determine and/or mitigate one or more adverse situations impacting the operation of the vehicle. The onboard VBSA system and performance monitor, in some contexts, are configured to continually receive one or more portions of vehicle operation data, vehicle sensor data, vehicle system data, air traffic data, environmental data, logistical data, personnel data, and/or any other relevant data related to a particular vehicle. Such data in some contexts is generated, measured, calculated, and/or otherwise obtained from the one or more computing devices comprised in both a vehicle and/or the vehicle operations center and configured as model input for the performance monitor. The performance monitor can determine based at least in part on the model input that one or more adverse situations are occurring that may impact the operation of the vehicle such as, for example, that one or more battery cells of the battery system of the vehicle are discharging at an unexpected (e.g., accelerated) rate.

The vehicle performance prediction model is configured to generate one or more recommendations for mitigating the one or more adverse situations based in part on one or more rules in response to receiving model output (e.g., vehicle performance data) generated by the performance monitor. Furthermore, the vehicle performance prediction model in some contexts is configured to execute, or cause execution, of the one or more recommendations based on the one or more rules. For example, in one or more embodiments, the vehicle performance prediction model can direct the vehicle apparatus to execute the one or more recommendations by operating, updating configurations for, and/or otherwise controlling one or more respective vehicle system(s) associated with a vehicle.

In various embodiments, the onboard VBSA system associated with a respective vehicle (e.g., an electric aerial vehicle) can transmit one or more portions of data to the vehicle operations center via a communications network. For example, the onboard VBSA system can be configured to transmit one or more portions of data related to a current energy expenditure of the vehicle, one or more current values associated with one or more respective battery parameters associated with a battery system of the vehicle, data related to an adverse situation, and/or the like. In this regard, in various embodiments, the vehicle operations center apparatus of the vehicle operations center can be configured to execute one or more operations associated with the onboard VBSA system. For example, in various contexts such as, for example, when an electric aerial vehicle is completely autonomous, the vehicle operations center apparatus can be configured to perform at least a portion of the processing associated with the onboard VBSA system associated with the electric aerial vehicle. As such, the computational resources needed by the electronic aerial vehicle may be advantageously reduced.

Embodiments of the present invention enable an operator of the vehicle to reduce the time required to accurately perform an analysis of the current health, charge, and/or function associated with a battery system of a vehicle, generate potential solutions based at least in part on the analysis, and ultimately decide upon an optimal solution. By enabling quicker action, such embodiments thus reduce the likelihood of errors, unsafe scenarios, and/or other disastrous circumstances arising from incorrect decisions made by an operator and/or delayed decision-making by the operator due to circumstances associated with the one or more adverse situations impacting the operation of the vehicle. Furthermore, the VBSA platform can support one or more operators that may lack the knowledge and/or experience with which to timely mitigate the one or more adverse situations in order to ensure the safety, efficiency, and optimal operation of the vehicle, the vehicle crew, and/or the passengers of the vehicle.

It will be appreciated that embodiments of the present invention may be advantageous for a myriad of vehicle types. In this regard, aerial vehicles are utilized as an exemplary type of vehicle for purposes of simplifying the invention. The description specific to aerial vehicles should not limit the scope of the invention unless otherwise explicitly stated. For example, the methods described herein may be applicable to the fields of autonomous automobile operation, autonomous watercraft operation, and/or the like.

### DEFINITIONS

"Vehicle battery situational awareness (VBSA) platform" refers to a distributed vehicle monitoring platform configured to provide VBSA by monitoring the operation of one or more vehicles to identify and mitigate one or more adverse situations that can impact the operation of the one or more vehicles. For example, components of the VBSA platform are configured to facilitate the execution of one or more trip plans associated with the one or more vehicles by employing a vehicle performance prediction model to predict the energy expenditure of the one or more vehicles. Furthermore, the components of the VBSA are configured to detect whether one or more adverse situations are impacting a respective vehicle based at least in part on a comparison of the predicted energy expenditure of the vehicle and a current energy expenditure of the vehicle.

A VBSA platform in some contexts is associated with one or more enterprises such as, for example, a logistics enterprise, a delivery and shipment enterprise, a commercial airline, an aerial delivery enterprise, an urban air mobility (UAM) enterprise, an advanced air mobility (AAM) enterprise, a military enterprise, and/or the like that manages and/or deploys a fleet of vehicles. The VBSA platform in some contexts includes and/or integrates with one or more system(s), computing device(s), service(s), and/or datastore(s). For example, the VBSA platform can interface with one or more vehicle operation management system(s), environment data system(s), air traffic control system(s), urban air mobility (UAM) systems, and/or the like.

In various embodiments, the VBSA platform comprises a vehicle operations center configured for the offboard management and control of a fleet of vehicles associated with an enterprise. In this regard, the VBSA platform is configured as a distributed management system such that one or more vehicles integrate with a respective onboard VBSA system communicably coupled to the vehicle operations center. The vehicle operations center, in conjunction with a particular instance of the onboard VBSA system associated with a particular vehicle, is configured to monitor, manage, and/or improve the performance of the particular vehicle by providing VBSA to one or more operators associated with the particular vehicle. The vehicle operations center and one or more onboard VBSA system(s) associated with one or more respective vehicles remain in constant contact and are configured to transmit and/or receive data related to the operation of the one or more vehicles via a communications network. The vehicle operations center comprises one or more computing device(s), one or more machine learning (ML) model(s), and/or one or more datastore(s) configured to monitor and/or manage one or more vehicles.

"Onboard VBSA system" refers to hardware, software, firmware, and/or a combination thereof, that embodies and/or maintains an application instance configured to integrate with one or more vehicle systems and/or apparatuses associated with a vehicle managed by the VBSA platform. The onboard VBSA system comprises, and/or integrates with, among other components, a battery management system, a performance monitor, a performance prediction module, and/or one or more electronic displays configured to monitor the energy expenditure of a vehicle (e.g., an electric aerial vehicle), predict the future energy expenditure of the vehicle based at least in part on a trip plan being executed by the vehicle, and/or detect and/or mitigate one or more adverse situations impacting the operation of the vehicle.

The onboard VBSA system, in some contexts, integrates with, or can be embodied by, a computing device such as a line replaceable unit (LRU). For example, the onboard VBSA system in some contexts is embodied by an aerospace gateway LRU configured to communicate with one or more vehicle system(s). The vehicle operations center and one or more onboard VBSA system(s) associated with one or more respective vehicles remain in constant communication and are configured to transmit and/or receive data related to the operation of the one or more vehicles via a communications network. In this regard, the onboard VBSA system in some contexts generates and transmits one or more requests to the vehicle operations center via the communications network. The one or more requests include, but are not limited to, a request for one or more portions of data including, but not limited to, environmental data, vehicle operation management data, vehicle data, logistics data, hazard data, air traffic data, road traffic data, and/or the like.

Additionally, the onboard VBSA system is configured to log and/or transmit one or more portions of data related to the vehicle to the vehicle operations center. For example, the onboard VBSA system is configured to transmit one or more portions of vehicle performance data related to the real-time performance (e.g., the performance of a battery system) of a respective vehicle. Additionally or alternatively, the onboard VBSA system is configured to transmit one or more portions of data related to a predicted energy expenditure of the vehicle based at least in part on a trip plan associated with the vehicle.

The onboard VBSA system is configured to generate, based on the output of an associated vehicle performance prediction model, a predicted energy overlay. In various contexts, the predicted energy overlay corresponds to a predicted energy expenditure of the vehicle for one or more defined travel legs between two or more waypoints associated with a trip plan associated with the vehicle. The predicted energy overlay is configured to display over a respective electronic display associated with one or more computing devices depicting an environment of the vehicle.

As a non-limiting example, the predicted energy overlay can be configured in a first-person perspective characterized by the trip plan such that a predicted energy expenditure of the vehicle associated with one or more defined travel legs between a current location of the vehicle and one or more upcoming waypoints associated with the trip plan can be visualized relative to a current heading, altitude, and/or velocity of the vehicle. As such, the predicted energy overlay can be displayed via an electronic display associated with one or more respective computing devices (e.g., a primary flight display of an aerial vehicle).

As another non-limiting example, the predicted energy overlay can be configured in an overhead perspective characterized by the trip plan being executed such that a predicted energy expenditure of a vehicle for one or more defined travel legs between two or more waypoints associated with the trip plan can be visualized relative to a current position of the vehicle on a map. For example, the predicted energy overlay can be configured to be displayed via an electronic display associated with one or more computing devices associated with a navigation system associated with the vehicle. As such, the predicted energy overlay can be displayed over an electronic map and may correspond to a current route of the vehicle (e.g., a route associated with the trip plan), one or more waypoints (e.g., waypoints defined by the trip plan), one or more travel hubs (e.g., candidate travel hubs and/or an optimal travel hub), and/or one or more environmental features (e.g., buildings, natural features, and/or obstacles) related to the location of the vehicle. As such, the predicted energy overlay associated with the predicted energy expenditure of the vehicle can be configured in a number of various perspectives and/or views based at least in part on the one or more computing devices being used to display the predicted energy overlay.

Furthermore, the predicted energy overlay is color-coded based on one or more predicted values associated with one or more battery parameters associated with a battery system (e.g., a current SoC, SoH, and/or SoF) of the vehicle related to the predicted energy expenditure of the vehicle based at least in part on the trip plan being executed by the vehicle and/or a remaining distance to cover between a current location of the vehicle and a final destination associated with the trip plan. In a first non-limiting example scenario, if a vehicle (e.g., an aerial vehicle) is predicted to have a certain energy level (e.g., a certain SoC associated with the battery system) when arriving at a final destination (e.g., a predicted energy level corresponding to 30% of an available energy capacity of the battery system) and the predicted energy level associated with the final destination is above a predefined battery reserve requirement (e.g., a battery reserve requirement of 15%), the predicted energy overlay associated with one or more travel legs to be covered enroute to the final destination may be colored green.

However, in a second non-limiting example scenario, if, due to an adverse situation (e.g., related to a battery malfunction and/or suboptimal environmental factors), the battery discharge is faster than usual and the onboard VBSA system determines (e.g., predicts) that the vehicle (e.g., the aerial vehicle) will not reach the final destination with an energy level that was originally predicted (e.g., a predicted energy level corresponding to 30% of an available energy capacity of the battery system), the onboard VBSA system may associate the predicted energy level originally corresponding with the final destination (e.g., the predicted energy level of 30%) with an intermediate waypoint (e.g., a closer waypoint to the vehicle) of an upcoming travel leg. As such, in various contexts, the predicted energy overlay may only be colored green when associated with one or more travel legs to be covered prior to reaching the intermediate waypoint now associated with the predicted energy level that originally corresponded to the final destination (e.g., the predicted energy level of 30%).

Furthermore, in response to determining that the vehicle (e.g., the aerial vehicle) will not reach the final destination with an energy level that was originally predicted (e.g., the predicted energy level corresponding to 30%), the VBSA system may determine (e.g., predict) at which point during the trip plan the predicted energy expenditure of the vehicle will reach and/or fall below a predefined battery reserve requirement associated with the vehicle (e.g., a battery reserve requirement of 15%). As such, the predicted energy overlay associated with one or more travel legs to be covered after passing the intermediate waypoint now associated with the predicted energy level originally corresponding to the final destination (e.g., the predicted energy level of 30%) may be shown in yellow. In such a context, the predicted energy overlay may be shown in yellow until the predicted energy expenditure of the vehicle reaches a point (e.g., a respective waypoint) in the trip plan associated with the predefined battery reserve requirement (e.g., the battery reserve requirement of 15%). The predicted energy overlay associated with any travel legs and/or waypoints associated with a predicted energy expenditure falling below the predefined battery reserve requirement (e.g., the battery reserve requirement of 15%) may be colored red.

Additionally or alternatively, in various embodiments, the predicted energy overlay may be characterized by one or more shading schemes, patterns, transparencies, and/or gradients associated with a predicted energy expenditure associated with a particular vehicle that is executing a respective trip plan. Furthermore, in various embodiments, the color-coding, shading schemes, patterns, transparencies, and/or gradients associated with the predicted energy overlay may be configured based on one or more system configuration preferences defined for a particular VBSA platform (e.g., defined via the vehicle operations center apparatus).

In various contexts, the onboard VBSA system is configured to determine a safety boundary associated with the vehicle, where the safety boundary is characterized by a maximum safe travel time associated with the vehicle. The safety boundary is determined based on at least one of one or more current values of one or more battery parameters associated with a battery system of the vehicle, a current operational health of one or more vehicle systems, and/or a current location of the vehicle. In various contexts, the onboard VBSA system can cause display of the safety boundary on at least one of the one or more computing devices, where the safety boundary is rendered on an electronic map (e.g., as generated by a navigation system of the vehicle) and centered over a representation of the vehicle based on the current location of the vehicle.

In various contexts, the onboard VBSA system is configured to execute a vehicle performance validation process by calculating an impact of one or more trip parameters on the one or more vehicle systems associated with the vehicle, where the one or more trip parameters comprise at least one of a vehicle type, a vehicle battery system, a number of passengers, a vehicle payload weight, and/or one or more environmental factors. Additionally, the onboard VBSA system can receive one or more trip plans associated with a respective vehicle. The onboard VBSA system is configured to determine, based on inputting results from the vehicle performance validation process and a particular trip plan (e.g., a first trip plan) into the performance prediction module, whether the particular trip plan is feasible. In various contexts, determining whether the particular trip plan is feasible comprises correlating the particular trip plan and/or the results from the vehicle performance validation process with one or more current values associated with one or more battery parameters associated with the battery system of the vehicle.

Additionally or alternatively, the onboard VBSA system may determine whether the particular trip plan is feasible based in part on a predefined battery reserve requirement associated with the vehicle. For example, in various contexts, one or more vehicles associated with a respective VBSA platform may be configured to adhere a predefined battery reserve requirement (e.g., a battery reserve requirement of 15%) regulating that a battery system of a respective vehicle must have a required amount of energy reserves relative to an available energy capacity of the battery system after arriving at a final destination associated with the particular trip plan.

In a scenario in which the onboard VBSA system determines that the particular trip plan (e.g., the first trip plan) is not feasible, the onboard VBSA system can cause display of a recommendation prompting entry of an alternative trip plan (e.g., a second trip plan), where the recommendation is configured to be displayed via one or more electronic displays associated with the one or more computing devices associated with the vehicle and/or the vehicle operations center (e.g., the vehicle operations center apparatus).

In various contexts, the onboard VBSA system is configured to determine, based at least in part on a comparison of one or more current values associated with one or more battery parameters associated with the battery system of a vehicle (e.g., the current SoF, SoC, SoH, and/or temperature), the current operational health of the one or more vehicle systems associated with the vehicle, and/or the predicted energy expenditure of the vehicle, whether an adverse situation is detected during execution of a particular trip plan. For example, depending on the context, if the onboard VBSA system determines that an adverse situation is detected, the onboard VBSA system can generate a recommendation for the vehicle to enter an economy mode to address the adverse situation. Furthermore, the onboard VBSA system can automatically determine an optimal route to an optimal travel hub for the vehicle to navigate to, where determining the optimal travel hub comprises ranking one or more candidate travel hubs based on at least one of a distance between a respective candidate travel hub of the one or more candidate travel hubs and the vehicle, the safety boundary, or the predicted energy expenditure of the vehicle.

In various contexts, the onboard VBSA system can cause display of the one or more candidate travel hubs and the optimal travel hub for selection via one or more computing devices associated with the VBSA platform (e.g., the vehicle apparatus and/or the vehicle operations center apparatus). Furthermore, the onboard VBSA system can cause the vehicle to navigate to a candidate travel hub of the one or more candidate travel hubs or the optimal travel hub based on the selection. Additionally or alternatively, in various contexts, the onboard VBSA system can be configured to automatically select the candidate travel hub or the optimal travel hub. In such contexts, the onboard VBSA system can be configured to cause the vehicle to navigate to the candidate travel hub or the optimal travel hub based on the automatic selection of the candidate travel hub or the optimal travel hub by the onboard VBSA system.

In various embodiments, the onboard VBSA system associated with a respective vehicle (e.g., an electric aerial vehicle) can transmit one or more portions of data to the vehicle operations center via a communications network. For example, the onboard VBSA system can be configured to transmit one or more portions of data related to a current energy expenditure of the vehicle, one or more current values associated with one or more respective battery parameters associated with a battery system of the vehicle, data related to an adverse situation, and/or the like. In this regard, in various embodiments, the vehicle operations center apparatus of the vehicle operations center can be configured to execute one or more operations associated with the onboard VBSA system. For example, in various contexts such as, for example, when an electric aerial vehicle is completely autonomous, the vehicle operations center apparatus can be configured to perform at least a portion of the processing associated with the onboard VBSA system associated with the electric aerial vehicle. As such, the computational resources needed by the electronic aerial vehicle may be advantageously reduced.

"Battery parameters" refer to one or more measurable parameters associated with a battery system of a respective vehicle. Battery parameters may include, but are not limited to, a state of charge (SoC), a state of health (SoH), a state of function (SoF) associated with the battery system of the vehicle, and/or a temperature. The SoC is related to how much charge is left in a battery cell at a given time. The SoH is related to the ability of a respective battery cell to retain a charge (e.g., as compared to the initial ability of the battery cell when manufactured). The SoF is related a readiness of a respective battery cell in terms of usable energy derived by, for example, determining a current SoC of a battery cell in relation to the overall available capacity of the battery cell. In various contexts, the SoC, SoH, and/or SoF are determined by the performance monitor of an onboard VBSA system in conjunction with a battery management system for one or more battery cells associated with a battery system of a respective vehicle.

"Adverse situation" refers to a data-driven determination or characteristic of an effect or operational state of a vehicle or subsystem thereof. For instance, an adverse situation in some contexts is an emergency situation impacting the operation of the vehicle and/or one or more persons associated with the vehicle. An adverse situation in some contexts can also be a circumstance affecting the optimization of one or more vehicle systems associated with the vehicle (e.g., a battery system). A few non-limiting examples of adverse situation types that in some contexts is associated with a respective adverse situation include, an emergency situation type, a hazard situation type, a mechanical failure situation type, a logistical situation type, an environmental situation type, an optimization situation type, a personnel health situation type, and/or the like. Determination of an adverse situation in some contexts is based in part on one or more portions of vehicle performance data. The performance monitor associated with an onboard VBSA system is configured to identify, classify, categorize, and/or analyze one or more adverse situations impacting the operation of a vehicle.

"Adverse situation mitigation data" refers to data related to one or more adverse situations that caused a particular vehicle to enter into an adverse state as well as data related to one or more respective recommendations that were employed to mitigate, correct, and/or otherwise address the one or more adverse situations impacting the operation of the particular vehicle. The adverse situation mitigation data indicates whether the one or more respective recommendations were successful or unsuccessful in causing the particular vehicle to revert back into a nominal state from an adverse state. The adverse situation mitigation data in some contexts is configured to train, retrain, and/or otherwise update a vehicle performance prediction model associated with the performance prediction module of an onboard VBSA system. Additionally, the adverse situation mitigation data in some contexts is transmitted to the vehicle operations center on a predefined schedule. For example, the onboard VBSA system of a particular vehicle can cause the adverse situation mitigation data to be transmitted to the vehicle operations center every night the particular vehicle is parked and connected to a communications network associated with the vehicle operations center.

"Vehicle operation data" refers to data indicative of an operational state of a vehicle or a particular subsystem thereof. Vehicle operation data comprise data collected, measured, obtained, generated, and/or otherwise processed by the one or more vehicle system(s) associated with the vehicle. In various embodiments, one or more portions of vehicle operation data, in some contexts, is received from the vehicle operations center via a communications network. In various embodiments, at least a portion of the vehicle operation data is based at least in part on vehicle sensor data collected, measured, calculated, and/or otherwise generated by one or more sensors associated with the vehicle. Additionally or alternatively, in various contexts, vehicle operation data can include at least one data value indicating whether a vehicle is operating in a nominal scenario, data indicative of an emergency scenario, data indicative of a hazard scenario, data indicative of a logistical scenario that alters the voyage of the vehicle, and/or data indicative of a change in the operation of a system affecting control of the vehicle.

"Vehicle sensor data" refers to electronically managed data utilized by a vehicle for operation that is captured by at least one sensor onboard or otherwise communicable with the vehicle. Vehicle sensor data in some contexts is any data collected, measured, calculated, and/or otherwise generated by one or more sensors associated with the vehicle.

"Performance monitor" refers to an ML model that is specially configured to receive one or more portions of vehicle operation data and, based at least in part on the one or more portions of vehicle operation data, generate one or more portions of vehicle performance data describing one or more operational states of the vehicle. Additionally, the performance monitor associated with an onboard VBSA system is configured to identify, classify, categorize, and/or analyze one or more adverse situations impacting the operation of a vehicle.

The performance monitor determines whether the vehicle is in a nominal state (e.g., a nominal operational state) or an adverse state (e.g., an adverse operational state). The performance monitor in some contexts generates one or more portions of model output (e.g., vehicle performance data) configured to describe the current status, energy expenditure, operational parameters, data values, operational modes, and/or configurations of one or more vehicle systems associated with the vehicle. In this regard, if the performance monitor determines that one or more adverse situations are taking place that are impacting the operation of the vehicle, the performance monitor determines how the one or more adverse situations are related to (e.g., how the one or more adverse situations are impacting) the respective vehicle systems (e.g., a battery system of the vehicle).

As such, the performance monitor generates one or more portions of vehicle performance data related to the current operational status of the vehicle as model output. The one or more portions of vehicle performance data are one or more portions of data that have been configured for logging, analysis, ML model input, ML model training, and/or storage. For example, one or more portions of vehicle performance data in some contexts captures the nominal state (e.g., nominal state) of the vehicle by logging, storing, and/or otherwise saving a current configuration of the one or more vehicle systems as well as how the configuration of the one or more vehicle systems relates to the current nominal operation of the vehicle. Similarly, the performance monitor in some contexts generates one or more portions of vehicle performance data capturing an adverse state (e.g., an adverse operational state) related to one or more adverse situations impacting the operation of the vehicle and the respective vehicle systems associated with the vehicle. The performance monitor in some contexts transmits one or more portions of vehicle performance data to the vehicle performance prediction model associated with the onboard VBSA system. In various contexts, one or more portions of vehicle performance data can be stored, accessed, retrieved, and/or otherwise manages by a performance database associated with the VBSA platform.

Vehicle performance data associated with a nominal state of a particular vehicle in some contexts is used in one or more data recovery operations for reverting the particular vehicle from an adverse state back into a nominal state. For example, the vehicle performance data associated with the nominal state in some contexts comprises one or more operational parameters, data values, operational modes, and/or configurations of one or more vehicle systems. As such, the vehicle performance data associated with the nominal state in some contexts is utilized to reconfigure, re-initialize, and/or otherwise update the one or more vehicle systems such that the vehicle resumes operating in a manner congruent with the corresponding nominal state. In various embodiments, one or more portions of data related to the current operational state of the vehicle, one or more portions of vehicle performance data, and/or any data generated and/or managed by the performance monitor in some contexts is rendered via one or more computing device(s) associated with the vehicle operations center.

"Performance prediction module" refers to hardware, software, firmware, and/or a combination thereof associated with an onboard VBSA system that is configured to predict an energy expenditure associated with a respective vehicle. The performance prediction module is also configured to generate an energy overlay representing the predicted energy expenditure of the respective vehicle. Furthermore, in various contexts, the performance prediction module, in conjunction with a performance monitor of the onboard VBSA system, is configured to determine that a current energy expenditure of the vehicle does not match a predicted energy expenditure associated with particular trip plan being executed by the vehicle. The performance prediction module comprises one or more statistical, algorithmic, and/or ML models associated with the onboard VBSA system. In some contexts, the performance prediction module comprises one or more math models, rule expression models and/or specialized deep learning neural networks. In various other contexts, the performance prediction module comprises a time series data analysis model. In one or more embodiments, the performance prediction module comprises a vehicle performance prediction model.

"Vehicle performance prediction model" refers to an ML model associated with the performance prediction module of an onboard VBSA system. In various contexts, the vehicle performance prediction model is configured as a deep learning neural network such as an artificial neural network, (ANN), recurrent neural network (RNN), convolutional neural network (CNN), and/or any other specialized deep learning neural network. In various contexts, the vehicle performance prediction model is configured predict an energy expenditure associated with a respective vehicle. The performance prediction module is also configured to generate an energy overlay representing the predicted energy expenditure of the respective vehicle. In various contexts, the predicted energy overlay corresponds to one or more defined travel legs between two or more waypoints associated with a trip plan associated with the vehicle. The predicted energy overlay is configured to display over a respective electronic display associated with one or more computing devices depicting an environment of the vehicle.

As a non-limiting example, the predicted energy overlay can be configured in a first-person perspective characterized by the trip plan such that a predicted energy expenditure of the vehicle associated with one or more defined travel legs between a current location of the vehicle and one or more upcoming waypoints associated with the trip plan can be visualized relative to a current heading, altitude, and/or velocity of the vehicle. As such, the predicted energy overlay can be displayed via an electronic display associated with one or more respective computing devices (e.g., a primary flight display of an aerial vehicle). Furthermore, the predicted energy overlay is color-coded based on one or more predicted values associated with one or more battery parameters associated with a battery system of the vehicle related to the predicted energy expenditure of the vehicle based at least in part on the trip plan being executed by the vehicle.

The vehicle performance prediction model is also configured to determine, generate, and/or recommend one or more recommendations based in part on one or more rules in response to receiving model output generated by the performance monitor. The vehicle performance prediction model in some contexts is configured to execute, or cause execution, of the one or more recommendations based on the one or more rules. For example, in one or more embodiments, the vehicle performance prediction model, in some contexts, directs the vehicle apparatus to execute the one or more recommendations by operating, updating configurations for, and/or otherwise controlling one or more respective vehicle system(s) associated with a vehicle.

Additionally, the vehicle performance prediction model in some contexts determines which recommendations of a set recommendations will have the greatest positive effect on the current situation associated with a vehicle being impacted by one or more adverse situations. For example, in some embodiments, the vehicle performance prediction model ranks one or more recommendations of the set of recommendations based at least in part on a predicted result associated with the execution of the one or more recommendations. For instance, a first recommendation in some contexts is ranked higher relative to a second recommendation based at least in part on a predicted result associated with the first recommendation.

Furthermore, the vehicle performance prediction model is configured to determine, in conjunction with the performance monitor, if the one or more recommendations that were executed have successfully reverted the vehicle back to a nominal state from an adverse state. For example, if the vehicle performance prediction model determines, in conjunction with the performance monitor, that a first set of recommendations generated based on a first set of rules have been executed but the vehicle remains in the adverse state (or has entered into a new adverse state), the vehicle performance prediction model can cause generation of a second set of recommendations with which to mitigate the one or more adverse situations impacting the operation of the vehicle.

A vehicle performance prediction model associated with the onboard VBSA system, in some contexts, is iteratively retrained and/or otherwise updated based on data related to one or more vehicles associated with the VBSA platform. For example, the vehicle performance prediction model in some contexts is trained and/or retrained based in part on one or more portions of vehicle performance data related to one or more vehicles associated with one or more respective enterprises related to the VBSA platform. Additionally or alternatively, the vehicle performance prediction model, in some contexts, is also trained and/or retrained based in part on one or more portions of adverse situation mitigation data. The adverse situation mitigation data comprises but is not limited to data related to the one or more adverse situations that caused a particular vehicle to enter into an adverse state and/or data related to one or more respective rules and/or recommendations with which the onboard VBSA system employed to mitigate the one or more adverse situations.

In this way, the vehicle performance prediction model in some contexts is constantly updated based on a global corpus of vehicle performance data and/or adverse situation mitigation data related to many vehicles associated with many respective enterprises. As such, the vehicle performance prediction model is consistently improving in both accuracy and efficiency. In certain embodiments, the vehicle performance prediction model is retrained and/or otherwise updated on a predefined schedule such as, for example, daily, weekly, biweekly, monthly, and/or the like.

"Recommendation" refers to electronically managed data representing one or more suggested actionable measures that in some contexts is executed to address one or more adverse situations impacting the operation of a vehicle to revert the vehicle from an adverse state back into a nominal state. In some embodiments, a recommendation embodies model output generated by the vehicle performance prediction model. Recommendations in some contexts are configured to be human-readable and is rendered via a respective electronic interface associated with one or more computing devices such as, for example a vehicle apparatus associated with the vehicle and/or a vehicle operations center apparatus associated with the vehicle operations center.

In various contexts, a recommendation may be associated with one or more of one or more candidate travel hubs and/or an optimal travel hub determined by the onboard VBSA system. For example, in various contexts, a particular recommendation may be a recommendation to navigate the vehicle to the nearest candidate travel hub in response to determining that an adverse situation is impacting the operation of the vehicle (e.g., a failure of a particular vehicle system). As another non-limiting example, a particular recommendation may be a recommendation to switch the vehicle into an economy operational mode in response to determining that the batteries associated with the vehicle are discharging at an unexpectedly fast rate. As another non-limiting example, a particular recommendation may be a recommendation to generate, request, and/or receive an alternative trip plan if a first trip plan is determined to be infeasible based at least in part on a predicted energy expenditure of the vehicle related to the first trip plan.

In various embodiments, recommendations are executed automatically by the onboard VBSA system. In various other embodiments, the recommendations in some contexts are confirmed by an operator of the vehicle, where confirmation is a selection indication associated with the recommendations generated via one or more computing devices and where the confirmation causes execution of the recommendations. Executing a recommendation comprises operating one or more systems associated with the vehicle to control the operation of the vehicle. In some embodiments, the execution of a recommendation must be confirmed via a computing device (e.g., a vehicle apparatus or a vehicle operations center apparatus). In various other embodiments, recommendations in some contexts are automatically executed depending on the criticality of the corresponding adverse situation impacting the operation of the vehicle.

"Rule" refers to electronically managed data and/or computer code instructions representing an operational constraint, limit, parameter threshold, guideline, and/or the like that in some contexts is defined to govern one or more operation(s), system(s), component(s), and/or environment(s) associated with a particular vehicle. In various embodiments, rules in some contexts are related to a specific domain of applicable knowledge (e.g., the aerospace domain). Based in part on one or more rules associated with the particular vehicle, the vehicle performance prediction model, in conjunction with the performance monitor, can determine whether one or more rules have been violated or satisfied by one or more vehicle system(s) and/or an environment associated with the vehicle.

In various embodiments, a rule defines a threshold data value and/or data range which in some contexts is used to determine whether a particular rule has been violated, satisfied, exceeded, and/or otherwise triggered. As a non-limiting example, a rule defines a threshold (e.g., a particular data value and/or data range) for a nominal battery discharge rate. If the onboard VBSA system determines (e.g., via the performance monitor and/or the vehicle performance prediction model) that the vehicle has exceeded the threshold associated with the nominal battery discharge rate (and therefore violated the corresponding rule), the onboard VBSA system can execute one or more recommendations associated with the rule that was violated. For example, the onboard VBSA system causes execution (e.g., via the vehicle performance prediction model and/or the vehicle apparatus) of one or more recommendations to correct an abnormal battery discharge rate by reconfiguring one or more operational parameters associated with the one or more engine components (e.g., by switching the vehicle into an economy operating mode).

"Nominal state" refers to electronically managed data representing a nominal operational state associated with a particular vehicle in which the vehicle is operating as intended or desired. A nominal state in some contexts is understood to mean that a vehicle, the one or more vehicle system(s) associated with the vehicle, and any crew members and/or passengers associated with the vehicle are operating as expected. Data related to a nominal state in some contexts is logged, stored, and/or otherwise saved such that any data values associated with one or more current operational configuration parameters related to the one or more vehicle system(s) are stored as well as how the configuration of the one or more current operational configuration parameters relates to the current nominal operation of the vehicle. A stored nominal state associated with a particular vehicle in some contexts is used in one or more data recovery operations associated with the particular vehicle. For example, if the onboard VBSA system has mitigated one or more adverse situations impacting the vehicle by executing one or more recommendations, the stored nominal state can then be used to re-initialize, reconfigure and/or otherwise update the one or more vehicle system(s) such that the vehicle reverts to operating nominally in the nominal state. Furthermore, one or more portions of data related to a nominal state in some contexts is configured and/or transmitted to the vehicle operations center as adverse situation mitigation data and used for training, re-training, and/or otherwise updating the one or more ML models associated with the performance prediction module (e.g., the vehicle performance prediction model). **In** various contexts, the performance monitor of the onboard VBSA system can determine that a respective vehicle is in a nominal state.

"Adverse state" refers to electronically managed data representing an adverse operational state associated with a particular vehicle. An adverse state in some contexts is understood to mean that a vehicle, the one or more vehicle system(s) associated with the vehicle, and any crew members and/or passengers associated with the vehicle are not operating as expected. Additionally, an adverse state in some contexts is an operational state of a vehicle being impacted by one or more adverse situations. For example, an adverse state in some contexts is a situation in which the vehicle is experiencing an emergency scenario, a hazard scenario, and/or a scenario that is altering the voyage of the vehicle. One or more adverse situations, mechanical failures, and/or environmental factors in some contexts contribute to a particular adverse state. In various contexts, the performance monitor of the onboard VBSA system can determine that a respective vehicle is in an adverse state.

Data related to an adverse state in some contexts is logged, stored, and/or otherwise such that any data values associated with one or more current operational configuration parameters related to the one or more vehicle system(s) are stored as well as how the configuration of the one or more current operational configuration parameters relates to the current operation of the vehicle. Additionally, data related to how an adverse situation and/or scenario is adversely impacting the one or more vehicle system(s) in some contexts is also stored. Furthermore, one or more portions of data related to an adverse state in some contexts is configured and/or transmitted to the vehicle operations center as adverse situation mitigation data and used for training, re-training, and/or otherwise updating the one or more ML models associated with the performance prediction module (e.g., the vehicle performance prediction model).

"Trip plan" refers to one or more portions of data related to at least one or more destinations, waypoints, flight paths, arrival/departure schedules and/or procedures, routes, missions, traffic management constraints, trip parameters, and/or the like that have been predetermined for a particular vehicle (e.g., a particular electric aerial vehicle). Based on the data associated with a trip plan, an onboard VBSA system associated with a respective vehicle can determine whether the trip plan is feasible based upon a predicted energy expenditure generated based at least in part on one or more current values associated with the one or more battery parameters associated with a battery system of the respective vehicle and/or one or more trip parameters associated with the vehicle.

"Travel hub" refers to transportation and/or logistics hub that is configured to serve one or more inbound and/or outbound vehicles. Non-limiting examples of travel hubs include airports, vertiports, helipads, hangars, vehicle fueling stations, vehicle pools, service stations, vehicle maintenance facilities, vehicle manufacturing facilities, vehicle sales facilities, and/or the like. A travel hub may embody, integrate with, and/or host one or more charging facilities such that one or more electric vehicles may charge one or more batteries associated with the battery system of the one or more respective electric vehicles at the travel hub.

"Aerial vehicle" refers to any manned or unmanned vehicle capable of air travel. Non-limiting examples of an aerial vehicle include a passenger airplane, a helicopter, an unmanned aerial vehicle, an electric aerial vehicle, an electronic vertical takeoff or landing (eVTOL) aircraft, a jet, a drone, or a quadcopter. At least some aerial vehicles are controllable by system(s) onboard the aerial vehicle. At least some aerial vehicles are controllable by system(s) external from the aerial vehicle including, and without limitation, remote control system(s), ground system(s), and centralized control system(s). In various embodiments, an aerial vehicle can be an electric aerial vehicle that is powered partially or completely by a battery system integrated with the electric aerial vehicle.

"Computing device" refers to any computer, processor, circuitry, and/or other executor of computer instructions that is embodied in hardware, software, firmware, and/or any combination thereof. Non-limiting examples of a computing device include a computer, a processor, an application-specific integrated circuit, a field-programmable gate array, a personal computer, a smart phone, a laptop, a fixed terminal, a server, a networking device, and a virtual machine.

"User computing device" refers to a computing device associated with a person, company, or other organizational structure that controls one or more systems. In some embodiments, a user computing device is associated with particular administrative credentials that define access to operation via a particular system.

"Executable code" refers to a portion of computer program code stored in one or a plurality of locations that is executed and/or executable via one or more computing devices embodied in hardware, software, firmware, and/or any combination thereof. Executable code defines at least one particular operation to be executed by one or more computing devices. In some embodiments, a memory, storage, and/or other computing device includes and/or otherwise is structured to define any amount of executable code (e.g., a portion of executable code associated with a first operation and a portion of executable code associated with a second operation). Alternatively or additionally, in some embodiments, executable code is embodied by separate computing devices (e.g., a first datastore embodying first portion of executable code and a second datastore embodying a second portion executable code).

"Datastore," "database," and "data lake" refer to any type of non-transitory computer-readable storage medium. Non-limiting examples of a datastore, database, and/or data lake include hardware, software, firmware, and/or a combination thereof capable of storing, recording, updating, retrieving and/or deleting computer-readable data and information. In various embodiments, a datastore, database, and/or data lake in some contexts is a cloud-based storage system accessible via a communications network by one or more components of the various embodiments of the present invention.

"Data attribute" refers to electronically managed data representing a variable or particular criteria or property having a particular value or status. In some contexts the value is statically fixed or dynamically assigned. In some embodiments, a data attribute embodies a particular property of a data object.

"Data value" refers to electronically managed data representing a particular value for a particular data attribute, operational parameter, sensor device, and/or the like.

The phrases "in an embodiment," "in one embodiment," "according to one embodiment," and the like generally mean that the particular feature, structure, or characteristic following the phrase in some contexts is included in at least one embodiment of the present invention, and in some contexts is included in more than one embodiment of the present invention (importantly, such phrases do not necessarily refer to the same embodiment). The word "exemplary" is used herein to mean "serving as an example, instance, or illustration." Any implementation described herein as "exemplary" is not necessarily to be construed as preferred or advantageous over other implementations. If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature in some contexts is optionally included in some embodiments, or it in some contexts is excluded.

As used herein, the terms "data," "content," "digital content," "data object," "information," and similar terms may be used interchangeably to refer to data capable of being transmitted, received, and/or stored in accordance with embodiments of the present invention. Thus, use of any such terms should not be taken to limit the scope of embodiments of the present invention. Further, where a computing device is described herein to receive data from another computing device, it will be appreciated that the data may be received directly from another computing device or may be received indirectly via one or more intermediary computing devices, such as, for example, one or more servers, relays, routers, network access points, base stations, hosts, and/or the like, sometimes referred to herein as a "network." Similarly, where a computing device is described herein to send data to another computing device, it will be appreciated that the data may be sent directly to another computing device or may be sent indirectly via one or more intermediary computing devices, such as, for example, one or more servers, relays, routers, network access points, base stations, hosts, and/or the like.

### EXAMPLE SYSTEMS, APPARATUSES, AND DATAFLOWS OF THE INVENTION

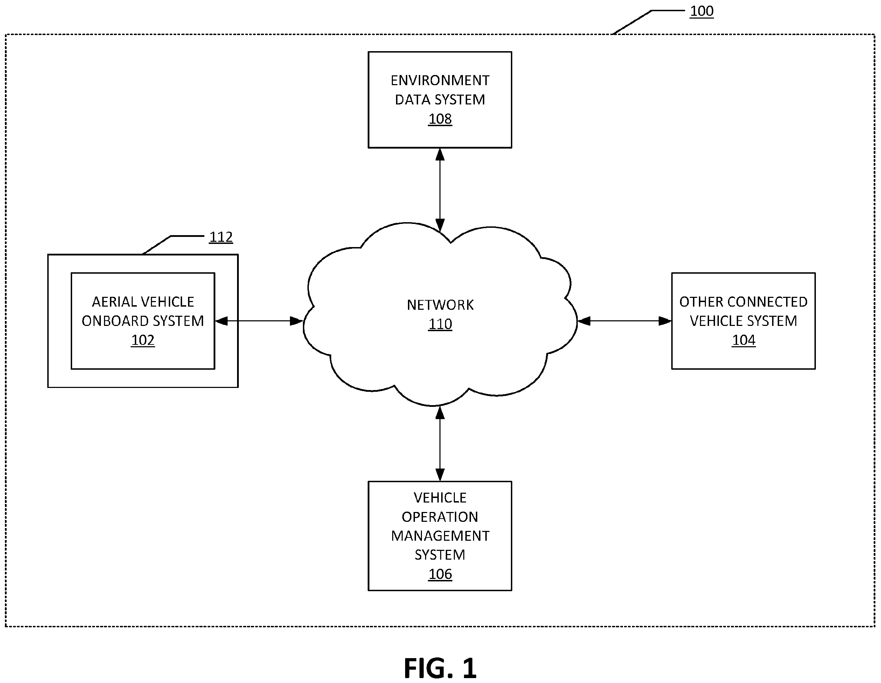

FIG. 1 illustrates an example system that enables enhanced trip plan-based vehicle battery situational awareness (VBSA) in accordance with at least some example embodiments of the present invention. Specifically, FIG. 1 depicts an example system 100 within which embodiments of the present invention may operate to provide enhanced trip plan-based VBSA for an aerial vehicle 112. As depicted, the system 100 includes aerial vehicle onboard system(s) 102 associated with the aerial vehicle 112. Additionally or alternatively, in some embodiments, the aerial vehicle 112 is communicable (e.g., via the aerial vehicle onboard system(s) 102) with one or more external computing device(s) and/or system(s). For example, in some embodiments, the aerial vehicle onboard system(s) 102 is optionally communicable with some or all of the other connected vehicle system(s) 104, vehicle operation management system(s) 106, and/or environment data system(s) 108. In some such embodiments, the aerial vehicle onboard system(s) 102 communicates with the other connected vehicle system(s) 104, vehicle operation management system(s) 106, and/or environment data system(s) 108 via one or more specially configured communications network(s), for example the network 110.

In some embodiments, the aerial vehicle onboard system(s) 102 includes any number of computing device(s) and/or system(s) embodied in hardware, software, firmware, and/or a combination thereof, that control, operate, and/or otherwise function onboard an aerial vehicle 112. For example, in some embodiments, the aerial vehicle onboard system(s) 102 includes one or more physical component(s) of the aerial vehicle 112, including and without limitation one or more display(s), flight management system(s), vehicle operation management system(s), engine(s), wing(s), prop(s), motor(s), antenna(s), landing gear(s), and/or the like. In some embodiments, the aerial vehicle onboard system(s) 102 includes one or more sensor(s) that gather, collect, and/or otherwise aggregates sensor data relevant to operation of the aerial vehicle 112, associated with the aerial vehicle 112, and/or otherwise associated with an environment of the aerial vehicle 112.

Additionally or alternatively, in some embodiments, the aerial vehicle onboard system(s) 102 includes one or more computing device(s) and/or system(s) embodied in hardware, software, firmware, and/or a combination thereof, that control(s) operation of one or more physical components of the aerial vehicle 112. For example and without limitation, in some embodiments the aerial vehicle onboard system(s) 102 includes computing device(s) and/or system(s) that control one or more display(s), flight management system(s), vehicle operation management system(s), engine(s), wing(s), prop(s), motor(s), antenna(s), landing gear(s), sensor(s), and/or the like.

Additionally or alternatively, in some embodiments, the aerial vehicle onboard system(s) 102 includes one or more computing device(s) and/or system(s) embodied in hardware, software, firmware, and/or a combination thereof, that generates and/or otherwise causes rendering of one or more user interface(s) renderable to one or more display(s) onboard and/or otherwise associated with the aerial vehicle 112. In some embodiments such computing device(s) and/or system(s) specially configure some or all element(s) of user interface(s) to be rendered based at least in part on received data. It should be appreciated that the aerial vehicle onboard system(s) 102 in some embodiments includes any of a myriad of specially configured computing device(s) and/or system(s) that enable the aerial vehicle 112 to operate in a particular manner of airborne travel. For example, in various embodiments, the aerial vehicle onboard system(s) 102 may include a primary flight display (PFD), an electronic flight bag (EFB), a flight management system (FMS), a gateway computing device, and/or the like. In various embodiments, the aerial vehicle onboard system(s) 102 associated with a respective vehicle may be configured in a line replaceable unit (LRU).

In some embodiments, the aerial vehicle onboard system(s) 102 includes one or more personal computer(s), end-user terminal(s), monitor(s), or other display(s), and/or the like. Additionally or alternatively, in some embodiments, the aerial vehicle onboard system(s) 102 includes one or more data repository/data repositories embodied in hardware, software, firmware, and/or any combination thereof, to support functionality provided by the aerial vehicle onboard system(s) 102. For example, in some embodiments, such data repositories provide data storage functionality on the same computing device(s) and/or other dedicated computing device(s) of the aerial vehicle onboard system(s) 102. Additionally or alternatively still, in some embodiments, the aerial vehicle onboard system(s) 102 includes one or more specially configured integrated system(s), circuit(s), and/or the like that process data received by and/or control one or more other computing device(s) and/or system(s), or physical component(s), associated with the aerial vehicle 112.

The aerial vehicle 112 may embody any of a myriad of aerial vehicle types. The aerial vehicle 112 includes any number of physical component(s) that enable air travel, including and without limitation prop(s), rotor(s), engine(s), wing(s), and/or the like. Additionally or alternatively, the aerial vehicle 112 includes any number of a myriad of controls for operating the physical components of the aerial vehicle 112 to achieve such airborne travel. For example, in some embodiments, the aerial vehicle 112 includes a forward-flying aerial vehicle. In some embodiments, the aerial vehicle 112 includes a vertical takeoff and landing aerial vehicle. It will be appreciated that the aerial vehicle 112 may be entirely manually controlled, semi-autonomous, fully autonomous for one or more operations, or any combination thereof. Non-limiting examples of an aerial vehicle 112 include a plane generally, a helicopter, a drone, an electric vertical takeoff and landing aircraft (eVTOL), a prop-based aircraft, a jet, and/or the like. Any particular vehicle type utilized in this invention is purely illustrative, and not to limit the scope of this invention or the appended claims presented herewith.

The other connected vehicle system(s) 104 includes computing device(s), system(s), and/or onboard system(s) of other vehicle(s) communicatively coupled with the aerial vehicle 112 associated with aerial vehicle onboard system(s) 102. It will be appreciated that the other connected vehicle system(s) 104 in some embodiments includes computing device(s) and/or system(s) of one or more other aerial vehicle(s) of the same type operating within the same environment as the aerial vehicle associated with aerial vehicle onboard system(s) 102. For example, in some embodiments some of the other connected vehicle system(s) 104 include computing device(s) and/or system(s) of other aerial vehicle(s) in a fleet of a particular type of aerial vehicle. In some such embodiments, sensor data (for example) captured via such other connected vehicle system(s) 104 similarly may be applicable to the aerial vehicle 112 as well. Additionally or alternatively, in some embodiments, the other connected vehicle system(s) 104 includes computing device(s) and/or system(s) of ground vehicle(s), other types of aerial vehicle(s), and/or the like, or any combination thereof.

In some embodiments, the aerial vehicle onboard system(s) 102 receives data from one or more of the other connected vehicle system(s) 104 that provides additional context with respect to the environment in which the aerial vehicle 112 associated with aerial vehicle onboard system(s) 102 is operating. In some contexts, such data includes sensor data that the aerial vehicle onboard system(s) 102 is able to capture, or in some embodiments includes sensor data not capturable by the aerial vehicle onboard system(s) 102. For example, in some embodiments, the aerial vehicle onboard system(s) 102 communicates with the other connected vehicle system(s) 104 to determine a position of other aerial vehicle(s), object(s), environmental feature(s) (e.g., buildings, terrain, and/or the like) within the environment of the aerial vehicle associated with aerial vehicle onboard system(s) 102, and/or the like. Additionally or alternatively, in some embodiments, the aerial vehicle onboard system(s) 102 communicate with one or more of the other connected vehicle system(s) 104 to receive sensor data of a particular data type that is not capturable directly by the aerial vehicle onboard system(s) 102. For example, in some embodiments, the aerial vehicle associated with the aerial vehicle onboard system(s) 102 does not include a particular sensor for capturing a particular type of sensor data, and instead receives such data of the particular data type from the other connected vehicle system(s) 104.

In some embodiments, the vehicle operation management system(s) 106 includes one or more computing device(s) embodied in hardware, software, firmware, and/or the like that generate, assign, and/or maintain vehicle operation constraints (e.g., trip plan data, flight plan information, mission goals, etc.) for one or more aerial vehicle(s). For example, in some embodiments, the vehicle operation management system(s) 106 include computing device(s) and/or system(s) of an air traffic control system and/or other authoritative entity that assigns flight plan information to one or more aerial vehicle(s). Such information includes, without limitation, flight plan information embodying a visual sight rules (VFR) flight plan, an instrument flight rules (IFR) flight plan, a composite flight plan, and/or the like defining conditions for operating an aerial vehicle 112 within a particular environment. In some embodiments, the vehicle operation management system(s) 106 captures and/or otherwise obtains particular data for relaying to the aerial vehicle 112.

In some embodiments, the vehicle operation management system(s) 106 includes one or more application server(s), end user terminal(s), personal computer(s), mobile device(s), user device(s), and/or the like that generate, assign, and/or transmit flight plan information to aerial vehicle(s). Additionally or alternatively, in some embodiments, the vehicle operation management system(s) 106 includes one or more data repository/repositories embodied in hardware, software, firmware, and/or a combination thereof, that stores flight plan information, links between flight plan information and particular aerial vehicle(s), and/or the like. In some such embodiments, the flight plan information includes navigational data, environmental data, weather data, and/or obstacle data for one or more environment(s) within which an aerial vehicle is or will be operating. Additionally or alternatively, in some embodiments, the vehicle operation management system(s) 106 includes one or more computing device(s) and/or system(s) that detect and/or monitor operation of one or more aerial vehicle(s) within an environment. For example, in some embodiments, the travel operation management system(s) 106 includes one or more radar system(s) that monitor one or more environment(s). In various embodiments, one or more portions of data associated with the vehicle operation management system(s) 106 may be stored in a navigation database associated with the VBSA platform.

The environment data system(s) 108 includes one or more computing device(s) and/or system(s) that monitor, capture, and/or otherwise store data representing one or more aspect(s) of a real-world environment, object(s) therein, and/or aerial vehicle(s) therein. In some embodiments, the environment data system(s) 108 includes one or more data repository/repositories that store weather and/or obstacle data for one or more environment(s). Additionally or alternatively, in some embodiments, the environment data system(s) 108 includes one or more data repository/repositories that store data embodying other environmental aspect(s) that interact with or otherwise affect operation of aerial vehicle(s) in an environment, for example the aerial vehicle 112. In some embodiments, the environment data system(s) 108 includes a satellite system that monitors one or more aspect(s) of an environment, for example a satellite weather provider and/or satellite radio provider to the aerial vehicle 112. Alternatively or additionally still, in some embodiments, the environment data system(s) 108 embody or include a flight services data provider system (e.g., a Honeywell flight services system). In some embodiments, the environment data system(s) 108 embodies a subsystem of the vehicle operation management system(s) 106 and/or other connected vehicle system(s) 104.

In some embodiments, the environment data system(s) 108 includes one or more application server(s), end user terminal(s), personal computer(s), mobile device(s), user device(s), and/or the like. Additionally or alternatively, in some embodiments, the environment data system(s) 108 includes one or more database server(s) specially configured to store data pushed from one or more other computing device(s) and/or system(s). In some embodiments, the environment data system(s) 108 includes one or more remote and/or cloud computing device(s) accessible to the aerial vehicle onboard system(s) 102, other connected vehicle system(s) 104, and/or vehicle operation management system(s) 106 over a communications network, such as the network 110. In various embodiments, one or more portions of data associated with the environment data system(s) 108 may be stored in a navigation database associated with the VBSA platform.

In some embodiments the network 110 enables communication between various computing device(s) and/or system(s) utilizing one or more combination(s) of wireless and/or wired data transmission protocol(s). In this regard, the network 110 in some contexts embodies any of a myriad of network configurations. In some embodiments, the network 110 embodies a public network (e.g., the Internet) in whole or in part. In some embodiments, the network 110 embodies a private network (e.g., an internal network between particular computing devices) in whole or in part. Alternatively or additionally, in some embodiments the network 110 embodies a direct or private connection facilitated over satellite or radio system(s) that enables long-range communication between aerial vehicle(s) and corresponding grounded system(s). In some other embodiments, the network 110 embodies a hybrid network (e.g., a network enabling internal communications between particular connected computing devices and external communications with other computing devices).

The network 110 in some embodiments includes one or more base station(s), relay(s), router(s), switch(es), cell tower(s), communications cable(s), satellite(s), radio antenna(s) and/or related control system(s), and/or associated routing station(s), and/or the like. In some embodiments, the network 110 includes one or more user entity-controlled computing device(s) and/or other enterprise device(s) (e.g., an end-user's or enterprise router, modem, switch, and/or other network access point) and/or one or more external utility devices (e.g., Internet service provider communication tower(s), cell tower(s), and/or other device(s)). In some embodiments, the aerial vehicle onboard system(s) 102 communicates with one or more of the other connected vehicle system(s) 104, vehicle operation management system(s) 106, environment data system(s) 108 over the network 110 to receive and/or transmit the data described herein for generating the user interface(s) for providing to one or more display(s) of an aerial vehicle. In some embodiments, the network 110 embodies a Datalink uplink to the aerial vehicle 112 (e.g., via the aerial vehicle onboard system(s) 102) that communicatively couple the airborne system(s) to the ground system(s).

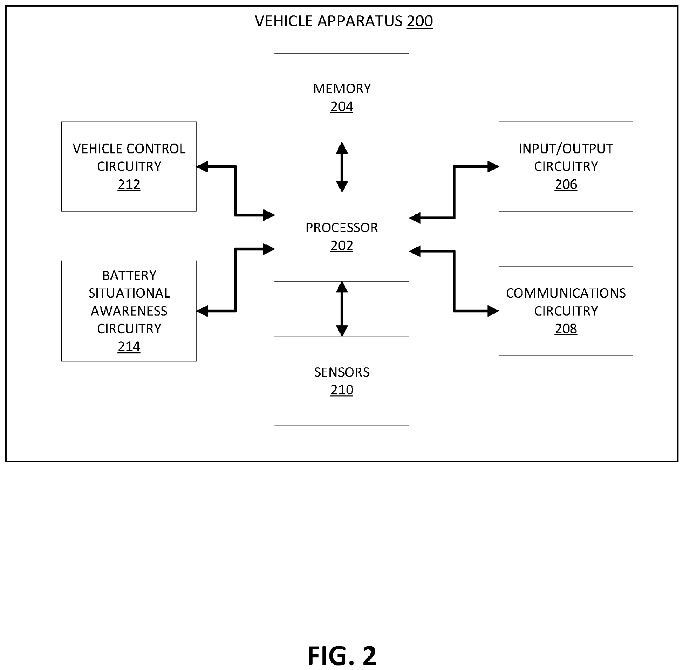

FIG. 2 illustrates an example vehicle apparatus in accordance with at least some example embodiments of the present invention. Specifically, FIG. 2 depicts a vehicle apparatus 200. In some embodiments, one or more computing device(s) and/or system(s) of a vehicle (e.g., an aerial vehicle 112), for example included in or embodied by the aerial vehicle onboard system(s) 102 onboard an aerial vehicle 112, is embodied by one or more computing devices such as the vehicle apparatus 200 as depicted and described in FIG. 2. As depicted, the vehicle apparatus 200 includes a processor 202, memory 204, input/output circuitry 206, communications circuitry 208, sensor(s) 210, vehicle control circuitry 212, and/or battery situational awareness circuitry 214. In some embodiments, the vehicle apparatus 200 is configured, using one or more of the sets of circuitry embodying processor 202, memory 204, input/output circuitry 206, communications circuitry 208, sensor(s) 210, vehicle control circuitry 212, and/or battery situational awareness circuitry 214, to execute one or more operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the vehicle apparatus 200 provide or supplement the functionality of another particular set of circuitry. For example, the processor 202 in some embodiments provides processing functionality to any of the other sets of circuitry, the memory 204 provides storage functionality to any of other the sets of circuitry, the communications circuitry 208 provides network interface functionality to any of the other sets of circuitry, and/or the like.

In some embodiments, the processor 202 (and/or co-processor or any other processing circuitry assisting or otherwise associated with the processor) is/are in communication with the memory 204 via a bus for passing information among components of the vehicle apparatus 200. In some embodiments, for example, the memory 204 is non-transitory and includes for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the vehicle apparatus 200 to carry out various functions in accordance with example embodiments of the present invention. Furthermore, in various embodiments, the memory 204 is configured to store one or more portions of data related to a performance database and/or a navigation database associated with a VBSA platform associated with a vehicle embodying a respective vehicle apparatus 200.

In various embodiments, the processor 202 is embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the vehicle apparatus 200, and/or one or more remote or "cloud" processor(s) external to the vehicle apparatus 200.

In an example embodiment, the processor 202 is configured to execute instructions stored in the memory 204 or otherwise accessible to the processor 202. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present invention while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with executing one or more recommendations generated by the vehicle performance prediction model associated with the onboard VBSA system, for example as described with respect to operating and/or reconfiguring the aerial vehicle onboard system(s) 102 in FIG. 1 and/or as described further herein. In some embodiments, the processor 202 includes hardware, software, firmware, and/or a combination thereof, that receives data including one or more portions of vehicle performance data, vehicle sensor data, environmental data, logistical data, and/or data related to one or more adverse situations impacting the operation of a vehicle (e.g., an aerial vehicle 112).

Additionally or alternatively, in some embodiments, the processor 202 includes hardware, software, firmware, and/or a combination thereof, that causes rendering one or more recommendations generated by the vehicle performance prediction model via one or more electronic interfaces associated with the vehicle apparatus 200 and/or one or more electronic interfaces associated with other computing devices related to the VBSA platform (e.g., a vehicle operations center apparatus associated with the vehicle operations center). Additionally or alternatively, in some embodiments, the processor 202 includes hardware, software, firmware, and/or a combination thereof, that in real-time updates rendering of a user interface and/or interface element(s) thereof in response to updated data related to the one or more adverse situations, one or more recommendations associated with the one or more adverse situations, and/or one or more portions of data associated with the operation of the aerial vehicle 112.

In some embodiments, the vehicle apparatus 200 includes input/output circuitry 206 that provides output to the user and, in some embodiments, to receive an indication of a user input (e.g., user input generated by a pilot, operator, crew member, and/or passenger). In some embodiments, the input/output circuitry 206 is in communication with the processor 202 to provide such functionality. The input/output circuitry 206 in some contexts comprises one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202, and/or input/output circuitry 206 comprising a processor, in some embodiments is configured to control one or more functions of one or more user interface elements through computer program instructions (e.g., software and/or firmware) stored on a memory accessible to the processor 202 (e.g., memory 204, and/or the like). In some embodiments, the input/output circuitry 206 includes or utilizes a user-facing application to provide input/output functionality to a computing device and/or other display associated with a user. In some embodiments, the input/output circuitry 206 includes a primary flight display and/or a multi-function display of an aerial vehicle. Additionally or alternatively, in some embodiments, the input/output circuitry 206 includes one or more software-rendered user interface(s) including interface element(s) that depict particular data and/or information, and/or that receive user input.

The communications circuitry 208 includes any means such as a device or circuitry embodied in either hardware or a combination of hardware and software that is configured to receive and/or transmit data from/to a communications network and/or any other computing device, circuitry, or module in communication with the vehicle apparatus 200. In this regard, the communications circuitry 208 includes, for example in some embodiments, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from one or more computing device(s) and/or system(s) of other connected vehicle system(s) 104, vehicle operation management system(s) 106, and/or environment data system(s) 108, in communication with the vehicle apparatus 200.

The sensor(s) 210 includes hardware, software, firmware, and/or a combination thereof, that supports generation, capturing, aggregating, retrieval, and/or receiving of one or more portions of sensor data. In some embodiments, the sensor(s) 210 includes one or more discrete component(s) of a vehicle (e.g., an aerial vehicle 112). The sensor(s) 210 in some embodiments are affixed to, within, and/or otherwise as a part of an aerial vehicle including or otherwise associated with the vehicle apparatus 200. For example, in some embodiments, one or more of the sensor(s) 210 is/are mounted to the aerial vehicle, such as the aerial vehicle 112. Non-limiting examples of sensor(s) 210 include altimeter(s) (e.g., radio and/or barometric), pressure sensor(s), pilot tube(s), anemometer(s), image camera(s), video camera(s), infrared sensor(s), speed sensor(s), battery sensor(s), fuel level sensor(s), biological sensor(s) and/or the like. In some embodiments, the sensor(s) 210 are integrated with, or embodied by, one or more of the aerial vehicle onboard system(s) 102 such that the sensor(s) 210 generate, collect, monitors, and/or otherwise obtain data related to the one or more aerial vehicle onboard system(s) 102.

In some embodiments, the sensor(s) 210 additionally or alternatively include any of a myriad of sensor(s) conventionally associated with drone(s), helicopter(s), and/or other urban air mobility aerial vehicle(s). Additionally or alternatively, in some embodiments, the sensor(s) 210 include one or more high-sensitivity sensor(s) to facilitate enable high accuracy capturing of data in certain circumstances. For example, in some embodiments, the sensor(s) 210 includes one or more high-sensitivity sensor(s) that capture detailed data while an aerial vehicle is in flight. Such higher fidelity sensor(s) in some contexts supplement and/or, in other embodiments, replace the data captured by such sensor(s) with lower fidelity.

In some embodiments, the sensor(s) 210 includes hardware, software, firmware, and/or a combination thereof, embodying one or more navigation sensor(s). In some embodiments, the navigation sensor(s) includes a global positioning satellite (GPS) tracking chip and/or the like enabling location services to be requested and/or determined for a particular aerial vehicle. Additionally or alternatively, in some embodiments, the sensor(s) 210 includes hardware, software, firmware, and/or any combination thereof, embodying inertial navigation sensor(s) that measures speed, acceleration, orientation, and/or position-related data in a 3D environment. Additionally or alternatively, in some embodiments, the sensor(s) 210 includes one or more camera(s) associated with a synthetic vision system (SVS). In some such embodiments, such an SVS camera captures image data representation(s) of the real-world environment around an aerial vehicle for use in generating corresponding user interface(s) depicting he captured image data, augmenting such image data, and/or otherwise providing data to enable an operator to acquire situational awareness based at least in part on the captured image data. It will be appreciated that, in some embodiments, the sensor(s) 210 includes a separate processor, specially configured field programmable gate array (FPGA), or a specially programmed application specific integrated circuit (ASIC).

The vehicle control circuitry 212 includes hardware, software, firmware, and/or a combination thereof, that supports functionality associated with navigating and/or controlling a vehicle (e.g., an aerial vehicle 112). In some embodiments, vehicle control circuitry 212 can control and/or configure one or more of the aerial onboard system(s) 102. In some embodiments, vehicle control circuitry 212 includes hardware, software, firmware, and/or a combination thereof, that receives trip plan data (e.g., embodying a flight plan), location service(s) data representing a location of an aerial vehicle 112, and/or the like. Additionally or alternatively, in some embodiments, the vehicle control circuitry 212 includes hardware, software, firmware, and/or a combination thereof, that depicts interface element(s) representing at least a flight path or indication where the aerial vehicle 112 is currently traveling and/or should travel.

Additionally or alternatively, in some embodiments, the vehicle control circuitry 212 includes hardware, software, firmware, and/or a combination thereof, that autonomously control(s) one or more component(s) of an aerial vehicle. In some such embodiments, the vehicle control circuitry 212 autonomously control(s) one or more physical component(s) of a vehicle (e.g., an aerial vehicle 112) to facilitate movement of the vehicle along a particular path. Alternatively or additionally, in some embodiments, the vehicle control circuitry 212 includes hardware, software, firmware, and/or a combination thereof, that semi-autonomously control(s) one or more component(s) of an aerial vehicle, for example where certain aspects of the operation of the aerial vehicle are autonomously performed and others (e.g., directional control) is/are controlled by a user (e.g., a pilot). Alternatively or additionally, in some embodiments, the vehicle control circuitry 212 includes hardware, software, firmware, and/or a combination thereof, that receives pilot input for controlling one or more component(s) of an aerial vehicle, for example via vehicle flight control(s) to alter speed and/or direction of the aerial vehicle. Alternatively or additionally, in some embodiments, the vehicle control circuitry 212 includes hardware, software, firmware, and/or a combination thereof, that causes changes to an operational mode (e.g., an economy mode) of an aerial vehicle, for example autonomously based at least in part on one or more data-driven adverse situation(s) and/or triggers, or in response to user input initiating the change in operational mode. It will be appreciated that, in some embodiments, the vehicle control circuitry 212 includes a separate processor, specially configured field programmable gate array (FPGA), or a specially programmed application specific integrated circuit (ASIC).

The battery situational awareness circuitry 214 includes hardware, software, firmware, and/or a combination thereof, that supports functionality associated with the onboard VBSA system associated with a vehicle (e.g., an aerial vehicle 112). For example, the battery situational awareness circuitry 214 executes, at least in part, one or more portions of program code associated with the methods and operations of the onboard VBSA system. For example, the battery situational awareness circuitry 214 includes hardware, software, firmware, and/or a combination thereof, that can receive, generate, analyze and/or otherwise process one or more portions of data input comprising vehicle performance data, vehicle sensor data, vehicle operation data, vehicle system data, air traffic data, environmental data, logistical data, personnel data, and/or any other relevant data related to a particular vehicle (e.g., an aerial vehicle 112).

Additionally, in various embodiments, the battery situational awareness circuitry 214 includes hardware, software, firmware, and/or a combination thereof, that in some contexts is employed to configure, update, train, and/or retrain one or more models comprised in the performance prediction module (e.g., the vehicle performance prediction model) and/or the performance monitor associated with the onboard VBSA system based at least in part on prior model input comprising one or more prior adverse situations, one or more portions of prior vehicle performance data, one or more portions of prior vehicle sensor data, one or more prior operator inputs, one or more prior vehicle operation constraints, and/or a subset of the vehicle performance prediction model. In this regard, the battery situational awareness circuitry 214 includes hardware, software, firmware, and/or a combination thereof, that can cause the storage of one or more portions of data associated with the onboard VBSA system. Additionally or alternatively, the battery situational awareness circuitry 214 includes hardware, software, firmware, and/or a combination thereof, that can interface with, control, configure, and/or otherwise operate one or more legacy vehicle systems, legacy software, and/or legacy hardware associated with a vehicle (e.g., an aerial vehicle 112) based at least in part on the model output (e.g., recommendations) generated by the vehicle performance prediction model associated with the onboard VBSA system.

It will be appreciated that, further in some embodiments, two or more of the sets of circuitries 202-214 are combinable. Alternatively or additionally, in some embodiments, one or more of the sets of circuitry 202-214 perform some or all of the functionality described associated with another component. For example, in some embodiments, one or more of the sets of circuitry 202-214 are combined into a single component embodied in hardware, software, firmware, and/or a combination thereof. For example, in some embodiments, two or more of the vehicle control circuitry 212 and battery situational awareness circuitry 214 are embodied by a single set of circuitry that performs the combined operations of the individual sets of circuitry. Similarly, in some embodiments, one or more of the sets of circuitry, for example vehicle control circuitry 212 and/or battery situational awareness circuitry 214 is/are combined with the processor 202, such that the processor 202 performs one or more of the operations described above with respect to each of these other sets of circuitry.

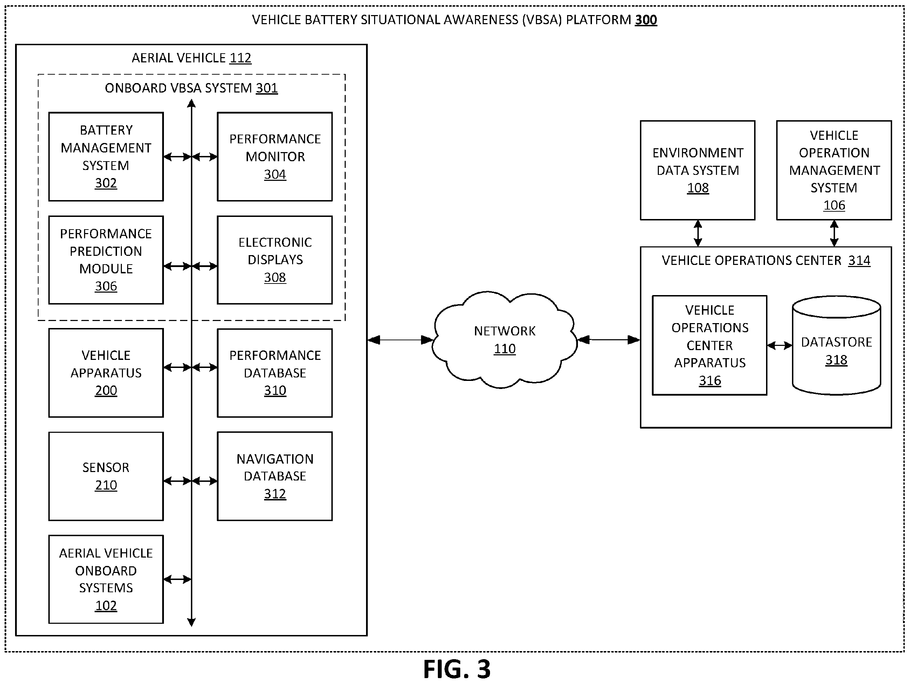

FIG. 3 illustrates an example VBSA platform 300 in accordance with at least some example embodiments of the present invention. As depicted, FIG. 3 depicts the various operational services, systems, components, apparatuses, and datastores embodied by the VBSA platform 300. For example, the VBSA platform 300 includes vehicle operations center 314 comprising a vehicle operations center apparatus 316 and/or a datastore 318. In various embodiments, the vehicle operations center 314 integrates and/or communicates with one or more environment data system(s) 108 and/or one or more vehicle operation management system(s) 106. In various embodiments, the vehicle operations center 314, environment data system(s) 108, and/or the vehicle operation management system(s) 106 in some contexts communicate via the network 110.

The VBSA platform 300 also comprises an onboard VBSA system 301 embodied by the aerial vehicle 112. In various embodiments, the onboard VBSA system 301 in some contexts is integrates with, or is embodied by, the vehicle apparatus 200. Additionally or alternatively, in various contexts, the onboard VBSA system 301 integrates with the aerial vehicle onboard systems 102 and/or the sensors 210 associated with the aerial vehicle 112. In various embodiments, the vehicle operations center 314 communicates with the onboard VBSA system 301 via the network 110. For example, the vehicle operations center 314 communicates with the onboard VBSA system 301 through one or more of the component parts of the vehicle operations center apparatus 316 (e.g., communications circuitry) and one or more component parts of the vehicle apparatus 200 (e.g., communications circuitry 208) via the network 110.

As will be further detailed herein, due to the distributed nature of the various embodiments of the present invention, the VBSA platform 300 and the operational systems and/or services comprised therein in some contexts is configured to freely pass data via one or more communications networks (e.g., network 110) in order to optimally delegate one or more operations described herein to one or more respective computing devices associated with the VBSA platform 300. This delegation of operations provides the benefit of optimizing the capabilities of a particular vehicle (e.g., a particular aerial vehicle 112) based at least in part on the processing power associated with the particular vehicle. As will be appreciated, the delegation of certain methods, procedures, calculations, computations, configurations, predictions, and/or the like throughout the distributed operational systems and/or services of the VBSA platform 300 reduces the load on the aerial vehicle onboard system(s) 102 of the vehicle as well as the load on the computing devices (e.g., the vehicle operations center apparatus 316) of the vehicle operations center 314.

The VBSA platform 300 comprises many data storage systems deployed in various configurations. As defined herein, database (e.g., performance database 310 and navigation database 312) and/or datastore (e.g., datastore 318) in some contexts is any type of non-transitory computer-readable storage medium. Non-limiting examples include hardware, software, firmware, and/or a combination thereof capable of storing, recording, updating, retrieving and/or deleting computer-readable data and information related to the VBSA platform 300. In various embodiments, one or more databases (e.g., the performance database 310 and/or the navigation database 312) can be embodied by an aerial vehicle 112 and/or associated with the onboard VBSA system 301. In some contexts, one or more databases (e.g., the performance database 310 and/or the navigation database 312) embodied by an aerial vehicle 112 can be accessible via a communications network (e.g., the network 110) by one or more components of the various embodiments of the present invention (e.g., the vehicle operations center apparatus 316). In various embodiments, a database (e.g., performance database 310 and navigation database 312) and/or datastore (e.g., datastore 318) in some contexts is a cloud-based storage system accessible via a communications network (e.g., the network 110) by one or more components of the various embodiments of the present invention (e.g., the onboard VBSA system 301 and/or the vehicle operations center apparatus 316).

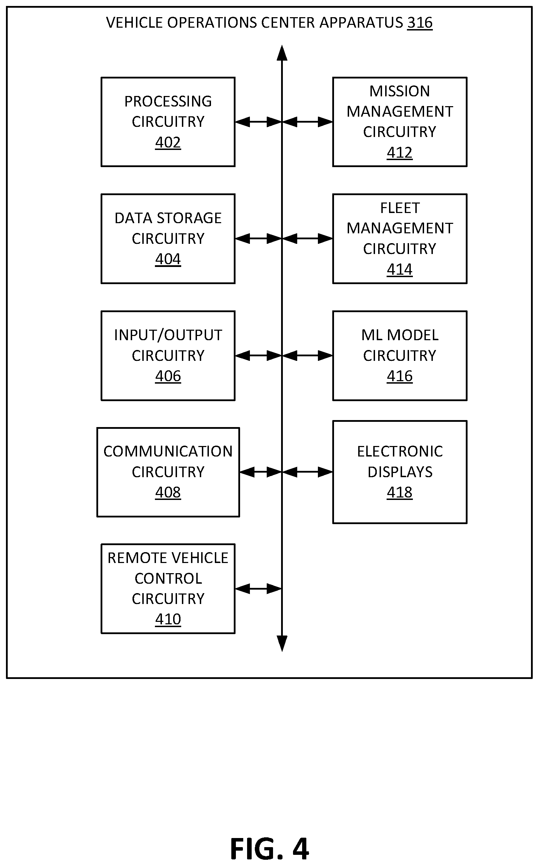

The vehicle operations center apparatus 316 in some contexts is a computing apparatus deployed in many configurations, the details of which will be provided in the description of FIG. 4 which illustrates the various components of the vehicle operations center apparatus 316. The vehicle operations center apparatus 316 is configured to generate one or more interactive user interfaces for rendering on one or more electronic displays associated with the vehicle operations center 314. For example, in some embodiments, the vehicle operations center apparatus 316 is configured to generate an interactive user dashboard comprising various interactive interface elements representing data related to the VBSA platform 300, data related to one or more onboard VBSA system(s) 301, data related to one or more vehicles (e.g., one or more aerial vehicle(s) 112), data related to the one or more system(s) integrated with the vehicle operations center 314, and/or data related to the one or more storage system(s) associated with the VBSA platform 300.

As such, the vehicle operations center apparatus 316, via the one or more interactive user interfaces, is configured to initialize, configure, update, modify, and/or otherwise set up an onboard VBSA system 301 associated with a particular vehicle (e.g., aerial vehicle 112). Additionally or alternatively, the vehicle operations center apparatus 316, via the one or more interactive user interfaces, is configured to initialize, configure, update, modify, and/or otherwise set up one or more components associated with a particular onboard VBSA system 301 such as, for example, the battery management system 302, the performance monitor 304, the performance prediction module 306, and/or the electronic displays 308.

The datastore 318 associated with the vehicle operations center 314 in some contexts is configured to store, retrieve, configure, modify, and/or otherwise manage one or more portions of data related to the VBSA platform 300. For instance, the datastore 318, in some contexts, stores vehicle performance data, adverse situation mitigation data, vehicle operation data associated with one or more vehicles, and/or one or more portions of training data for training and/or re-training the various models associated with the onboard VBSA system 301 (e.g., the vehicle performance prediction model). Additionally, the datastore 318 in some contexts stores one or more portions of data associated with the environment data system(s) 108 and/or the vehicle operation management system(s) 106.

Furthermore, the datastore 318 is configured to store one or more portions of data related to one or more vehicles associated with a vehicle fleet related to the VBSA platform 300. For example, the datastore 318 in some contexts stores one or more vehicle identifiers, vehicle load identifiers, vehicle component identifiers, onboard VBSA system identifiers, vehicle fleet data, vehicle mission data, and/or any other data pertinent to the one or more vehicles in a vehicle fleet associated with the VBSA platform 300. Additionally, the datastore 318 can store one or more portions of personnel data related to one or more vehicle operators, vehicle pilots, vehicle crew members, ground crew members, management personnel, and/or passengers associated with the VBSA platform 300.

The onboard VBSA system 301 of a respective vehicle (e.g., an aerial vehicle 112) comprises a battery management system 302, a performance monitor 304, a performance prediction module 306 and integrates with one or more electronic displays 308. The onboard VBSA system 301 comprises, and/or integrates with, among other components, a battery management system 302, a performance monitor 304, a performance prediction module 306, and/or one or more electronic displays 308 configured to monitor the energy expenditure of a vehicle (e.g., an aerial vehicle 112), predict the future energy expenditure of the vehicle based at least in part on a trip plan being executed by the vehicle, and/or detect and/or mitigate one or more adverse situations impacting the operation of the vehicle.

The onboard VBSA system 301, in some contexts, integrates with, or can be embodied by, a computing device such as a line replaceable unit (LRU). For example, the onboard VBSA system 301 in some contexts is embodied by an aerospace gateway LRU configured to communicate with one or more vehicle system(s). The vehicle operations center 314 and one or more onboard VBSA system(s) 301 associated with one or more respective vehicles remain in constant communication and are configured to transmit and/or receive data related to the operation of the one or more vehicles via a communications network (e.g., network 110). In this regard, the onboard VBSA system 301 in some contexts generates and transmits one or more requests to the vehicle operations center 314 via the communications network. The one or more requests include, but are not limited to, a request for one or more portions of data including, but not limited to, environmental data, vehicle operation management data, vehicle data, logistics data, hazard data, air traffic data, road traffic data, and/or the like.

Additionally, the onboard VBSA system 301 is configured to log and/or transmit one or more portions of data related to the vehicle to the vehicle operations center 314. For example, the onboard VBSA system 301 is configured to transmit one or more portions of vehicle performance data related to the real-time performance (e.g., the performance of a battery system) of a respective vehicle. Additionally or alternatively, the onboard VBSA system 301 is configured to transmit one or more portions of data related to a predicted energy expenditure of the vehicle based at least in part on a trip plan associated with the vehicle.

In various contexts, the onboard VBSA system 301 is configured to execute a vehicle performance validation process by calculating an impact of one or more trip parameters on the one or more vehicle systems associated with a respective vehicle (e.g., the aerial vehicle 112), where the one or more trip parameters comprise at least one of a vehicle type, a vehicle battery system, a number of passengers, a vehicle payload weight, and/or one or more environmental factors. Additionally, the onboard VBSA system 301 can receive one or more trip plans associated with a respective vehicle. The onboard VBSA system 301 is configured to determine, based on inputting results from the vehicle performance validation process and a particular trip plan (e.g., a first trip plan) into the performance prediction module 306, whether the particular trip plan is feasible. In various contexts, determining whether the particular trip plan is feasible comprises correlating the particular trip plan and/or the results from the vehicle performance validation process with one or more current values associated with one or more battery parameters associated with the battery system of the vehicle.

Additionally or alternatively, the onboard VBSA system 301 may determine whether the particular trip plan is feasible based in part on a predefined battery reserve requirement associated with the vehicle. For example, in various contexts, one or more vehicles (e.g., one or more aerial vehicles 112) associated with a respective VBSA platform 300 may be configured to adhere a predefined battery reserve requirement (e.g., a battery reserve requirement of 15%) regulating that a battery system of a respective vehicle must have a required amount of energy reserves relative to an available energy capacity of the battery system after arriving at a final destination associated with the particular trip plan.

In a scenario in which the onboard VBSA system 301 determines that the particular trip plan (e.g., the first trip plan) is not feasible, the onboard VBSA system 301 can cause display of a recommendation prompting entry of an alternative trip plan (e.g., a second trip plan), where the recommendation is configured to be displayed via one or more electronic displays (e.g., electronic displays 308) associated with the one or more computing devices associated with the vehicle (e.g., the aerial vehicle 112) and/or one or more electronic displays associated with the vehicle operations center 314 (e.g., associated with the vehicle operations center apparatus 316).

The battery management system 302 includes hardware, software, firmware, and/or a combination thereof, that in some contexts is employed to monitor, configure, control, access and/or otherwise manage one or more batteries, battery cells, battery interfaces, electrical components, and/or the like associated with a battery system of a respective vehicle (e.g., an aerial vehicle 112). As such, the battery management system 302 is, in some contexts, configured to generate, aggregate, compile, gather, retrieve, and/or otherwise access data related to one or more values associated with one or more respective battery parameters related to the battery system of the respective vehicle (e.g., the aerial vehicle 112).

In various contexts, the battery management system 302 is configured to transmit one or more portions of data related to the one or more values associated with the one or more respective battery parameters to the various other components of the onboard VBSA system 301 such as, for example, the performance monitor 304 and/or the performance prediction module 306. Furthermore, the battery management system 302 may be configured to, in contexts, transmit one or more portions of data to the vehicle apparatus 200 and/or one or more of the aerial vehicle onboard systems 102 associated with the respective vehicle (e.g., the aerial vehicle 112). In various embodiments, the data related to the one or more values associated with the one or more respective battery parameters related to the battery system of the respective vehicle may be configured as vehicle operation data configured as model input for one or more ML models associated with the onboard VBSA system 301.

The data related to the one or more values associated with the one or more respective battery parameters related to the battery system of the respective vehicle may include, but are not limited to, a state of charge (SoC), a state of health (SoH), a state of function (SoF), and/or a temperature associated with the battery system of the vehicle. The SoC is related to how much charge is left in a battery cell at a given time. The SoH is related to the ability of a respective battery cell to retain a charge (e.g., as compared to the initial ability of the battery cell when manufactured). The SoF is related a readiness of a respective battery cell in terms of usable energy derived by, for example, determining a current SoC of a battery cell in relation to the overall available capacity of the battery cell. In various contexts, the SoC, SoH, and/or SoF are determined by the performance monitor of an onboard VBSA system in conjunction with a battery management system for one or more battery cells associated with a battery system of a respective vehicle.

The performance monitor 304 is an ML model that is specially configured to receive one or more portions of vehicle operation data (e.g., data related to one or more battery parameters) and, based at least in part on the one or more portions of vehicle operation data, generate one or more portions of vehicle performance data describing one or more operational states of the vehicle. Additionally, the performance monitor 304 associated with an onboard VBSA system 301 is configured to identify, classify, categorize, and/or analyze one or more adverse situations impacting the operation of a vehicle.

The performance monitor 304 determines whether the vehicle is in a nominal state (e.g., a nominal operational state) or an adverse state (e.g., an adverse operational state). The performance monitor 304 in some contexts generates one or more portions of model output (e.g., vehicle performance data) configured to describe the current status, energy expenditure, operational parameters, data values, operational modes, and/or configurations of one or more vehicle systems associated with the vehicle. In this regard, if the performance monitor 304 determines that one or more adverse situations are taking place that are impacting the operation of the vehicle, the performance monitor 304 determines how the one or more adverse situations are related to (e.g., how the one or more adverse situations are impacting) the respective vehicle systems (e.g., a battery system of the vehicle).

As such, the performance monitor 304 generates one or more portions of vehicle performance data related to the current operational status of the vehicle as model output. The one or more portions of vehicle performance data are one or more portions of data that have been configured for logging, analysis, ML model input, ML model training, and/or storage. For example, one or more portions of vehicle performance data in some contexts captures the nominal state (e.g., nominal state) of the vehicle by logging, storing, and/or otherwise saving a current configuration of the one or more vehicle systems as well as how the configuration of the one or more vehicle systems relates to the current nominal operation of the vehicle. Similarly, the performance monitor 304 in some contexts generates one or more portions of vehicle performance data capturing an adverse state (e.g., an adverse operational state) related to one or more adverse situations impacting the operation of the vehicle and the respective vehicle systems associated with the vehicle. The performance monitor 304, in some contexts, transmits one or more portions of vehicle performance data to the vehicle performance prediction model associated with the performance prediction module 306. In various contexts, one or more portions of vehicle performance data can be stored, accessed, retrieved, and/or otherwise manages by a performance database associated with the VBSA platform 300.

Vehicle performance data associated with a nominal state of a particular vehicle in some contexts is used in one or more data recovery operations for reverting the particular vehicle from an adverse state back into a nominal state. For example, the vehicle performance data associated with the nominal state in some contexts comprises one or more operational parameters, data values, operational modes, and/or configurations of one or more vehicle systems. As such, the vehicle performance data associated with the nominal state in some contexts is utilized to reconfigure, re-initialize, and/or otherwise update the one or more vehicle systems such that the vehicle resumes operating in a manner congruent with the corresponding nominal state. In various embodiments, one or more portions of data related to the current operational state of the vehicle, one or more portions of vehicle performance data, and/or any data generated and/or managed by the performance monitor 304 in some contexts is rendered via one or more computing device(s) associated with the vehicle operations center 314.

Furthermore, in various embodiments, the performance monitor 304 in some contexts is configured to classify the criticality of one or more adverse situations associated with a vehicle (e.g., an aerial vehicle 112). For instance, once the performance monitor 304 determines that one or more adverse situations that can impact the operation of the vehicle is occurring, the performance monitor 304 determines an adverse situation severity level associated with the one or more adverse situations. As a non-limiting example, the performance monitor 304 in some contexts classifies one or more adverse situations as having a low severity level, a moderate severity level, a high severity level, a critical severity level, and/or the like. In various embodiments, one or more adverse situation severity thresholds in some contexts are predetermined and incorporated by the vehicle performance prediction model such that when a respective adverse situation severity level associated with the one or more adverse situations satisfies the one or more adverse situation severity thresholds, the vehicle performance prediction model generates one or more recommendations to address the one or more adverse situations.

As a non-limiting example, in response to determining that an adverse situation associated with a moderate severity level is impacting the operation of the vehicle (e.g., one or more battery cells associated with the battery system is beginning to overheat), the onboard VBSA system 301 may generate a recommendation to cause the vehicle to execute an emergency navigation procedure that navigates the vehicle to an optimal travel hub via an optimal route. As another non-limiting example, in response to determining that an adverse situation associated with a high severity level is impacting the operation of the vehicle (e.g., a failure of a particular vehicle system), the onboard VBSA system 301 may generate a recommendation to cause the vehicle to execute an emergency navigation procedure that navigates the vehicle to a nearest candidate travel hub. As another non-limiting example, in response to determining that an adverse situation associated with a low severity level is impacting the operation of the vehicle (e.g., one or more battery cells associated with the battery system is discharging at an unexpected rate), the onboard VBSA system 301 may generate a recommendation to switch the vehicle into an economy operational mode and continue to execute the current trip plan by following the route associated with the predicted energy overlay.

The performance monitor 304 in some contexts determines a respective adverse situation type associated with one or more adverse situations impacting the operation of the vehicle. One or more adverse situation types in some contexts are determined based in part on one or more portions of vehicle performance data indicative of a nominal scenario, an emergency scenario, a hazard scenario, a scenario that alters the voyage of the aerial vehicle, and/or a change in the operation of a system affecting control of the aerial vehicle. In various embodiments, at least a portion of the vehicle performance data is based at least in part on vehicle sensor data collected, measured, calculated, and/or otherwise generated by one or more sensors (e.g., one or more sensors 210) associated with the vehicle.

A few non-limiting examples of adverse situation types that in some contexts is associated with a respective adverse situation include, an emergency adverse situation type, a hazard adverse situation type, a mechanical failure adverse situation type, a logistical adverse situation type, an environmental adverse situation type, an optimization adverse situation type, a personnel health adverse situation type, and/or the like. In some embodiments, adverse situation types in some contexts are associated with a predefined adverse situation severity level. For example, in some embodiments, a logistical adverse situation type in some contexts is automatically associated with a low severity level. However, the performance monitor 304 in some contexts determines that a particular adverse situation associated with a logistical adverse situation type has a high adverse situation severity level due to various respective circumstances.

The performance monitor 304 is configured to cause rendering of one or more portions of data related to the current state of a vehicle (e.g., the aerial vehicle 112) via, for example, the vehicle apparatus 200 and/or the vehicle operations center apparatus 316. For example, the performance monitor 304 is configured to cause rendering of one or more portions of data related to a nominal state of the vehicle, data related to an adverse state of the vehicle, data related to the one or more adverse situations impacting the operation of the vehicle, data related to the vehicle performance data associated with the vehicle, data related to the vehicle sensor data associated with the vehicle, and/or the like.

Furthermore, the performance monitor 304 is configured to generate one or more alerts, warnings, notifications, and/or prompts related to the one or more portions of data related to the current state of a vehicle (e.g., the aerial vehicle 112). The performance monitor 304 cause rendering of the one or more alerts, warnings, notifications, and/or prompts via, for example, the vehicle apparatus 200 and/or the vehicle operations center apparatus 316. For example, the performance monitor 304 in some contexts generates an alert detailing that a particular aerial vehicle 112 has entered into an adverse state. The alert in some contexts details the problem sate, the one or more adverse situations impacting the operation of the vehicle, and/or the one or more vehicle systems (e.g., aerial vehicle onboard system(s) 102) that have been affected by the adverse state and/or the one or more adverse situations.

In various contexts, the performance monitor 304 causes rendering of the one or more alerts, warnings, notifications, and/or prompts via an operational recommendation interface associated with one or more electronic displays 308. Additionally or alternatively, the performance monitor 304 in some contexts causes rendering of the one or more alerts, warnings, notifications, and/or prompts via the vehicle apparatus 200. Additionally or alternatively, the performance monitor 304 causes transmission of the one or more alerts, warnings, notifications, and/or prompts to the vehicle operations center 314 in order to facilitate the rendering of the alert via one or more additional computing device(s) associated with the VBSA platform 300 (e.g., one or more electronic displays associated with the vehicle operations center apparatus 316).

The performance monitor 304 is also configured to transmit data related to one or more portions of vehicle performance data, data related to one or more adverse situations, and/or data related to one or more operational states to the vehicle performance prediction model comprised within the performance prediction module 306 to facilitate the mitigation of one or more adverse situations impacting the corresponding vehicle (e.g., the aerial vehicle 112).

The performance prediction module 306 comprises hardware, software, firmware, and/or a combination thereof associated with an onboard VBSA system 301 that is configured to predict an energy expenditure a respective vehicle during execution of a trip plan (e.g., a planned navigation route for the respective vehicle) based at least in part on the results of a vehicle performance validation process and one or more values associated with the one or more respective battery parameters associated with the battery system of the respective vehicle (e.g., the aerial vehicle 112). The performance prediction module 306 is also configured to generate an energy overlay representing the predicted energy expenditure of the respective vehicle. Furthermore, in various contexts, the performance prediction module 306, in conjunction with a performance monitor 304 of the onboard VBSA system 301, is configured to determine that a current energy expenditure of the vehicle does not match a predicted energy expenditure associated with particular trip plan being executed by the vehicle.

The performance prediction module 306 comprises one or more statistical, algorithmic, and/or ML models associated with the onboard VBSA system 301. In some contexts, the performance prediction module 306 comprises one or more math models, rule expression models and/or specialized deep learning neural networks. In various other contexts, the performance prediction module 306 comprises a time series data analysis model. In one or more embodiments, the performance prediction module 306 comprises a vehicle performance prediction model.

The vehicle performance prediction model refers to an ML model associated with the performance prediction module 306 of an onboard VBSA system 301. In various contexts, the vehicle performance prediction model is configured as a deep learning neural network such as an artificial neural network, (ANN), recurrent neural network (RNN), convolutional neural network (CNN), and/or any other specialized deep learning neural network. In various contexts, the vehicle performance prediction model is configured predict an energy expenditure associated with a respective vehicle. The vehicle performance prediction model is also configured to generate an energy overlay representing the predicted energy expenditure of the respective vehicle. In various contexts, the predicted energy overlay corresponds to one or more defined travel legs between two or more waypoints associated with a trip plan associated with the vehicle. The predicted energy overlay is configured to display over a respective electronic display 308 associated with one or more computing devices depicting an environment of the vehicle (e.g., the aerial vehicle 112) and/or one or more electronic displays associated with the vehicle operations center 314.

As a non-limiting example, the predicted energy overlay can be configured in a first-person perspective characterized by the trip plan such that a predicted energy expenditure of the vehicle associated with one or more defined travel legs between a current location of the vehicle and one or more upcoming waypoints associated with the trip plan can be visualized relative to a current heading, altitude, and/or velocity of the vehicle. As such, the predicted energy overlay can be displayed via an electronic display associated with one or more respective computing devices associated with the vehicle (e.g., a primary flight display of an aerial vehicle 112) and/or one or more respective computing devices associated with the vehicle operations center 314.

As another non-limiting example, the predicted energy overlay can be configured in an overhead perspective characterized by the trip plan such that the one or more defined travel legs between two or more waypoints associated with the trip plan can be visualized relative to a current position of the vehicle on a map. For example, the predicted energy overlay can be configured to be displayed via an electronic display associated with one or more computing devices associated with a navigation system associated with the vehicle. As such, the predicted energy overlay can be displayed over an electronic map and may correspond to a current route of the vehicle (e.g., a route associated with the trip plan), one or more waypoints (e.g., waypoints defined by the trip plan), one or more travel hubs (e.g., candidate travel hubs and/or an optimal travel hub), and/or one or more environmental features (e.g., buildings, natural features, and/or obstacles) related to the location of the vehicle. As such, the predicted energy overlay associated with the predicted energy expenditure of the vehicle can be configured in a number of various perspectives and/or views based at least in part on the one or more computing devices being used to display the predicted energy overlay.

Furthermore, the predicted energy overlay is color-coded based on one or more predicted values associated with one or more battery parameters associated with a battery system (e.g., a current SoC, SoH, and/or SoF) of the vehicle related to the predicted energy expenditure of the vehicle based at least in part on the trip plan being executed by the vehicle and/or a remaining distance to cover between a current location of the vehicle and a final destination associated with the trip plan. In a first non-limiting example scenario, if a vehicle (e.g., an aerial vehicle 112) is predicted to have a certain energy level (e.g., a certain SoC associated with the battery system) when arriving at a final destination (e.g., a predicted energy level corresponding to 30% of an available energy capacity of the battery system) and the predicted energy level associated with the final destination is above a predefined battery reserve requirement (e.g., a battery reserve requirement of 15%), the predicted energy overlay associated with one or more travel legs to be covered enroute to the final destination may be colored green.

However, in a second non-limiting example scenario, if, due to an adverse situation (e.g., related to a battery malfunction and/or suboptimal environmental factors), the battery discharge is faster than usual and the onboard VBSA system 301 determines (e.g., predicts) that the vehicle (e.g., the aerial vehicle 112) will not reach the final destination with an energy level that was originally predicted (e.g., a predicted energy level corresponding to 30% of an available energy capacity of the battery system), the onboard VBSA system 301 may associate the predicted energy level originally corresponding with the final destination (e.g., the predicted energy level of 30%) with an intermediate waypoint (e.g., a closer waypoint to the vehicle) of an upcoming travel leg. As such, in various contexts, the predicted energy overlay may only be colored green when associated with one or more travel legs to be covered prior to reaching the intermediate waypoint now associated with the predicted energy level that originally corresponded to the final destination (e.g., the predicted energy level of 30%).

Furthermore, in response to determining that the vehicle (e.g., the aerial vehicle 112) will not reach the final destination with an energy level that was originally predicted (e.g., the predicted energy level corresponding to 30%), the onboard VBSA system 301 may determine (e.g., predict) at which point during the trip plan the predicted energy expenditure of the vehicle will reach and/or fall below a predefined battery reserve requirement associated with the vehicle (e.g., a battery reserve requirement of 15%). As such, the predicted energy overlay associated with one or more travel legs to be covered after passing the intermediate waypoint now associated with the predicted energy level originally corresponding to the final destination (e.g., the predicted energy level of 30%) may be shown in yellow. In such a context, the predicted energy overlay may be shown in yellow until the predicted energy expenditure of the vehicle reaches a point (e.g., a respective waypoint) in the trip plan associated with the predefined battery reserve requirement (e.g., the battery reserve requirement of 15%). The predicted energy overlay associated with any travel legs and/or waypoints associated with a predicted energy expenditure falling below the predefined battery reserve requirement (e.g., the battery reserve requirement of 15%) may be colored red.

Additionally or alternatively, in various embodiments, the predicted energy overlay may be characterized by one or more shading schemes, patterns, transparencies, and/or gradients associated with a predicted energy expenditure associated with a particular vehicle that is executing a respective trip plan. Furthermore, in various embodiments, the color-coding, shading schemes, patterns, transparencies, and/or gradients associated with the predicted energy overlay may be configured based on one or more system configuration preferences defined for a particular VBSA platform 300 (e.g., defined via the vehicle operations center apparatus 316).

The vehicle performance prediction model is also configured to determine, generate, and/or cause transmission of one or more recommendations in response to receiving model output generated by the performance monitor 304. The vehicle performance prediction model in some contexts is configured to execute, or cause execution, of the one or more recommendations based on one or more rules. For example, in one or more embodiments, the vehicle performance prediction model, in some contexts, directs the vehicle apparatus 200 to execute the one or more recommendations by operating, updating configurations for, and/or otherwise controlling one or more respective vehicle system(s) associated with a vehicle (e.g., a battery system associated with the aerial vehicle 112).

As described herein, a recommendation represents one or more suggested actionable measures that in some contexts is executed to address one or more adverse situations impacting the operation of a vehicle to revert the vehicle from an adverse state back into a nominal state. In some embodiments, a recommendation embodies model output generated by the vehicle performance prediction model. Recommendations in some contexts are configured to be human-readable and is rendered via a respective electronic interface associated with one or more computing devices such as, for example a vehicle apparatus associated with the vehicle and/or a vehicle operations center apparatus 316 associated with the vehicle operations center 314. For example, in some contexts, one or more recommendations can be rendered in an operational recommendation interface associated with one or more respective electronic displays 308 associated with the vehicle (e.g., the aerial vehicle 112) and/or the vehicle operations center apparatus 316.

In various contexts, a recommendation may be associated with one or more of one or more candidate travel hubs and/or an optimal travel hub determined by the onboard VBSA system 301. For example, in various contexts, a particular recommendation may be a recommendation to navigate the vehicle to the nearest candidate travel hub in response to determining that an adverse situation is impacting the operation of the vehicle (e.g., a failure of a particular vehicle system). As another non-limiting example, a particular recommendation may be a recommendation to switch the vehicle into an economy operational mode in response to determining that the batteries associated with the vehicle are discharging at an unexpected rate.

In various embodiments, recommendations are executed automatically by the onboard VBSA system 301. In various other embodiments, the recommendations in some contexts are confirmed by an operator of the vehicle, where confirmation is a selection indication associated with the recommendations generated via one or more computing devices and where the confirmation causes execution of the recommendations. Executing a recommendation comprises operating one or more systems associated with the vehicle to control the operation of the vehicle. In some embodiments, the execution of a recommendation must be confirmed via a computing device (e.g., a vehicle apparatus 200 or a vehicle operations center apparatus 316). In various other embodiments, recommendations in some contexts are automatically executed depending on the criticality of the corresponding adverse situation impacting the operation of the vehicle.

Additionally, the vehicle performance prediction model in some contexts determines which recommendations of a set recommendations will have the greatest positive effect on the current situation associated with a vehicle being impacted by one or more adverse situations. For example, in some embodiments, the vehicle performance prediction model ranks one or more recommendations of the set of recommendations based at least in part on a predicted result associated with the execution of the one or more recommendations. For instance, a first recommendation in some contexts is ranked higher relative to a second recommendation based at least in part on a predicted result associated with the first recommendation.

Furthermore, the vehicle performance prediction model is configured to determine, in conjunction with the performance monitor 304, if the one or more recommendations that were executed have successfully reverted the vehicle back to a nominal state from an adverse state. For example, if the vehicle performance prediction model determines, in conjunction with the performance monitor 304, that a first set of recommendations generated based on a first set of rules have been executed but the vehicle remains in the adverse state (or has entered into a new adverse state), the vehicle performance prediction model can cause generation of a second set of recommendations with which to mitigate the one or more adverse situations impacting the operation of the vehicle.

A vehicle performance prediction model associated with the onboard VBSA system 301, in some contexts, is iteratively retrained and/or otherwise updated based on data related to one or more vehicles associated with the VBSA platform 300. For example, the vehicle performance prediction model in some contexts is trained and/or retrained based in part on one or more portions of vehicle performance data related to one or more vehicles associated with one or more respective enterprises related to the VBSA platform 300. Additionally or alternatively, the vehicle performance prediction model, in some contexts, is also trained and/or retrained based in part on one or more portions of adverse situation mitigation data. The adverse situation mitigation data comprises but is not limited to data related to the one or more adverse situations that caused a particular vehicle to enter into an adverse state and/or data related to one or more respective rules and/or recommendations with which the onboard VBSA system 301 employed to mitigate the one or more adverse situations.

In this way, the vehicle performance prediction model in some contexts is constantly updated based on a global corpus of vehicle performance data and/or adverse situation mitigation data related to many vehicles associated with many respective enterprises. As such, the vehicle performance prediction model is consistently improving in both accuracy and efficiency. In certain embodiments, the vehicle performance prediction model is retrained and/or otherwise updated on a predefined schedule such as, for example, daily, weekly, bi-weekly, monthly, and/or the like.

The electronic displays 308 associated with the onboard VBSA system 301 may comprise, in various contexts, one or more cockpit displays, one or more vertical situation displays (VSDs), one or more PFDs, one or more displays associated with an FMS, one or more displays associated with a navigation system, one or more displays associated with one or more respective LRUs, one or more computer displays, and/or the like. In various contexts, the one or more electronic displays 308 can be associated with one or more computing devices associated with the vehicle operations center 314.

The performance database 310 is configured to store and/or manage one or more portions of data related to vehicle operation data, vehicle performance data, vehicle sensor data, adverse situation data, nominal state data, adverse state data, and/or the like associated with one or more current or previously executed trip plans associated with one or more respective vehicles (e.g., aerial vehicles 112) associated with the VBSA platform 300. In various embodiments, the performance database 310 can be embodied by an aerial vehicle 112 and/or associated with the onboard VBSA system 301 associated with the aerial vehicle 112. In various contexts, the performance database 310 can receive one or more portions of data from a particular vehicle (e.g., an aerial vehicle 112) via the network 110. Furthermore, the one or more portions of aforementioned data can be associated with a vehicle identifier of a respective vehicle (e.g., an aerial vehicle 112). As such, the one or more portions of data comprised in the performance database 310 can be used to train, re-train, and/or otherwise update one or more ML models comprised in the performance prediction module 306 of the respective vehicle. In this way, the one or more ML models comprised in the performance prediction module 306 (e.g., a vehicle performance prediction model) associated with a particular vehicle (e.g., a particular aerial vehicle 112) can be iteratively trained such that the accuracy, efficiency, and/or performance of said ML models are increased over time. In various contexts, the one or more portions of aforementioned data comprised in the performance database 310 can be used (e.g., by the vehicle performance prediction model) to predict an energy expenditure of a particular vehicle (e.g., the aerial vehicle 112) based at least in part on a respective trip plan to be executed by the particular vehicle.

The navigation database 312 is configured to store and/or manage one or more portions of data related to one or more travel hubs, one or more travel routes, one or more waypoints, one or more destinations, one or more locations, one or more environmental features, one or more obstacles, and/or one or more portions of logistical information that may impact, aid, facilitate, enhance, and/or otherwise pertain to one or more trip plans associated with one or more respective vehicles associated with the VBSA platform 300. Furthermore, the navigation database 312, in various embodiments, is configured to store and/or manage one or more portions of data associated with the environment data systems 108 and/or the vehicle operation management systems 106. In various embodiments, the navigation database 312 can be embodied by an aerial vehicle 112 and/or associated with the onboard VBSA system 301 associated with the aerial vehicle 112.

In various embodiments, the performance database 310 and/or the navigation database 312 can be configured as cloud-based storage systems. As such, the one or more portions of data comprised in the performance database 310 and/or the navigation database 312 can be accessed, retrieved, updated, and/or managed by the vehicle apparatus 200 via the network 110. Additionally or alternatively, in various embodiments, the one or more portions of data comprised in the performance database 310 and/or the navigation database 312 can be accessed, retrieved, updated, and/or managed by the vehicle operations center apparatus 316 via the network 110. Additionally or alternatively, the one or more portions of data comprised in the performance database 310 and/or the navigation database 312 can, in various contexts, be stored locally in the vehicle apparatus 200 and/or the vehicle operations center apparatus 316.

As described herein, in various embodiments, the VBSA platform 300 comprises a vehicle operations center 314 configured for the offboard management and control of a fleet of vehicles associated with an enterprise. In this regard, the VBSA platform 300 is configured as a distributed management system such that one or more vehicles integrate with a respective onboard VBSA system 301 communicably coupled to the vehicle operations center 314. The vehicle operations center 314, in conjunction with a particular instance of the onboard VBSA system 301 associated with a particular vehicle (e.g., an aerial vehicle 112), is configured to monitor, manage, and/or improve the performance of the particular vehicle by providing VBSA to one or more operators associated with the particular vehicle. The vehicle operations center 314 and one or more onboard VBSA system(s) 301 associated with one or more respective vehicles remain in constant contact and are configured to transmit and/or receive data related to the operation of the one or more vehicles via the network 110. The vehicle operations center 314 comprises one or more computing device(s) (e.g., the vehicle operations center apparatus 316), one or more machine learning (ML) model(s), and/or one or more datastore(s) (e.g., the datastore 318) configured to monitor and/or manage one or more vehicles.

In various embodiments, the onboard VBSA system 301 associated with a respective vehicle (e.g., an electric aerial vehicle) can transmit one or more portions of data to the vehicle operations center 314 via the network 110. For example, the onboard VBSA system 301 can be configured to transmit one or more portions of data related to a current energy expenditure of the vehicle, one or more current values associated with one or more respective battery parameters associated with a battery system of the vehicle, data related to an adverse situation, and/or the like. In this regard, in various embodiments, the vehicle operations center apparatus 316 of the vehicle operations center 314 can be configured to execute one or more operations associated with the onboard VBSA system 301. For example, in various contexts such as, for example, when an electric aerial vehicle is completely autonomous, the vehicle operations center apparatus 316 can be configured to perform at least a portion of the processing associated with the onboard VBSA system 301 associated with the electric aerial vehicle. As such, the computational resources needed by the electronic aerial vehicle may be advantageously reduced.

FIG. 4 illustrates an example vehicle operations center apparatus 316 associated with the vehicle operations center 314 in accordance with at least some example embodiments of the present invention. As depicted in FIG. 4, the vehicle operations center apparatus 316 comprises processing circuitry 402, data storage circuitry 404, input/output circuitry 406, communications circuitry 408, remote vehicle control circuitry 410, mission management circuitry 412, fleet management circuitry 414, ML model circuitry 416, and/or one or more electronic displays 418. In some embodiments, other elements of the vehicle operations center apparatus 316 provide or supplement the functionality of another particular set of circuitry. For example, the processing circuitry 402 in some embodiments provides processing functionality to any of the other sets of circuitry, the data storage circuitry 404 provides storage functionality to any of other the sets of circuitry, the communications circuitry 408 provides network interface functionality to any of the other sets of circuitry, and/or the like. Additionally or alternatively, in various embodiments, the vehicle operations center apparatus 316 is configured to control, configure, and/or otherwise operate one or more of the circuitries 202-214 of the vehicle apparatus 200 illustrated in FIG. 2 via the network 110. Additionally or alternatively, the vehicle operations center apparatus 316 is configured to control, configure, and/or otherwise operate the one or more aerial vehicle onboard system(s) 102 associated with a vehicle (e.g., the aerial vehicle 112), as well as the other connected vehicle system(s) 104.

In some embodiments, the processing circuitry 402 (and/or co-processor or any other processing circuitry assisting or otherwise associated with the processor) is/are in communication with the data storage circuitry 404 via a bus for passing information among components of the vehicle operations center apparatus 316. In some embodiments, for example, the data storage circuitry 404 is non-transitory and includes for example, one or more volatile and/or non-volatile memories. In other words, for example, the data storage circuitry 404 in some embodiments includes or embodies an electronic storage device (e.g., a computer readable storage medium). In some embodiments, the data storage circuitry 404 is configured to store information, data, content, applications, instructions, or the like, for enabling the vehicle operations center apparatus 316 to carry out various functions in accordance with example embodiments of the present invention. In various embodiments, the data storage circuitry 404 is configured to access, retrieve, store, delete, and/or otherwise manage one or more portions of data in the performance database 310, the navigation database 312, and/or the datastore 318.

In various embodiments, the processing circuitry 402 is embodied in a number of different ways. For example, in some example embodiments, the processing circuitry 402 includes one or more processing devices configured to perform independently. Additionally or alternatively, in some embodiments, the processing circuitry 402 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the vehicle operations center apparatus 316, and/or one or more remote or "cloud" processor(s) external to the vehicle operations center apparatus 316.

In an example embodiment, the processing circuitry 402 is configured to execute instructions stored in the data storage circuitry 404 or otherwise accessible to the processing circuitry 402. Alternatively or additionally, the processing circuitry 402 in some embodiments is configured to execute hard-coded functionality. As such, whether configured by hardware or software methods, or by a combination thereof, the processing circuitry 402 represents an entity (e.g., physically embodied in circuitry) capable of performing operations according to an embodiment of the present invention while configured accordingly. Alternatively or additionally, as another example in some example embodiments, when the processing circuitry 402 is embodied as an executor of software instructions, the instructions specifically configure the processing circuitry 402 to perform the algorithms embodied in the specific operations described herein when such instructions are executed.

As one particular example embodiment, the processing circuitry 402 is configured to perform various operations associated with responding to one or more requests received from a vehicle (e.g., requests generated via the onboard VBSA system 301). In some embodiments, the processing circuitry 402 includes hardware, software, firmware, and/or a combination thereof, that receives data including one or more portions of vehicle performance data, vehicle sensor data, vehicle operation data, environmental data, logistical data, and/or data related to one or more adverse situations impacting the operation of the vehicle. Additionally or alternatively, in some embodiments, the processing circuitry 402 includes hardware, software, firmware, and/or a combination thereof, that causes rendering one or more recommendations generated by the vehicle performance prediction model of the onboard VBSA system 301 via one or more electronic interfaces associated with the vehicle operations center apparatus 316 and/or one or more electronic interfaces associated with other computing devices related to the vehicle operations center 314 and/or the VBSA platform 300. Additionally or alternatively, in some embodiments, the processing circuitry 402 includes hardware, software, firmware, and/or a combination thereof, that in real-time updates rendering of a user interface and/or interface element(s) thereof in response to updated data related to the one or more adverse situations and/or one or more portions of data associated with the operation of the vehicle.

In some embodiments, vehicle operations center apparatus 316 includes data storage circuitry 404 that is configured to store, update, retrieve, delete, and/or otherwise manage one or more portions of data associated with the performance database 310 and/or navigation database 312 of the VBSA platform 300, and/or the datastore 318 associated with the vehicle operations center 314. As described herein, the data storage circuitry 404, in some contexts, stores and/or retrieves one or more computer program instructions associated with the one or more operations described herein. In various embodiments, the data storage circuitry 404 embodies, or integrates with, a server system, a cloud storage system, a collection of databases, one or more datastores, and/or any other type of non-transitory storage medium. In certain embodiments, the data storage circuitry 404 stores one or more portions of data obtained from the vehicle operation management system(s) 106 and/or the environment data system(s) 108, as well as any data related to any predicted energy expenditures, current energy expenditures, and/or adverse situations associated with the vehicle (e.g., the aerial vehicle 112). Additionally, in some embodiments, the data storage circuitry 404 is configured to store, update, retrieve, delete, and/or otherwise maintain any training data associated with a vehicle performance prediction model associated with the performance prediction module 306.

In some embodiments, vehicle operations center apparatus 316 includes input/output circuitry 406 that provides output to the user and, in some embodiments, to receive an indication of a user input (e.g., user input generated by a remote operator, ground crew member, and/or the like). In some embodiments, the input/output circuitry 406 is in communication with the processing circuitry 402 to provide such functionality. The input/output circuitry 406 comprises one or more user interface(s) and in some embodiments includes an electronic display that comprises the interface(s) rendered as a web user interface, an application user interface, a user device, a backend system, or the like. In some embodiments, the input/output circuitry 406 also includes a keyboard, a mouse, a joystick, a touch screen, touch areas, soft keys a microphone, a speaker, or other input/output mechanisms. The processing circuitry 402, and/or input/output circuitry 406 comprising a processor, in some embodiments is configured to control one or more functions of one or more interface elements through computer program instructions (e.g., software and/or firmware) stored on a memory accessible to the processing circuitry 402 (e.g., data storage circuitry 404, and/or the like). In some embodiments, the input/output circuitry 406 includes or utilizes a user-facing application to provide input/output functionality to a computing device and/or other display associated with a user. In some embodiments, the input/output circuitry 406 includes a primary flight display and/or a multi-function display associated with a vehicle (e.g., an aerial vehicle 112). Additionally or alternatively, in some embodiments, the input/output circuitry 406 includes one or more software-rendered user interface(s) including interface element(s) that depict particular data and/or information, and/or that receive user input. Additionally or alternatively, in some embodiments, the input/output circuitry 406 embodies, integrates with, and/or is otherwise associated with one or more electronic displays 418.

The communications circuitry 408 includes any means such as a device or circuitry embodied in either hardware or a combination of hardware and software that is configured to receive and/or transmit data from/to a communications network and/or any other computing device, circuitry, or module in communication with the vehicle operations center apparatus 316. In this regard, the communications circuitry 408 includes, for example in some embodiments, a network interface for enabling communications with a wired or wireless communications network. Additionally or alternatively in some embodiments, the communications circuitry 408 includes one or more network interface card(s), antenna(s), bus(es), switch(es), router(s), modem(s), and supporting hardware, firmware, and/or software, or any other device suitable for enabling communications via one or more communications network(s) (e.g., the network 110). Additionally or alternatively, the communications circuitry 408 includes circuitry for interacting with the antenna(s) and/or other hardware or software to cause transmission of signals via the antenna(s) or to handle receipt of signals received via the antenna(s). In some embodiments, the communications circuitry 408 enables transmission to and/or receipt of data from one or more computing device(s) and/or system(s) of other connected vehicle system(s) 104, vehicle operation management system(s) 106, and/or environment data system(s) 108, in communication with the vehicle operations center apparatus 316.

The remote vehicle control circuitry 410 includes hardware, software, firmware, and/or a combination thereof, that supports functionality associated with navigating and/or controlling a vehicle (e.g., an aerial vehicle 112) remotely from the vehicle operations center 314. In some embodiments, remote vehicle control circuitry 410 controls and/or configures one or more of the aerial onboard system(s) 102 associated with the vehicle. In some embodiments, remote vehicle control circuitry 410 includes hardware, software, firmware, and/or a combination thereof, that receives trip plan data (e.g., embodying a flight plan), location service(s) data representing a location of the vehicle, and/or the like. Additionally or alternatively, in some embodiments, the remote vehicle control circuitry 410 includes hardware, software, firmware, and/or a combination thereof, that depicts interface element(s) representing at least a flight path or indication where the vehicle is currently travelling and/or should travel.

Additionally or alternatively, in some embodiments, the remote vehicle control circuitry 410 includes hardware, software, firmware, and/or a combination thereof, that autonomously control(s) one or more component(s) of a vehicle (e.g., an aerial vehicle 112). In some such embodiments, the remote vehicle control circuitry 410 autonomously control(s) one or more physical component(s) of the vehicle to facilitate movement of the vehicle along a particular path. Alternatively or additionally, in some embodiments, the remote vehicle control circuitry 410 includes hardware, software, firmware, and/or a combination thereof, that semi-autonomously control(s) one or more component(s) of an aerial vehicle 112, for example where certain aspects of the operation of the vehicle are autonomously performed and others (e.g., directional control) is/are controlled by a user (e.g., a remote operator). Alternatively or additionally, in some embodiments, the remote vehicle control circuitry 410 includes hardware, software, firmware, and/or a combination thereof, that receives remote operator input for controlling one or more component(s) of a vehicle, for example via vehicle flight control(s) to alter speed and/or direction of the vehicle. Alternatively or additionally, in some embodiments, the remote vehicle control circuitry 410 includes hardware, software, firmware, and/or a combination thereof, that causes changes to an operational mode of a vehicle (e.g., an aerial vehicle 112), for example autonomously based at least in part on one or more data-driven adverse situation(s) and/or triggers, or in response to user input initiating the change in operational mode. It will be appreciated that, in some embodiments, the remote vehicle control circuitry 410 includes a separate processor, specially configured field programmable gate array (FPGA), or a specially programmed application specific integrated circuit (ASIC).

The mission management circuitry 412 includes hardware, software, firmware, and/or a combination thereof, that supports functionality associated with generating, receiving, configuring, and/or otherwise managing data related to the mission of one or more vehicle(s) associated with the VBSA platform 300. For example, the mission management circuitry 412 is configured to generate and/or manage one or more vehicle operation constraints associated with the operation of a vehicle. Vehicle operation constraints include, but are not limited to, constraints related to the configuration of one or more vehicle systems associated with the vehicle, constraints related to a trip plan (e.g., destinations, waypoints, flight paths, arrival/departure schedules and/or procedures, traffic management constraints, trip parameters, and/or the like), power consumption constraints (e.g., battery and/or fuel consumption thresholds), specific vehicle constraints (e.g., performance capabilities associated with one or more vehicle systems of the aerial vehicle 112), environmental constraints (e.g., regulations related to operating an aerial vehicle 112 in an urban environment), and/or the like. In various embodiments, the one or more vehicle operation constraints in some contexts are rendered via a respective electronic interface associated with the vehicle apparatus 200 and/or the vehicle operations center apparatus 316.

Additionally, the mission management circuitry 412 includes hardware, software, firmware, and/or a combination thereof, that supports functionality associated with handling one or more logistical aspects of the one or more vehicles (e.g., the one or more aerial vehicle(s) 112) associated with the VBSA platform 300. Non-limiting examples include monitoring the logistical aspects of one or more destinations (e.g., one or more travel hubs, airports, vertiports, etc.) associated with a trip plan of a vehicle (e.g., an aerial vehicle 112). For example, the mission management circuitry 412 in some contexts monitors occupancy (e.g., available facilities to accommodate an aerial vehicle 112) associated with a destination. Additionally or alternatively, the mission management circuitry 412 in some contexts determines logistical aspects related to potential destinations such as nearby health and safety services.

The fleet management circuitry 414 includes hardware, software, firmware, and/or a combination thereof, that supports functionality associated with the management of a fleet of vehicles (e.g., aerial vehicle(s) 112) associated with an enterprise related to the VBSA platform 300. In various embodiments, the fleet management circuitry 414 includes hardware, software, firmware, and/or a combination thereof, that monitors the location, operational status, health, performance, and/or capabilities of one or more vehicle(s) associated with the VBSA platform 300. In this regard, the fleet management circuitry 414 generates one or more portions of fleet management data configured as model input for the vehicle performance prediction model.

The ML model circuitry 416 includes hardware, software, firmware, and/or a combination thereof, that supports functionality associated with the one or more ML models associated with the performance prediction module 306 (e.g., the vehicle performance prediction model). For example, the ML model circuitry 416 executes, at least in part, one or more portions of program code associated with the methods and operations of the vehicle performance prediction model. For example, the ML model circuitry 416 includes hardware, software, firmware, and/or a combination thereof, that receives and/or analyzes one or more portions of model input comprising vehicle performance data, vehicle sensor data, vehicle operation data, vehicle system data, air traffic data, environmental data, logistical data, personnel data, and/or any other relevant data related to a particular vehicle (e.g., a particular aerial vehicle 112). One or more portions of vehicle performance data is, in some contexts, generated in part by one or more components of the vehicle, one or more components of the vehicle operations center apparatus 316, and/or one or more of the environment data system(s) 108 and the vehicle operation management system(s) 106 associated with the vehicle operations center 314.

Additionally, in various embodiments, the ML model circuitry 416 includes hardware, software, firmware, and/or a combination thereof, that in some contexts is employed to train and/or retrain the vehicle performance prediction model based at least in part on one or more portions of adverse situation mitigation data and/or prior model input comprising one or more prior adverse situations, one or more prior portions of prior vehicle performance data, one or more portions of prior vehicle sensor data, one or more prior operator inputs, and/or one or more prior vehicle operation constraints. In various embodiments, the ML model circuitry 416 is configured to facilitate the training and/or retraining of the vehicle performance prediction model based in part on a predefined schedule such as, for example, daily, weekly, bi-weekly, monthly, and/or the like. In this regard, the ML model circuitry 416 includes hardware, software, firmware, and/or a combination thereof, that causes the storage, updating, retrieval, and/or the deletion of one or more portions of data associated with the vehicle performance prediction model.

The electronic displays 418 associated with the vehicle operations center apparatus 316 may comprise, in various contexts, one or more displays associated with a cockpit of a vehicle (e.g., an aerial vehicle 112), one or more vertical situation displays (VSDs), one or more PFDs, one or more displays associated with an FMS, one or more displays associated with a navigation system, one or more displays associated with one or more respective LRUs, one or more computer displays, and/or the like. The electronic displays 418 are configured to display one or more portions of data related to the energy expenditure of a vehicle (e.g., an aerial vehicle 112), one or more portions of data related to a predicted energy expenditure of the vehicle (e.g., the aerial vehicle 112), and/or one or more portions of data related to one or more adverse situations impacting the operation of the vehicle (e.g., the aerial vehicle 112). In various contexts, the one or more electronic displays 418 can be associated with one or more computing devices and/or data storage systems associated with the vehicle operations center 314.

It will be appreciated that, further in some embodiments, two or more of the sets of circuitries 402-418 are combinable. Alternatively or additionally, in some embodiments, one or more of the sets of circuitry 402-418 perform some or all of the functionality described associated with another component. For example, in some embodiments, one or more of the sets of circuitry 402-418 are combined into a single component embodied in hardware, software, firmware, and/or a combination thereof. For example, in some embodiments, two or more of the remote vehicle control circuitry 410 and ML model circuitry 416 are embodied by a single set of circuitry that performs the combined operations of the individual sets of circuitry. Similarly, in some embodiments, one or more of the sets of circuitry, for example remote vehicle control circuitry 410 and/or ML model circuitry 416 is/are combined with the processing circuitry 402, such that the processing circuitry 402 performs one or more of the operations described above with respect to each of these other sets of circuitry.

### OPERATIONAL EXAMPLES OF VARIOUS EMBODIMENTS OF THE INVENTION

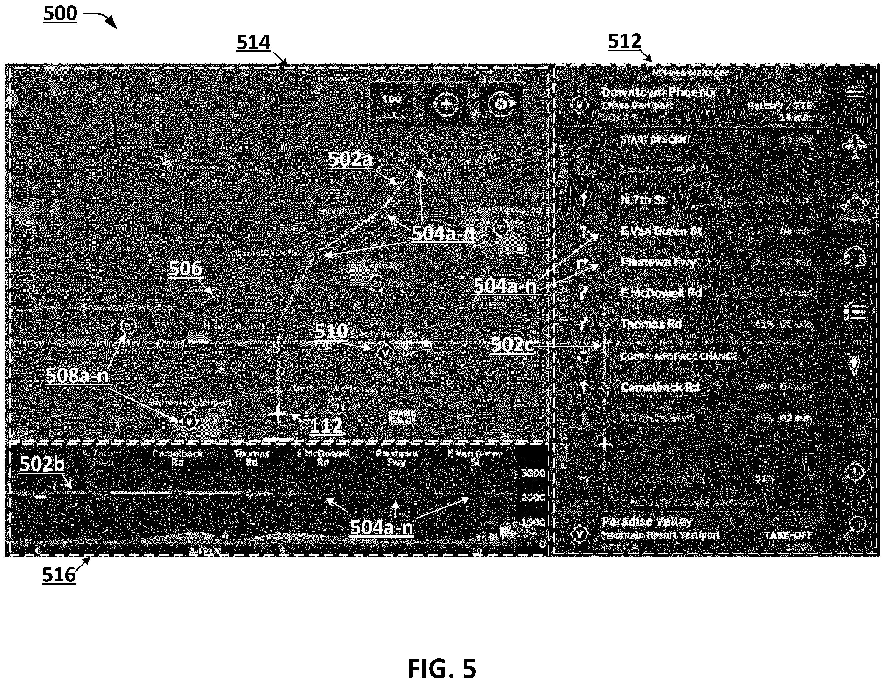

FIG. 5 illustrates an operational example of an electronic display configured to display one or more predicted energy overlays in accordance with at least some example embodiments of the present invention. Specifically, FIG. 5 illustrates a configuration of an electronic display 500. In various embodiments, the electronic display 500 may be an electronic display associated with one or more of a primary flight display (PFD), a flight management system (FMS), an electronic flight bag (EFB), a vehicle apparatus 200, a vehicle operations center apparatus 316, and/or one or more other computing devices associated with the vehicle battery situational awareness (VBSA) platform 300.

As shown in FIG. 5, the electronic display 500 has been configured to display a plurality of interface elements associated with a trip plan being executed by an aerial vehicle 112. The electronic display 500 has been divided into three main areas related to a mission manager 512, an electronic map 514, and a vertical situation display (VSD) 516 and a predicted energy overlay has been generated (e.g., via the vehicle performance prediction model associated with the aerial vehicle 112) for each of the mission manager 512, the electronic map 514, and the VSD 516.

As depicted in FIG. 5, a predicted energy overlay 502a has been configured in an overhead perspective characterized by the trip plan being executed such that a predicted energy expenditure of an aerial vehicle 112 for one or more defined travel legs between two or more waypoints 504a-n associated with the trip plan can be visualized relative to a current position of the aerial vehicle 112 on the electronic map 514. In various embodiments, the predicted energy overlay 502a can be configured to be displayed via the electronic display 500 associated with one or more computing devices associated with a navigation system associated with the vehicle. As such, the predicted energy overlay 502a can be displayed over the electronic map 514 and corresponds to a current route of the aerial vehicle 112 (e.g., a route associated with the trip plan being executed), one or more waypoints 504a-n (e.g., waypoints defined by the trip plan), one or more travel hubs (e.g., candidate travel hubs 508an and/or an optimal travel hub 510), and/or one or more environmental features (e.g., buildings, natural features, and/or obstacles) related to the location of the aerial vehicle 112.

As shown in FIG. 5, the predicted energy overlay(s) 502a-c may be color-coded based on one or more predicted values associated with one or more battery parameters associated with a battery system of the aerial vehicle 112 related to the predicted energy expenditure of the aerial vehicle 112 based at least in part on the trip plan being executed by the aerial vehicle 112 and/or a remaining distance to cover between a current location of the aerial vehicle 112 and a final destination associated with the trip plan. For example, if an aerial vehicle 112 is predicted to have a certain energy level (e.g., a certain SoC associated with the battery system) when arriving at a final destination (e.g., a predicted energy level corresponding to 30% of an available energy capacity of the battery system) and the predicted energy level associated with the final destination is above a predefined battery reserve requirement (e.g., a battery reserve requirement of 15%), the predicted energy overlay associated with one or more travel legs to be covered enroute to the final destination may be colored green.

However, if, due to an adverse situation (e.g., related to a battery malfunction and/or suboptimal environmental factors), the battery discharge is faster than usual and the onboard VBSA system 301 determines (e.g., predicts) that the aerial vehicle 112 will not reach the final destination with an energy level that was originally predicted (e.g., a predicted energy level corresponding to 30% of an available energy capacity of the battery system), the onboard VBSA system 301 may associate the predicted energy level originally corresponding with the final destination (e.g., the predicted energy level of 30%) with an intermediate waypoint (e.g., a closer waypoint to the aerial vehicle 112) of an upcoming travel leg. As such, in various contexts, the predicted energy overlay may only be colored green when associated with one or more travel legs to be covered prior to reaching the intermediate waypoint now associated with the predicted energy level that originally corresponded to the final destination (e.g., the predicted energy level of 30%).

Furthermore, in response to determining that the aerial vehicle 112 will not reach the final destination with an energy level that was originally predicted (e.g., the predicted energy level corresponding to 30%), the onboard VBSA system 301 may determine (e.g., predict) at which point during the trip plan the predicted energy expenditure of the aerial vehicle 112 will reach and/or fall below a predefined battery reserve requirement associated with the aerial vehicle 112 (e.g., a battery reserve requirement of 15%). As such, the predicted energy overlay associated with one or more travel legs to be covered after passing the intermediate waypoint now associated with the predicted energy level originally corresponding to the final destination (e.g., the predicted energy level of 30%) may be shown in yellow. In such a context, the predicted energy overlay may be shown in yellow until the predicted energy expenditure of the vehicle reaches a point (e.g., a respective waypoint) in the trip plan associated with the predefined battery reserve requirement (e.g., the battery reserve requirement of 15%). The predicted energy overlay associated with any travel legs and/or waypoints associated with a predicted energy expenditure falling below the predefined battery reserve requirement (e.g., the battery reserve requirement of 15%) may be colored red.

Additional color schemes related to the predicted energy overlay(s) 502a-n may also be configured to indicate various other information related to the trip plan being executed by the aerial vehicle 112. For example, the defined travel leg between the current location of the aerial vehicle 112 and a next waypoint 504a-n may be colored magenta. Additionally or alternatively, in various embodiments, the predicted energy overlay(s) 502a-n may be characterized by one or more shading schemes, patterns, transparencies, and/or gradients associated with a predicted energy expenditure associated with the aerial vehicle 112 executing the respective trip plan. Furthermore, in various embodiments, the color-coding, shading schemes, patterns, transparencies, and/or gradients associated with the predicted energy overlay may be configured based on one or more system configuration preferences defined for a particular VBSA platform 300 (e.g., defined via the vehicle operations center apparatus 316).

As depicted in FIG. 5, a predicted energy overlay 502b can be configured to display over a VSD 516. In various embodiments, the VSD 516 can be generated by the onboard VBSA system 301 and rendered via one or more electronic displays associated with the aerial vehicle 112 (e.g., electronic displays 308) and/or the vehicle operations center 314 (e.g., electronic displays 418). In various other embodiments, the VSD 516 may be a standalone computing devices (e.g., configured as a line replaceable unit (LRU)) and integrated in the cockpit of the aerial vehicle 112. The VSD 516 may be configured to display one or more environmental features and/or obstacles relative to the current route of the aerial vehicle 112 (e.g., the route associated with the trip plan being executed by the aerial vehicle 112). The VSD 516 may also be configured to display a current altitude of the aerial vehicle 112. In this way, the predicted energy overlay 502b is configured to inform an operator of the aerial vehicle 112 at which point during the current trip plan that various environmental features and/or obstacles may present a heightened risk to the aerial vehicle 112 (as well as any passengers and/or payload) depending on the predicted energy expenditure of the aerial vehicle 112. For example, based on the predicted energy overlay 502b displayed over the VSD 516, it may become apparent that the aerial vehicle 112 may reach critically low battery levels near a particular environmental feature (e.g., a mountain or hill) and/or an obstacle (e.g., radio towers, buildings, etc.) in the environment which the aerial vehicle 112 will be travelling through.

The onboard VBSA system 301 is also configured to generate a mission manager 512 associated with a current trip plan being executed by a respective aerial vehicle 112. In various embodiments, the mission manager 512 can be rendered on one or more electronic displays associated with one or more computing devices associated with the aerial vehicle 112 (e.g., the vehicle apparatus 200). Additionally or alternatively, the mission manager 512 can be rendered on one or more electronic displays associated with one or more computing devices associated with the vehicle operations center 314 (e.g., the vehicle operations center apparatus 316). As shown in FIG. 5, the mission manager 512 is configured to display details related to the predicted energy overlay 502c and the one or more waypoints 504a-n associated with the current trip plan. The mission manager 512 comprises a plurality of interactive interface elements configured to relay information such as, but not limited to, the location and/or street address associated with each respective waypoint 504a-n, a heading and/or turn to be made by the aerial vehicle 112 at each of the waypoints 504a-n, a predicted energy level of the aerial vehicle 112 corresponding to each of the waypoints 504a-n, an estimated travel time associated with each of the waypoints 504a-n, as well as a departure and arrival location associated with the trip plan.

As such, a predicted energy overlay (e.g., predicted energy overlay 502a-c) associated with the predicted energy expenditure of a vehicle (e.g., the aerial vehicle 112) can be configured in a number of various perspectives and/or views based at least in part on the one or more computing devices being used to display the predicted energy overlay (e.g., the mission manager 512, the electronic map 514, and/or the VSD 516).

In various contexts, the onboard VBSA system 301 is configured to determine and/or cause display of a safety boundary 506 associated with a vehicle (e.g., the aerial vehicle 112) via at least one or more electronic displays (e.g., electronic displays 308 and/or electronic displays 418) of one or more respective computing devices associated with the aerial vehicle 112 (e.g., the vehicle apparatus 200 and/or the vehicle operations center apparatus 316). As shown, the safety boundary 506 can be rendered on the electronic map 514 and centered over a representation of the aerial vehicle 112 based on the current location of the aerial vehicle 112. The safety boundary 506 is characterized by a maximum safe travel time associated with the aerial vehicle 112. The safety boundary 506 is determined based on at least one of one or more current values of one or more battery parameters associated with a battery system of the aerial vehicle 112, a current operational health of one or more vehicle systems, and/or a current location of the aerial vehicle 112. In various contexts, the safety boundary 506 can be determined based at least in part on one or more environmental factors (e.g., weather events, terrain limitations, obstacles, travel regulations for a given area, logistical limitations, and/or the like).

In various contexts, the onboard VBSA system 301 can generate a predicted energy overlay (e.g., the predicted energy overlays 502a-c) and/or a safety boundary (e.g., the safety boundary 506) in response to a determination that an adverse situation is impacting the operation of the vehicle (e.g., the aerial vehicle 112). Furthermore, in various contexts, in response to the determination that an adverse situation is impacting the operation of the vehicle (e.g., the aerial vehicle 112), the onboard VBSA system 301 may automatically cause the display of the predicted energy overlay (e.g., the predicted energy overlays 502a-c) and/or the safety boundary (e.g., the safety boundary 506) over one or more electronic displays (e.g., electronic displays 308) associated with the computing devices associated with a vehicle (e.g., the aerial vehicle 112) and/or one or more electronic displays (e.g., electronic displays 418) associated with the one or more computing devices associated with the vehicle operations center 314. For example, in a scenario in which the one or more electronic displays 308 and/or the one or more electronic displays 418 associated the one or more computing devices associated with the vehicle operations center 314 are displaying other unrelated information, the onboard VBSA system 301 may be configured to automatically override the one or more electronic displays to display one or more of the predicted energy overlays and/or the safety boundary in order to bring attention to the adverse situation impacting the operation of the respective vehicle.

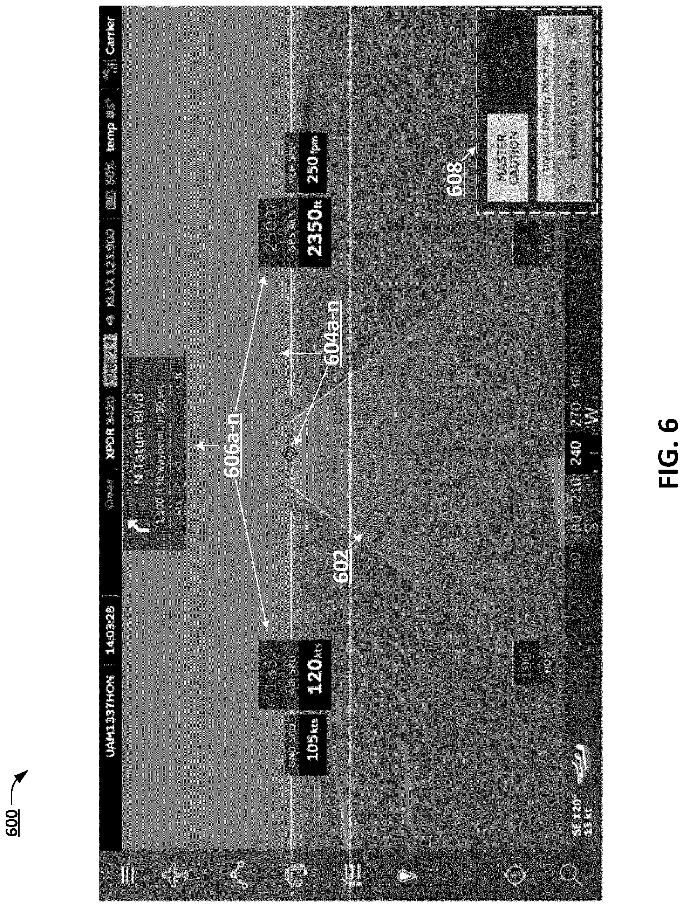

FIG. 6 illustrates an operational example of an electronic interface 600 associated with a PFD configured to display a first-person predicted energy overlay 602 in accordance with at least some example embodiments of the present invention. As described herein, the onboard VBSA system 301 may be configured to generate a first-person predicted energy overlay 602 configured in a first-person perspective characterized by the trip plan such that a predicted energy expenditure of the vehicle (e.g., the aerial vehicle 112) associated with one or more defined travel legs between a current location of the vehicle (e.g., the aerial vehicle 112) and one or more upcoming waypoints 604a-n associated with the trip plan can be visualized relative to a current heading, altitude, and/or velocity of the vehicle (e.g., the aerial vehicle 112). As such, the first-person predicted energy overlay 602 can be displayed via an electronic display (e.g., an electronic display 800) associated with one or more respective computing devices (e.g., a PFD of an aerial vehicle).

As the first-person predicted energy overlay 602 is configured in a first-person perspective and may be rendered on a PFD of a vehicle (e.g., an aerial vehicle 112), the first-person predicted energy overlay 602 also provides route guidance in addition to providing a visualization related to a predicted energy expenditure of the vehicle. In this regard, the first-person predicted energy overlay 602 serves as a control reference for the vehicle (e.g., the aerial vehicle 112). For example, based on the first-person predicted energy overlay 602, it can be determined that the vehicle (e.g., the aerial vehicle 112) is on the correct heading and/or at the correct altitude.

Furthermore, based on the color-coding, pattern, and/or gradient scheme associated with the first-person predicted energy overlay 602, changes to the velocity and/or other operational configurations of the vehicle (e.g., the aerial vehicle 112) may be reflected by the first-person predicted energy overlay 602. For example, if the vehicle (e.g., the aerial vehicle 112) diverges from a nominal or predefined optimal velocity for a particular trip plan being executed by the vehicle (e.g., the velocity of the aerial vehicle 112 increases), the onboard VBSA system 301 may update the predicted energy expenditure of the vehicle (e.g., the aerial vehicle 112) based on the increased velocity. As such, the coloration, pattern, and/or gradient of the first-person predicted energy overlay 602 for a respective travel leg between the current location of the vehicle (e.g., the aerial vehicle 112) and an upcoming waypoint 604a may change to reflect the updated predicted energy expenditure (e.g., the first-person predicted energy overlay 602 may change from green to yellow).

As shown in FIG. 6, the electronic interface 600 can also be configured to display one or more interactive interface elements 606a-n. In various contexts, the interactive interface elements 606a-n may display dynamic information related to the operation of a vehicle (e.g., the aerial vehicle 112). The one or more interactive interface elements 606a-n can be configured to display data related to one or more waypoints associated with the current trip plan being executed by the vehicle (e.g., the aerial vehicle 112), such as information about an upcoming waypoint of a sequence of waypoints associated with the trip plan. The one or more interactive interface elements 606a-n may comprise details about the upcoming waypoint including, but not limited to, a distance to the upcoming waypoint, an altitude of the upcoming waypoint, an estimated time of arrival to the upcoming waypoint, a location of the upcoming waypoint, and/or the like. Furthermore, the one or more interactive interface elements 606a-n may display one or more portions of vehicle operation data related to the current location, the current velocity (e.g., airspeed, groundspeed, vertical speed, etc.), the current heading, the current elevation of the vehicle (e.g., the aerial vehicle 112), and/or one or more portions of environmental data (e.g., windspeed, wind direction, and/or the like).

As shown in FIG. 6, the electronic interface 600 can also be configured to display an operational recommendation interface 608. The operational recommendation interface 608 may be configured to display one or more recommendations, alerts, warnings, notifications, vehicle statuses, vehicle battery discharge statues, vehicle states, and/or messages related to the vehicle (e.g., the aerial vehicle 112). In some contexts, the operational recommendation interface 608 can display the one or more display one or more recommendations, alerts, warnings, notifications, vehicle statuses, vehicle battery discharge statues, vehicle states, and/or messages in response to detecting (e.g., via the performance monitor 304 of the onboard VBSA system 301) that an adverse situation is impacting the operation of the vehicle (e.g., the aerial vehicle 112).

In various embodiments, the operational recommendation interface 608 comprises one or more interactive interface elements configured to facilitate an interaction with the onboard VBSA system 301. For example, the one or more interactive interface elements can be configured as an interactive button rendered on the electronic display (e.g., an electronic display 308 and/or an electronic display 418) that can cause the execution of one or more recommendations related to the operation of the vehicle (e.g., one or more recommendations generated by the vehicle performance prediction model).

As described herein, the vehicle performance prediction model associated with the onboard VBSA system 301 is configured to determine, generate, and/or cause transmission of one or more recommendations in response to receiving model output (e.g., vehicle performance data related to an adverse situation) generated by the performance monitor 304. For example, in one or more embodiments, the vehicle performance prediction model, in some contexts, directs the vehicle apparatus 200 to execute the one or more recommendations by operating, updating configurations for, and/or otherwise controlling one or more respective vehicle system(s) associated with a vehicle (e.g., a battery system associated with the aerial vehicle 112).

As shown in FIG. 6, the operational recommendation interface 608 comprises a "master caution" alert in addition to an interactive interface element configured as an interactive button that displays data related to a current adverse situation as well as a recommendation generated by the onboard VBSA system 301. As shown in the example scenario illustrated in FIG. 6, the onboard VBSA system 301 has detected an unexpected battery discharge associated with the battery system of the vehicle (e.g., the aerial vehicle 112) and, as such, the operational recommendation interface 608 recites "Unusual Battery Discharge" above the interactive button comprising the recommendation generated by the vehicle performance prediction model. As shown, the recommendation generated by the vehicle performance prediction model is to "Enable Eco Mode." An interaction with the interactive button (e.g., a selection interaction) causes the onboard VBSA system 301 (e.g., by way of the vehicle apparatus 200) to update, reconfigure, and/or otherwise control one or more systems associated with the vehicle such that the vehicle engages an economy operational mode. In various contexts, the economy operational mode may include reducing the velocity of the vehicle, reducing a number of battery cells used by the battery system of the vehicle, and/or terminating one or more unnecessary process associated with the vehicle that may drain the battery and/or fuel system of the vehicle.

In various other contexts, depending on the severity of a particular situation, the onboard VBSA system 301 may generate recommendations to direct the vehicle (e.g., the aerial vehicle 112) to execute an emergency navigation procedure. For example, the onboard VBSA system 301 may detect an adverse situation with a high severity level (e.g., a failure of one or more vehicle systems) impacting the operation of the vehicle (e.g., the aerial vehicle 112) and generate one or more recommendations to execute an emergency navigation procedure. In some contexts, an emergency navigation procedure involves executing an emergency landing procedure immediately after the adverse situation associated with the high severity is detected.

In various other contexts, an emergency navigation procedure comprises causing the vehicle (e.g., the aerial vehicle 112) to reroute to an alternative travel hub than was originally defined by the trip plan being executed by the vehicle. For example, in response to detecting an adverse situation impacting the vehicle such that that vehicle can still safely navigate to a nearby travel hub (e.g., an adverse situation associated with a low or moderate severity level), the onboard VBSA system 301 can automatically determine an optimal route to an optimal travel hub out of one or more candidate travel hubs for the vehicle to navigate to. In such a scenario, the onboard VBSA system 301 may generate a recommendation to land at the optimal travel hub and cause the display of the recommendation on the operational recommendation interface 608 as an interactive interface element (e.g., an interactive button). Accordingly, an interaction with the interactive interface element (e.g., a selection interaction) may engage (e.g., control) one or more vehicle systems associated with the vehicle such that the vehicle navigates to the optimal travel hub associated with the recommendation.

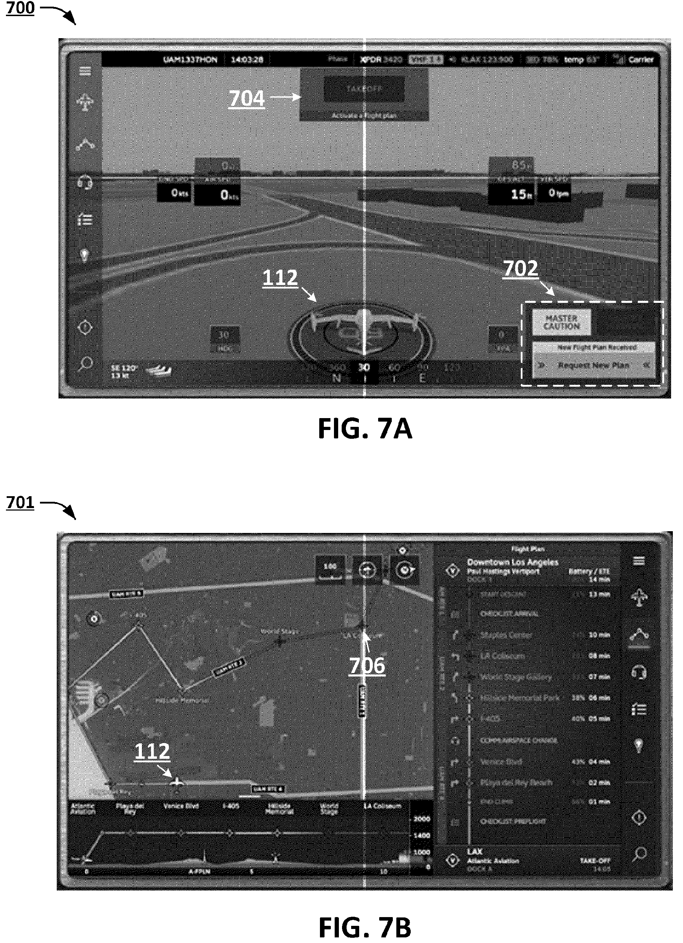

FIG(s). 7A-B illustrate operational examples of electronic displays and configured to display a third-person vehicle operation interface and a corresponding predicted energy overlay respectively in accordance with at least some example embodiments of the present invention. For example, as shown in FIG. 7A, in various embodiments, a third-person vehicle operation interface 700 can be generated by the onboard VBSA system 301 that is characterized by the environment in which the vehicle is located in and/or travelling through. For example, FIG. 7A depicts the third-person vehicle operation interface 700 associated with the aerial vehicle 112 in which the aerial vehicle 112 and the surround environment have been rendered three-dimensionally.

In various embodiments, when a vehicle (e.g., the aerial vehicle 112) receives a new trip plan (e.g., a first trip plan) from the vehicle operations center 314, the onboard VBSA system 301 automatically executes a vehicle performance validation process before the vehicle proceeds to execute the new trip plan. The vehicle performance validation process comprises calculating an impact of one or more trip parameters on the one or more vehicle systems associated with the respective vehicle (e.g., the aerial vehicle 112), where the one or more trip parameters comprise at least one of a vehicle type, a vehicle battery system, a number of passengers, a vehicle payload weight, and/or one or more environmental factors (e.g., weather factors). The onboard VBSA system 301 is configured to input the results from the vehicle performance validation process and the new trip plan (e.g., the first trip plan) into the performance prediction module 306.

The performance prediction module 306 (e.g., via a vehicle performance prediction model), is configured to determine whether the new trip plan (e.g., the first trip plan) is feasible. In various contexts, determining whether the particular trip plan is feasible comprises correlating the new trip plan and/or the results from the vehicle performance validation process with one or more current values associated with one or more battery parameters associated with the battery system of the vehicle (e.g., the state of health (SoH), state of charge (SoC), state of function (SoF), and/or temperature of the battery cells associated with the battery system). In various contexts, the performance prediction module 306 may determine whether the particular trip plan is feasible based in part on a predefined battery reserve requirement associated with the vehicle. For example, in various contexts, one or more vehicles (e.g., one or more aerial vehicles 112) associated with a respective VBSA platform 300 may be configured to adhere a predefined battery reserve requirement (e.g., a battery reserve requirement of 15%) regulating that a battery system of a respective vehicle must have a required amount of energy reserves relative to an available energy capacity of the battery system after arriving at a final destination associated with the particular trip plan.

As shown in FIG(s). 7A-B, in a scenario in which the onboard VBSA system 301 determines that the new trip plan (e.g., the first trip plan) is not feasible, the onboard VBSA system 301 can cause display of a recommendation prompting entry of an alternative trip plan (e.g., a second trip plan), where the recommendation is configured to be displayed via one or more electronic displays (e.g., electronic displays 308) associated with the one or more computing devices associated with the vehicle (e.g., the aerial vehicle 112) and/or the vehicle operations center 314 (e.g., electronic displays 418 of the vehicle operations center apparatus 316). For example, as depicted, a recommendation to request a new trip plan is rendered via the operational recommendation interface 702 in FIG. 7A. In this scenario, in response to an interaction with the recommendation (e.g., the interactive button) rendered in the operational recommendation interface 702, the onboard VBSA system 301 may generate and/or cause transmission of a request to the vehicle operations center 314, where the request is a request to generate an alternative trip plan for the respective vehicle (e.g., the aerial vehicle 112). In a scenario in which a new trip plan (e.g., the first trip plan) is feasible, the onboard VBSA system 301 can enable one or more interactive interface elements (e.g., interactive buttons) configured to facilitate the initiation of one or more vehicle systems such that the new trip plan is executed by the vehicle (e.g., the aerial vehicle 112). For example, the interactive interface element 704 may be enabled such that an interaction with the interactive interface element 704 will cause execution of a feasible (e.g., safe, efficient, and/or possible) trip plan by the vehicle (e.g., the aerial vehicle 112).

In various embodiments, when a new trip plan is received by the onboard VBSA system 301 of a respective vehicle (e.g., the aerial vehicle 112), the onboard VBSA system 301 is configured to automatically render the third-person vehicle operation interface (e.g., as shown in FIG. 7A) and a predicted energy overlay corresponding to the new trip plan rendered on an interactive electronic map associated with the vehicle (e.g., as shown in FIG. 7B). As depicted by electronic display 701 in FIG. 7B, the onboard VBSA system 301 can render various waypoints (e.g., waypoint 706) associated with the predicted energy overlay that would be unfeasible to reach (e.g., unsafe, inefficient, and/or impossible) given the current energy levels and/or or capacities associated with the vehicle (e.g., the aerial vehicle 112). In this way, it can be quickly determined and/or understood (e.g., by an operator associated with the vehicle) that the new trip plan is infeasible for the vehicle to execute.

In various contexts, an alternate trip plan (e.g., a second trip plan or a modification to a first trip plan) can be received by the onboard VBSA system 301 of a respective vehicle (e.g., the aerial vehicle 112) during execution of a current trip plan (e.g., a first trip plan). In such contexts, the onboard VBSA system 301 is configured to determine, based at least in part on the results from the vehicle performance validation process (e.g., performed prior to executing the first trip plan) and the current values associated with the one or more battery parameters associated with the battery system (e.g., the current SoF, current SoC, current SoH, and/or temperature) whether the alternate trip plan is feasible. Additionally or alternatively, the onboard VBSA system 301 may determine whether the particular trip plan is feasible based in part on a predefined battery reserve requirement associated with the vehicle.

In various embodiments, the onboard VBSA system 301 can cause the predicted energy overlay associated with the alternate trip plan to display automatically via one or more electronic displays (e.g., electronic displays 308 and/or electronic displays 418) associated with the vehicle (e.g., the aerial vehicle 112) and/or the vehicle operations center 314. The alternate trip plan can be accepted or rejected via an interaction with one or more interactive interface elements (e.g., the interactive interface element 704) generated by the onboard VBSA system 301 and rendered via one or more computing devices associated with the vehicle (e.g., the aerial vehicle) and/or the vehicle operations center 314.

Additionally or alternatively, in various embodiments, the various electronic display configurations, views and/or interface elements generated by the methods described herein including, but not limited to, the first-person predicted energy overlay 602, the third-person vehicle operation interface 700, the various configurations of the predicted energy overlay(s) (e.g., predicted energy overlays 502a-c), the mission manager 512, the electronic map 514, the VSD 516, and/or the like can be enabled or disabled based in part on an interaction with the onboard VBSA system 301 (e.g., via a command issued by way of the vehicle apparatus 200 and/or the vehicle operations center apparatus 316).

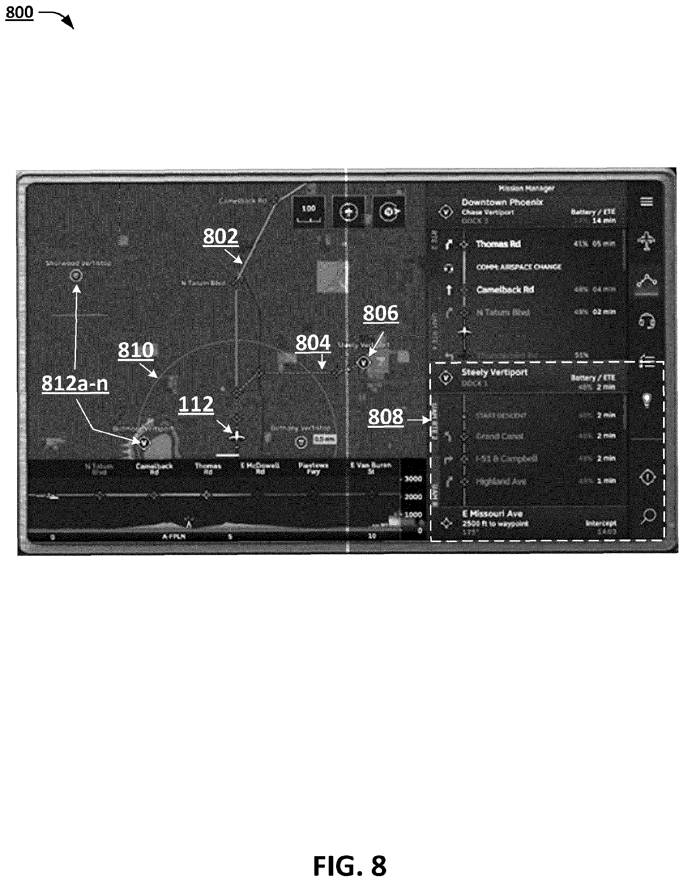

FIG. 8 illustrates an operational example of an electronic display 800 configured to display an optimal route to an optimal travel hub relative to a safety boundary associated with a vehicle in accordance with at least some example embodiments of the present invention. For example, as described herein, the onboard VBSA system 301 is configured to determine and/or cause display of a safety boundary 810 associated with a vehicle (e.g., the aerial vehicle 112) via at least one or more electronic displays (e.g., electronic displays 308 and/or electronic displays 418) of one or more respective computing devices associated with the aerial vehicle 112 (e.g., the vehicle apparatus 200 and/or the vehicle operations center apparatus 316). As shown, the safety boundary 810 can be rendered on an electronic map and centered over a representation of the aerial vehicle 112 based on the current location of the aerial vehicle 112. The safety boundary 810 is characterized by a maximum safe travel time associated with the aerial vehicle 112. The safety boundary 810 is determined based on at least one of one or more current values of one or more battery parameters associated with a battery system of the aerial vehicle 112 (e.g., the current SoF, current SoC, current SoH, and/or temperature), a current operational health of one or more vehicle systems, and/or a current location of the aerial vehicle 112. In various contexts, the safety boundary 810 can be determined based at least in part on one or more environmental factors (e.g., weather events, terrain limitations, obstacles, travel regulations for a given area, logistical limitations, and/or the like).

Furthermore, in response to detecting that an adverse situation is impacting the operation of the vehicle (e.g., the aerial vehicle 112), the onboard VBSA system 301 can automatically determine an optimal route 804 to an optimal travel hub 806 for the vehicle (e.g., the aerial vehicle 112) to navigate to, where determining the optimal route 804 to the optimal travel hub 806 comprises ranking one or more candidate travel hubs 812a-n based on at least one of a distance between a respective candidate travel hub of the one or more candidate travel hubs 812a-n and the vehicle, the safety boundary 810, or a predicted energy overlay 802 associated with a predicted energy expenditure of the vehicle. As shown in FIG. 8, the onboard VBSA system 301 may determine one or more candidate travel hubs 812a-n based at least in part one or more of a current location of the vehicle (e.g., the aerial vehicle 112), a distance between the vehicle and the one or more candidate travel hubs 812a-n, the safety boundary 810, and/or one or more environmental factors (e.g., weather events, terrain limitations, obstacles, travel regulations for a given area, logistical limitations, and/or the like).

In various embodiments, the one or more candidate travel hubs 812a-n and/or the optimal travel hub 806 can be manually selected via one or more interactive interface elements (e.g., interactive icons) associated with the one or more respective candidate travel hubs 812an and/or the respective optimal travel hub 806 rendered on an electronic display of one or more computing devices (e.g., the vehicle apparatus 200 and/or the vehicle operations center apparatus 316). As a result of the manual selection of a respective candidate travel hub of the one or more candidate travel hubs 812a-n or the optimal travel hub 806 the vehicle (e.g., the aerial vehicle 112) can be caused to navigate to the respective travel hub that was manually selected. Alternatively, as described herein, in various contexts, the vehicle (e.g., the aerial vehicle 112) can be caused by the onboard VBSA system 301 to navigate automatically to a particular travel hub of the one or more candidate travel hubs 812a-n and/or the optimal travel hub 806 without explicit confirmation (e.g., selection, approval, etc.) from the one or more computing devices (e.g., the vehicle apparatus 200 and/or the vehicle operations center apparatus 316).

Additionally, as shown in FIG. 8, the onboard VBSA system 301 can generate and/or cause display of a mission manager 808. The mission manager 808 is configured to detail one or more various waypoints associated with the optimal route 804 to the optimal travel hub 806 that was generated in response to detecting one or more adverse situations impacting the operation of the vehicle (e.g., the aerial vehicle 112). In various embodiments, the mission manager 808 is configured to display one or more portions of data related to the waypoints and/or optimal route 804 to the optimal travel hub 806 including, but not limited to, the locations of the one or more waypoints associated with the optimal route 804, a predicted energy expenditure of the vehicle corresponding to the respective waypoints associated with the optimal route 804, an estimated time of arrival of the vehicle at the respective waypoints associated with the optimal route 804, and/or a location of the optimal travel hub 806.

As described herein, in various contexts, the onboard VBSA system 301 can generate one or more recommendations based on the severity of the adverse situation that is impacting the operation of the vehicle (e.g., the aerial vehicle 112). As a non-limiting example, in response to determining that an adverse situation associated with a moderate severity level is impacting the operation of the vehicle (e.g., one or more battery cells associated with the battery system is beginning to overheat), the onboard VBSA system 301 may generate a recommendation to cause the vehicle to execute an emergency navigation procedure that navigates the vehicle to an optimal travel hub 806 via an optimal route 804. As another non-limiting example, in response to determining that an adverse situation associated with a high severity level is impacting the operation of the vehicle (e.g., a failure of a particular vehicle system), the onboard VBSA system 301 may generate a recommendation to cause the vehicle to execute an emergency navigation procedure that navigates the vehicle to a nearest candidate travel hub 812a. As another non-limiting example, in response to determining that an adverse situation associated with a low severity level is impacting the operation of the vehicle (e.g., one or more battery cells associated with the battery system is discharging at an unexpected rate), the onboard VBSA system 301 may generate a recommendation to switch the vehicle into an economy operational mode and proceed to execute the current trip plan by following the route associated with the predicted energy overlay 802.

### EXAMPLE PROCESSES OF THE INVENTION

Having described example systems, apparatuses, data flows, user interfaces, and user interface elements in accordance with the present invention, example processes of the invention will now be discussed. It will be appreciated that each of the flowcharts depicts an example computer-implemented process that is performable by various means, including one or more of the apparatuses, systems, devices, and/or computer program products described herein, for example utilizing one or more of the specially configured components thereof.

It will be understood that each block of the processes, and combinations of blocks in the flowcharts, may be implemented by various means including hardware and/or a computer program product comprising one or more computer-readable mediums having computer-readable program instructions stored thereon. For example, one or more of the processes described herein in some embodiments is/are embodied by computer program of a computer program product. In this regard, the computer program product(s) that embody the process(es) described herein in some embodiments comprise one or more non-transitory memory devices of a computing device, apparatus, and/or the like (for example, the memory 204 of the vehicle apparatus 200) storing instructions executable by a processor of a computing device (for example, by the processor 202 of the vehicle apparatus 200). In some embodiments, the computer program instructions of the computer program product that embody the processes are stored by non-transitory computer-readable storage mediums of a plurality of computing devices. It will be appreciated that any such computer program product(s) may be loaded onto one or more computer(s) and/or other programmable apparatus(es) (for example, a vehicle apparatus 200), such that the computer program product including the program code instructions that execute on the computer(s) or other programmable apparatus(es) create means for implementing the functions specified in the operational block(s).

Further, in some embodiments, the computer program product includes one or more non-transitory computer-readable memories on which the computer program instructions are stored such that the one or more computer-readable memories can direct one or more computer(s) and/or other programmable apparatus(es) to function in a particular manner, such that the computer program product comprises an article of manufacture that implements the function(s) specified in the operational block(s). Additionally or alternatively, in some embodiments, the computer program instructions of one or more computer program product(s) are loaded onto computing device(s) or other programmable apparatus(es) to cause a series of operations to be performed on the computing device(s) or other programmable apparatus(es) a computer-implemented process such that the instructions that execute on the computing device(s) or other programmable apparatus(es) implement the functions specified in the operational block(s).

Each of the processes depicted includes a plurality of operational blocks defining a particular algorithm for performing one or more portion(s) of functionality for generating and/or outputting improved user interface(s) as described herein. The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the invention. Optional blocks are depicted with broken (or "dashed") lines. Similarly, it should be appreciated that one or more of the operations of each flowchart may be combinable, replaceable, and/or otherwise altered as described herein.

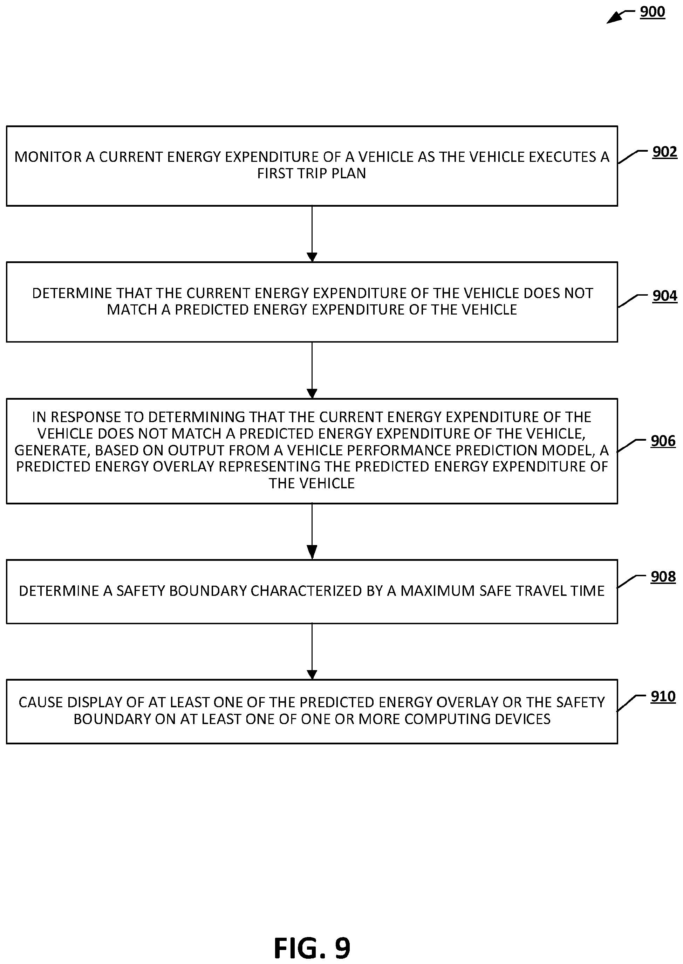

FIG. 9 illustrates a flowchart depicting example operations of an example process for providing enhanced trip plan-based vehicle battery situational awareness for one or more vehicles associated with a VBSA platform 300 in accordance with at least some example embodiments of the present invention. Specifically, FIG. 9 depicts operations of an example process 900 for generating one or more predicted energy overlays and/or safety boundaries for one or more vehicle(s) whose operation is being impacted by one or more adverse situations. In some embodiments, the process 900 is embodied by a computer-implemented process executable by any of a myriad of computing device(s), apparatus(es), system(s), and/or the like as described herein. Alternatively or additionally, in some embodiments, the process 900 is embodied by computer program code stored on a non-transitory computer-readable storage medium of a computer program product configured for execution to perform the process as depicted and described.

Alternatively or additionally, in some embodiments, the process 900 is performed by one or more specially configured computing devices, such as the vehicle apparatus 200 alone or in communication with one or more other component(s), device(s), system(s), and/or the like (e.g., such as the vehicle operations center apparatus 316). In this regard, in some such embodiments, the vehicle apparatus 200 is specially configured by computer-coded instructions (e.g., computer program instructions) stored thereon, for example in the memory 204 and/or another component depicted and/or described herein and/or otherwise accessible to the vehicle apparatus 200, for performing the operations as depicted and described. In some embodiments, the vehicle apparatus 200 is in communication with one or more external apparatus(es), system(s), device(s), and/or the like, to perform one or more of the operations as depicted and described. For example, the vehicle apparatus 200 in some embodiments is in communication with an end-user computing device, one or more external system(s), and/or the like (e.g., such as the vehicle operations center 314). It will be appreciated that while the process 900 is described as performed by and from the perspective of the vehicle apparatus 200 for purposes of simplifying the description, the process 900 can also be performed, in total or in part, by the vehicle operations center apparatus 316 of the vehicle operations center 314.

The process 900 begins at operation 902. At operation 902, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that monitors a current energy expenditure of a vehicle (e.g., an aerial vehicle 112) as the vehicle executes a first trip plan.

At operation 904, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that determines that the current energy expenditure of the vehicle (e.g., the aerial vehicle 112) does not match a predicted energy expenditure of the vehicle.

At operation 906, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that, in response to determining that the current energy expenditure of the vehicle (e.g., the aerial vehicle 112) does not match a predicted energy expenditure of the vehicle, generates, based on output from a vehicle performance prediction model (e.g., comprised in the performance prediction module 306), a predicted energy overlay (e.g., a predicted energy overlay 502a) representing the predicted energy expenditure of the vehicle, where the predicted energy overlay corresponds to one or more defined travel legs between two or more waypoints (e.g., waypoints 504a-n) associated with the first trip plan, where the predicted energy overlay is configured to display over a respective electronic display (e.g., electronic displays 308 and/or electronic displays 418) associated with one or more computing devices depicting an environment of the vehicle, and where the predicted energy overlay is color-coded based on one or more predicted values associated with one or more battery parameters associated with a battery system of the vehicle related to the predicted energy expenditure (e.g., the state of health (SoH), state of charge (SoC), state of function (SoF), and/or temperature of one or more battery cells associated with the battery system).

At operation 908, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that determines a safety boundary (e.g., safety boundary 506) characterized by a maximum safe travel time, where the safety boundary is determined based on at least one of one or more current values of the one or more battery parameters (e.g., the SoH, SoC, SoF, and/or temperature associated with the battery system), a current operational health of one or more vehicle systems, and/or a current location of the vehicle (e.g., the aerial vehicle 112).

At operation 910, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that causes display of at least one of the predicted energy overlay (e.g., the predicted energy overlay 502a) and/or the safety boundary (e.g., the safety boundary 506) on at least one of the one or more computing devices (e.g., a vehicle apparatus 200, a vehicle operations center apparatus 316, and/or one or more electronic displays associated with the vehicle (e.g., the aerial vehicle 112) and/or the vehicle operations center 314).

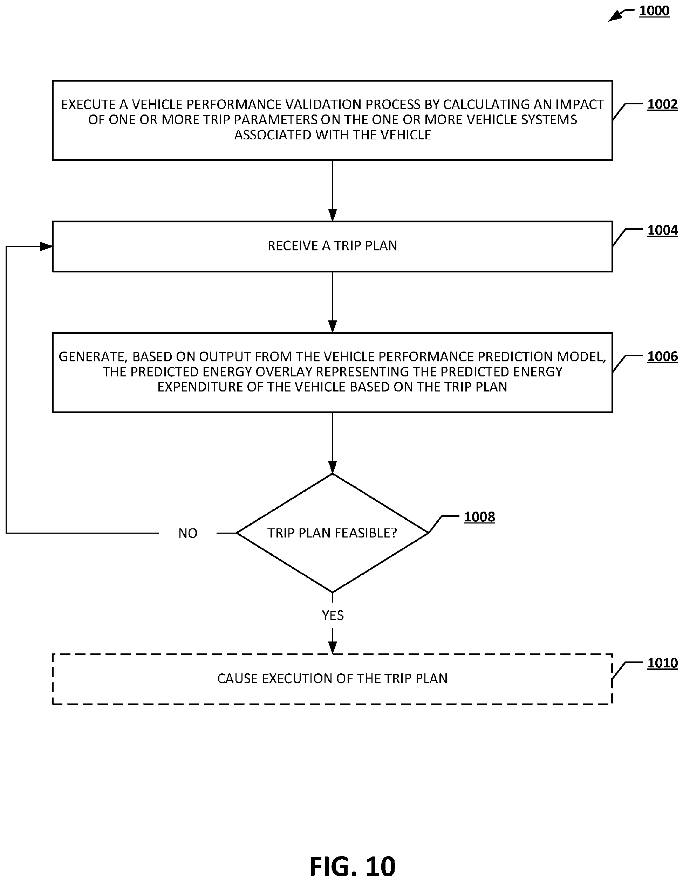

FIG. 10 illustrates a flowchart depicting example operations of an example process for providing enhanced trip plan-based vehicle battery situational awareness for one or more vehicles associated with a VBSA platform 300 in accordance with at least some example embodiments of the present invention. Specifically, FIG. 10 depicts operations of an example process 1000 for generating one or more predicted energy overlays for a vehicle based on one or more received trip plans and determining whether it is feasible for the vehicle to execute a respective trip plan of the one or more received trip plans associated with the predicted energy overlays. In some embodiments, the process 1000 is embodied by a computer-implemented process executable by any of a myriad of computing device(s), apparatus(es), system(s), and/or the like as described herein. Alternatively or additionally, in some embodiments, the process 1000 is embodied by computer program code stored on a non-transitory computer-readable storage medium of a computer program product configured for execution to perform the process as depicted and described.

Alternatively or additionally, in some embodiments, the process 1000 is performed by one or more specially configured computing devices, such as the vehicle apparatus 200 alone or in communication with one or more other component(s), device(s), system(s), and/or the like (e.g., such as the vehicle operations center apparatus 316). In this regard, in some such embodiments, the vehicle apparatus 200 is specially configured by computer-coded instructions (e.g., computer program instructions) stored thereon, for example in the memory 204 and/or another component depicted and/or described herein and/or otherwise accessible to the vehicle apparatus 200, for performing the operations as depicted and described. In some embodiments, the vehicle apparatus 200 is in communication with one or more external apparatus(es), system(s), device(s), and/or the like, to perform one or more of the operations as depicted and described. For example, the vehicle apparatus 200 in some embodiments is in communication with an end-user computing device, one or more external system(s), and/or the like (e.g., such as the vehicle operations center 314). It will be appreciated that while the process 1000 is described as performed by and from the perspective of the vehicle apparatus 200 for purposes of simplifying the description, the process 1000 can also be performed, in total or in part, by the vehicle operations center apparatus 316 of the vehicle operations center 314.

The process 1000 begins at operation 1002. At operation 1002, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that executes a vehicle performance validation process by calculating an impact of one or more trip parameters on the one or more vehicle systems associated with the vehicle (e.g., an aerial vehicle 112), where the one or more trip parameters comprise at least one of a vehicle type, a vehicle battery system, a number of passengers, a vehicle payload weight, and/or one or more environmental factors.

At operation 1004, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that receives a trip plan. For example, in various contexts, the vehicle apparatus 200 may receive a new trip plan, an updated trip plan (e.g., an update to a trip plan being currently executed by the vehicle), and/or an alternative trip plan (e.g., an alternative trip plan from the trip plan being currently executed by the vehicle).

At operation 1006, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that generates, based on output from a vehicle performance prediction model (e.g., comprised in the performance prediction module 306), a predicted energy overlay (e.g., a predicted energy overlay 502a) representing the predicted energy expenditure of the vehicle, where the predicted energy overlay corresponds to one or more defined travel legs between two or more waypoints (e.g., waypoints 504a-n) associated with the first trip plan, where the predicted energy overlay is configured to display over a respective electronic display (e.g., electronic displays 308 and/or electronic displays 418) associated with one or more computing devices depicting an environment of the vehicle, and where the predicted energy overlay is color-coded based on one or more predicted values associated with one or more battery parameters associated with a battery system of the vehicle related to the predicted energy expenditure (e.g., the SoH, SoC, SoF, and/or temperature associated with the battery system).

At operation 1008, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that determines whether the trip plan is feasible. For example, in various contexts, the performance prediction module 306 (e.g., via a vehicle performance prediction model) of the onboard VBSA system 301 is configured to determine whether a new trip plan (e.g., a first trip plan) is feasible. In various contexts, determining whether the particular trip plan is feasible comprises correlating the new trip plan and/or the results from the vehicle performance validation process with one or more current values associated with one or more battery parameters associated with the battery system of the vehicle (e.g., the state of health (SoH), state of charge (SoC), state of function (SoF), and/or temperature of the battery cells associated with the battery system).

Additionally or alternatively, the onboard VBSA system 301 may determine whether the particular trip plan is feasible based in part on a predefined battery reserve requirement associated with the vehicle. For example, in various contexts, one or more vehicles (e.g., one or more aerial vehicles 112) associated with a respective VBSA platform 300 may be configured to adhere a predefined battery reserve requirement (e.g., a battery reserve requirement of 15%) regulating that a battery system of a respective vehicle must have a required amount of energy reserves relative to an available energy capacity of the battery system after arriving at a final destination associated with the particular trip plan. If it is determined that the trip plan is feasible, the process 1000 may proceed to operation 1010. However, if it is determined that the trip plan is not feasible, the process 1000 may revert to operation 1004.

In a scenario in which the onboard VBSA system 301 determines that the new trip plan (e.g., the first trip plan) is not feasible, the onboard VBSA system 301 can cause display of a recommendation prompting entry of an alternative trip plan (e.g., a second trip plan), where the recommendation is configured to be displayed via one or more electronic displays (e.g., electronic displays 308) associated with the one or more computing devices associated with the vehicle (e.g., the aerial vehicle 112) and/or the vehicle operations center 314 (e.g., electronic displays 418 associated with the vehicle operations center apparatus 316). For example, as depicted, a recommendation to request a new trip plan is rendered via an operational recommendation interface (e.g., such as the operational recommendation interface 702 in FIG. 7A). In this scenario, in response to an interaction with the recommendation (e.g., the interactive button) rendered in the operational recommendation interface, the onboard VBSA system 301 may generate and/or cause transmission of a request to the vehicle operations center 314, where the request is a request to generate an alternative trip plan for the respective vehicle (e.g., the aerial vehicle 112).

At optional operation 1010, the vehicle apparatus 200 includes means such as the processor 202, the memory 204, the input/output circuitry 206, the communications circuitry 208, the sensor(s) 210, the vehicle control circuitry 212, the battery situational awareness circuitry 214, and/or the like, or a combination thereof, that cause execution of the trip plan. For example, in a scenario in which a new trip plan (e.g., the first trip plan) is feasible, the onboard VBSA system 301 can enable one or more interactive interface elements (e.g., interactive buttons) configured to facilitate the initiation of one or more vehicle systems such that the new trip plan is executed by the vehicle (e.g., the aerial vehicle 112). For example, an interactive interface element (e.g., interactive interface element 704) may be enabled such that an interaction with the interactive interface element will cause execution of the trip plan by the vehicle (e.g., the aerial vehicle 112).

### CONCLUSION

While several example contexts are described herein with respect to processing of data by an aerial vehicle, it will be appreciated in view of this invention that embodiments may include or otherwise be implemented as a part of other vehicle(s), device(s), and/or the like. For example, in other contexts, embodiments of the present invention utilize sensor(s) of and/or display data to display(s) of other type(s) of vehicle(s), including ground vehicle(s). Alternatively or additionally, some embodiments utilize sensor(s) of and/or display data to display(s) of other device(s), including user device(s), back-end computing device(s), and/or the like. Indeed, in some embodiments, the sensor(s), computing device(s), and/or display(s) are embodied and/or otherwise included in one or more computing device(s) not integrated as part of any vehicle (e.g., as a standalone computing device). In is intended that all such contexts, device type(s), and/or the like be included within the scope of this invention and covered within the scope of the claims appended herein.

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results.

## Claims

1. A computer-implemented method (900, 1000), the computer-implemented method (900, 1000) comprising:
monitoring (902) a current energy expenditure of a vehicle (112) as the vehicle (112) executes a first trip plan;
determining (904) that the current energy expenditure of the vehicle (112) does not match a predicted energy expenditure of the vehicle (112);
in response to determining that the current energy expenditure of the vehicle (112) does not match the predicted energy expenditure of the vehicle (112):
generating (906, 1006), based on output from a vehicle performance prediction model, a predicted energy overlay (502a-c, 602, 802) representing the predicted energy expenditure of the vehicle (112), wherein the predicted energy overlay (502a-c, 602, 802) comprises a visualization of one or more defined travel legs between two or more waypoints (504a-n, 604a-n, 706) associated with the first trip plan, wherein the predicted energy overlay associated with the first trip plan is configured to display over a respective electronic display (500, 701, 800) associated with one or more computing devices depicting an environment of the vehicle (112), and wherein the predicted energy overlay (502a-c, 602, 802) associated with the first trip plan is color-coded based on one or more predicted values associated with one or more battery parameters associated with a battery system of the vehicle (112) related to the predicted energy expenditure;
determining (908) a safety boundary (506, 810) **characterized by** a maximum safe travel time, wherein the safety boundary (506, 810) is determined based on one or more current values of the one or more battery parameters, a current operational health of one or more vehicle systems associated with the vehicle (112), and a current location of the vehicle (112); and
causing (910) display of the predicted energy overlay (502a-c, 602, 802), and optionally the safety boundary (506, 810), on at least one of the one or more computing devices.

2. The computer-implemented method (900, 1000) of claim 1, the computer-implemented method (900, 1000) further comprising:
executing (1002) a vehicle performance validation process by calculating an impact of one or more trip parameters on the one or more vehicle systems associated with the vehicle (112), wherein the one or more trip parameters comprise at least one of a vehicle type, a vehicle battery system, a number of passengers, a vehicle payload weight, or one or more environmental factors;
receiving (1004) the first trip plan;
determining (1008), based on inputting results from the vehicle performance validation process and the first trip plan into the vehicle performance prediction model, whether the first trip plan is feasible, wherein determining whether the first trip plan is feasible comprises determining whether the battery system of the vehicle (112) will have a required amount of energy reserves relative to an available energy capacity of the battery system after arriving at a final destination associated with the first trip plan;
in response to determining (1008) that the first trip plan is not feasible when it is determined that the battery system will not have the required amount of energy reserves:
causing transmission of a notification prompting entry of a second trip plan, wherein the notification is configured to be displayed on the one or more computing devices; and
in response to determining (1008) that the first trip plan is feasible when it is determined that the battery system will have the required amount of energy reserves:
causing display of one or more interactive interface elements (704) associated with a first trip plan selection confirmation on at least one of the one or more computing devices; and
determining, based on an interaction with the one or more interactive interface elements (704) associated with the first trip plan selection confirmation, whether to cause execution of the first trip plan.

3. The computer-implemented method (900, 1000) of claim 1, wherein the computer-implemented method (900, 1000) further comprises:
detecting, based at least in part on a comparison of one or more current values associated with the one or more battery parameters, the current operational health of the one or more vehicle systems, and the predicted energy expenditure of the vehicle (112), an adverse situation impacting operation of the vehicle (112);
in response to detecting an adverse situation impacting the operation of the vehicle (112):
determining a severity level associated with the adverse situation;
generating, based at least in part on the severity level of the adverse situation, one or more recommendations to mitigate the adverse situation; and
causing display of one or more interactive interface elements (704) associated with the one or more recommendations on the one or more computing devices, wherein the one or more interactive interface elements (704) associated with the one or more respective recommendations are configured to, in response to an interaction with a respective interactive interface element of the one or more interactive interface elements (704), cause execution of a respective recommendation of the one or more recommendations.

4. The computer-implemented method (900, 1000) of claim 3, wherein the one or more recommendations comprise at least one or more of a recommendation to cause the vehicle (112) to navigate to a candidate travel hub, a recommendation to cause the vehicle (112) to navigate to an optimal travel hub (806), a recommendation to cause the vehicle (112) to engage an economy operation mode, or a recommendation to cause the vehicle (112) to execute an emergency navigation procedure.

5. The computer-implemented method (900, 1000) of claim 3, wherein the computer-implemented method (900, 1000) further comprises:
in response to detecting an adverse situation impacting the operation of the vehicle (112):
determining an optimal travel hub (806) for the vehicle (112) to navigate to,
wherein determining the optimal travel hub (806) comprises ranking one or more candidate travel hubs (812a-n) based on at least one of a distance between a respective candidate travel hub of the one or more candidate travel hubs (812a-n) and the vehicle (112), the safety boundary (506, 810), or the predicted energy expenditure of the vehicle (112);
causing display of the one or more candidate travel hubs (812a-n) and the optimal travel hub (806) for selection via the one or more computing devices; and
causing the vehicle (112) to navigate to a candidate travel hub of the one or more candidate travel hubs (812a-n) or the optimal travel hub (806) based on the selection.

6. The computer-implemented method (900, 1000) of claim 5, wherein the selection of the candidate travel hub or the optimal travel hub (806) is executed automatically by an onboard vehicle battery situational awareness, VBSA, system (301), and wherein the vehicle (112) is caused to navigate to the candidate travel hub or the optimal travel hub (806) based on the selection of the candidate travel hub or the optimal travel hub (806) by the onboard VBSA system (301).

7. The computer-implemented method (900, 1000) of claim 5, wherein the one or more candidate travel hubs (812a-n) and the optimal travel hub (806) are color-coded based on at least one of a relative location to the safety boundary (506, 810), the distance between the one or more candidate travel hubs (812a-n) and the vehicle (112), a distance between the optimal travel hub (806) and the vehicle (112), or the predicted energy expenditure of the vehicle (112).

8. The computer-implemented method (900, 1000) of claim 1, wherein the one or more battery parameters comprise at least one of a state of charge, SoC, a state of health, SoH, a state of function, SoF, or a temperature associated with the battery system of the vehicle (112).

9. The computer-implemented method (900, 1000) of claim 1, wherein a waypoint of the two or more waypoints (504a-n, 604a-n, 706) associated with the first trip plan is associated with at least one predicted value of the one or more respective predicted values associated with the one or more battery parameters.

10. The computer-implemented method (900, 1000) of claim 1, wherein the predicted energy overlay (602) is configured in a first-person perspective, and wherein the predicted energy overlay (602) is **characterized by** the first trip plan such that one or more travel legs between the current location of the vehicle (112) and one or more upcoming waypoints (604a-n) associated with the first trip plan can be visualized relative to a current heading, a current altitude, and a current velocity of the vehicle (112).

11. The computer-implemented method (900, 1000) of claim 10, wherein the predicted energy overlay (602) is displayed over a primary flight display associated with the vehicle (112).

12. The computer-implemented method (900, 1000) of claim **1,** the computer-implemented method (900, 1000) further comprising:
receiving, during execution of the first trip plan, an alternate trip plan;
in response to receiving the alternate trip plan:
generating, based on inputting the alternate trip plan and results from a vehicle performance validation process associated with the first trip plan into the vehicle performance prediction model, a predicted energy overlay (502a-c, 602, 802) representing the predicted energy expenditure of the vehicle (112) associated with the alternate trip plan, wherein the predicted energy overlay (502a-c, 602, 802) corresponds to one or more defined travel legs between two or more waypoints (504a-n, 604a-n, 706) associated with the alternate trip plan, wherein the predicted energy overlay (502a-c, 602, 802) associated with the alternate trip plan is configured to display over the respective electronic display (500, 701, 800) associated with the one or more computing devices depicting the environment of the vehicle (112), and wherein the predicted energy overlay (502a-c, 602, 802) associated with the alternate trip plan is color-coded based on the one or more predicted values associated with the one or more battery parameters associated with the battery system of the vehicle (112) related to the predicted energy expenditure;
causing display of the predicted energy overlay (502a-c, 602, 802) associated with the alternate trip plan on at least one of the one or more computing devices;
causing display of one or more interactive interface elements (704) associated with an alternate trip plan selection confirmation on at least one of the one or more computing devices; and
determining, based on an interaction with the one or more interactive interface elements (704) associated with the alternate trip plan selection confirmation, whether to cause execution of the alternate trip plan.

13. An apparatus (200) comprising:
at least one processor (202); and
at least one non-transitory memory (204) storing instructions that, when executed by the at least one processor (204), cause the apparatus (200) to perform the method of any of claims 1-12.

## Patentansprüche

1. Computerimplementiertes Verfahren (900, 1000), das computerimplementierte Verfahren (900, 1000) umfassend:
Überwachen (902) eines aktuellen Energieverbrauchs eines Fahrzeugs (112), wenn das Fahrzeug (112) einen ersten Tourenplan ausführt;
Bestimmen (904), dass der aktuelle Energieverbrauch des Fahrzeugs (112) nicht mit einem vorhergesagten Energieverbrauch des Fahrzeugs (112) übereinstimmt;
als Antwort auf das Bestimmen, dass der aktuelle Energieverbrauch des Fahrzeugs (112) nicht mit dem vorhergesagten Energieverbrauch des Fahrzeugs (112) übereinstimmt:
Erzeugen (906, 1006), auf Basis einer Ausgabe von einem Fahrzeugleistungsvorhersagemodell, einer Vorhergesagte-Energie-Überblendung (502a-c, 602, 802), die den vorhergesagten Energieverbrauch des Fahrzeugs (112) darstellt, wobei die Vorhergesagte-Energie-Überblendung (502a-c, 602, 802) eine Visualisierung einer oder mehrerer definierter Reisestrecken zwischen zwei oder mehreren dem ersten Tourenplan zugehörigen Wegpunkten (504a-n, 604a-n, 706) umfasst, wobei die dem ersten Tourenplan zugehörige Vorhergesagte-Energie-Überblendung dazu konfiguriert ist, über einer jeweiligen elektronischen Anzeige (500, 701, 800) angezeigt zu werden, die einer oder mehreren Rechenvorrichtungen zugehörig ist, die eine Umgebung des Fahrzeugs (112) abbilden, und wobei die dem ersten Tourenplan zugehörige Vorhergesagte-Energie-Überblendung (502a-c, 602, 802) auf Basis von einem oder mehreren vorhergesagten Werten farbkodiert ist, die einem oder mehreren Batterieparametern zugehörig sind, die einem Batteriesystem des Fahrzeugs (112) zugehörig sind, das in Zusammenhang zu dem vorhergesagten Energieverbrauch steht;
Bestimmen (908) einer Sicherheitsgrenze (506, 810), **gekennzeichnet durch** eine maximale sichere Reisezeit, wobei die Sicherheitsgrenze (506, 810) auf Basis von einem oder mehreren aktuellen Werten des einen oder der mehreren Batterieparameter, einer aktuellen Betriebsgesundheit von einem oder mehreren dem Fahrzeug (112) zugehörigen Fahrzeugsystemen und einem aktuellen Standort des Fahrzeugs (112) bestimmt wird, und
Veranlassen (910) einer Anzeige der Vorhergesagte-Energie-Überblendung (502a-c, 602, 802) und optional der Sicherheitsgrenze (506, 810) auf mindestens einer der einen oder der mehreren Rechenvorrichtungen.

2. Computerimplementiertes Verfahren (900, 1000) nach Anspruch 1, das computerimplementierte Verfahren (900, 1000) ferner umfassend:
Ausführen (1002) eines Fahrzeugleistungsvalidierungsprozesses durch Berechnen einer Auswirkung von einem oder mehreren Tourenparametern auf das eine oder die mehreren dem Fahrzeug (112) zugehörigen Fahrzeugsysteme, wobei der eine oder die mehreren Tourenparameter mindestens eines von einem Fahrzeugtyp, einem Fahrzeugbatteriesystem, einer Anzahl von Passagieren, einem Fahrzeugnutzlastgewicht oder einem oder mehreren Umweltfaktoren umfassen;
Empfangen (1004) des ersten Tourenplans;
Bestimmen (1008) auf Basis des Eingebens von Ergebnissen aus dem Fahrzeugleistungsvalidierungsprozess und des ersten Tourenplans in das erste Fahrzeugleistungsvorhersagemodell, ob der erste Tourenplan machbar ist, wobei das Bestimmen, ob der erste Tourenplan machbar ist, das Bestimmen umfasst, ob das Batteriesystem des Fahrzeugs (112) eine erforderliche Menge an Energiereserven relativ zu einer verfügbaren Energiekapazität des Batteriesystems aufweisen wird, nachdem es an einem dem ersten Tourenplan zugehörigen endgültigen Zielort angekommen ist;
als Antwort auf das Bestimmen (1008), dass der erste Tourenplan nicht machbar ist, wenn bestimmt wird, dass das Batteriesystem nicht die erforderliche Menge an Energiereserven aufweisen wird:
Veranlassen einer Übertragung einer Benachrichtigung, die zu einer Eintragung eines zweiten Tourenplans auffordert, wobei die Benachrichtigung dazu konfiguriert ist, auf der einen oder den mehreren Rechenvorrichtungen angezeigt zu werden; und
als Antwort auf das Bestimmen (1008), dass der erste Tourenplan machbar ist, wenn bestimmt wird, dass das Batteriesystem die erforderliche Menge an Energiereserven aufweisen wird:
Veranlassen einer Anzeige von einem oder mehreren interaktiven Schnittstellenelementen (704), die einer Auswahlbestätigung des ersten Tourenplans zugehörig sind, auf mindestens einer der einen oder der mehreren Rechenvorrichtungen; und
Bestimmen, auf Basis einer Interaktion mit dem einen oder den mehreren interaktiven Schnittstellenelementen (704), die der Auswahlbestätigung des ersten Tourenplans zugehörig sind, ob eine Ausführung des ersten Tourenplans veranlasst werden soll.

3. Computerimplementiertes Verfahren (900, 1000) nach Anspruch 1, wobei das computerimplementierte Verfahren (900, 1000) ferner Folgendes umfasst:
Detektieren, auf Basis mindestens teilweise eines Vergleichs von einem oder mehreren dem einen oder den mehreren Batterieparametern zugehörigen aktuellen Werten, der aktuellen Betriebsgesundheit des einen oder der mehreren Fahrzeugsysteme und des vorhergesagten Energieverbrauchs des Fahrzeugs (112), einer nachteiligen Situation, die sich auf den Betrieb des Fahrzeugs (112) auswirkt;
als Antwort auf das Detektieren einer nachteiligen Situation, die sich auf den Betrieb des Fahrzeugs (112) auswirkt:
Bestimmen eines der nachteiligen Situation zugehörigen Schweregrades;
Erzeugen, auf Basis mindestens teilweise des Schweregrades der nachteiligen Situation, einer oder mehrerer Empfehlungen, um die nachteilige Situation zu mildern; und
Veranlassen einer Anzeige von einem oder mehreren der einen oder den mehreren Empfehlungen zugehörigen interaktiven Schnittstellenelementen (704) auf der einen oder den mehreren Rechenvorrichtungen, wobei das eine oder die mehreren der einen oder den mehreren jeweiligen Empfehlungen zugehörigen interaktiven Schnittstellenelemente (704) dazu konfiguriert sind, als Antwort auf eine Interaktion mit einem jeweiligen interaktiven Schnittstellenelement des einen oder der mehreren interaktiven Schnittstellenelemente (704) eine Ausführung einer jeweiligen Empfehlung der einen oder der mehreren Empfehlungen zu veranlassen.

4. Computerimplementiertes Verfahren (900, 1000) nach Anspruch 3, wobei die eine oder die mehreren Empfehlungen mindestens eines oder mehrere von Folgendem umfassen: einer Empfehlung, um zu veranlassen, dass das Fahrzeug (112) zu einem Kandidaten-Reiseknotenpunkt navigiert, einer Empfehlung, um zu veranlassen, dass das Fahrzeug (112) zu einem optimalen Reiseknotenpunkt (806) navigiert, einer Empfehlung, um zu veranlassen, dass das Fahrzeug (112) einen sparsamen Betriebsmodus einstellt oder einer Empfehlung, um zu veranlassen, dass das Fahrzeug (112) eine Notfallnavigationsvorgehensweise ausführt.

5. Computerimplementiertes Verfahren (900, 1000) nach Anspruch 3, wobei das computerimplementierte Verfahren (900, 1000) ferner Folgendes umfasst:
als Antwort auf das Detektieren einer nachteiligen Situation, die sich auf den Betrieb des Fahrzeugs (112) auswirkt:
Bestimmen eines optimalen Reiseknotenpunkts (806), damit das Fahrzeug (112) zu diesem navigiert,
wobei das Bestimmen des optimalen Reiseknotenpunkts (806) das Einstufen von einem oder mehreren Kandidaten-Reiseknotenpunkten (812a-n) umfasst, auf Basis mindestens einer Distanz zwischen einem jeweiligen Kandidaten-Reiseknotenpunkt des einen oder der mehreren Kandidaten-Reiseknotenpunkte (812a-n) und dem Fahrzeug (112), der Sicherheitsgrenze (506, 810) oder des vorhergesagten Energieverbrauchs des Fahrzeugs (112);
Veranlassen einer Anzeige des einen oder der mehreren Kandidaten-Reiseknotenpunkte (812a-n) und des optimalen Reiseknotenpunkts (806) zur Auswahl über die eine oder die mehreren Rechenvorrichtungen; und
Veranlassen, dass das Fahrzeug (112) zu einem Kandidaten-Reiseknotenpunkt des einen oder der mehreren Kandidaten-Reiseknotenpunkte (812a-n) oder zu dem optimalen Reiseknotenpunkt (806) navigiert, auf Basis der Auswahl.

6. Computerimplementiertes Verfahren (900, 1000) nach Anspruch 5, wobei die Auswahl des Kandidaten-Reiseknotenpunkts oder des optimalen Reiseknotenpunkts (806) automatisch durch ein bordeigenes Fahrzeugbatterie-Situationserfassungs-, VBSA-, System (301) ausgeführt wird, und wobei das Fahrzeug (112) veranlasst wird, zu dem Kandidaten-Reiseknotenpunkt oder dem optimalen Reiseknotenpunkt (806) zu navigieren, auf Basis der Auswahl des Kandidaten-Reiseknotenpunkts oder des optimalen Reiseknotenpunkts (806) durch das bordeigene VBSA-System (301).

7. Computerimplementiertes Verfahren (900, 1000) nach Anspruch 5, wobei der eine oder die mehreren Kandidaten-Reiseknotenpunkte (812a-n) und der optimale Reiseknotenpunkt (806) farbkodiert sind, auf Basis von mindestens einem aus einem relativen Standort zu der Sicherheitsgrenze (506, 810), der Distanz zwischen dem einen oder den mehreren Kandidaten-Reiseknotenpunkten (812a-n) und dem Fahrzeug (112), einer Distanz zwischen dem optimalen Reiseknotenpunkt (806) und dem Fahrzeug (112) oder dem vorhergesagten Energieverbrauch des Fahrzeugs (112).

8. Computerimplementiertes Verfahren (900, 1000) nach Anspruch 1, wobei der eine oder die mehreren Batterieparameter mindestens eines aus einem Ladezustand, SoC, einem Gesundheitszustand, SoH, einem Funktionzustand, SoF, oder einer Temperatur, die dem Batteriesystem des Fahrzeugs (112) zugehörig sind, umfassen.

9. Computerimplementiertes Verfahren (900, 1000) nach Anspruch 1, wobei ein Wegpunkt der zwei oder mehreren dem ersten Tourenplan zugehörigen Wegpunkte (504a-n, 604a-n, 706) mindestens einem vorhergesagten Wert von dem einen oder den mehreren jeweiligen dem einen oder den mehreren Batterieparametern zugehörigen vorhergesagten Werten zugehörig ist.

10. Computerimplementiertes Verfahren (900, 1000) nach Anspruch 1, wobei die Vorhergesagte-Energie-Überblendung (602) in einer Ich-Perspektive konfiguriert ist, und wobei die Vorhergesagte-Energie-Überblendung (602) durch den ersten Tourenplan gekennzeichnet ist, sodass eine oder mehrere Reisestrecken zwischen dem aktuellen Standort des Fahrzeugs (112) und einem oder mehreren dem ersten Tourenplan zugehörigen bevorstehenden Wegpunkten (604a-n) relativ zu einer aktuellen Richtung, einer aktuellen Höhe und einer aktuellen Geschwindigkeit des Fahrzeugs (112) visualisiert werden können.

11. Computerimplementiertes Verfahren (900, 1000) nach Anspruch 10, wobei die Vorhergesagte-Energie-Überblendung (602) über einer dem Fahrzeug (112) zugehörigen primären Fluganzeige angezeigt wird.

12. Computerimplementiertes Verfahren (900, 1000) nach Anspruch 1, das computerimplementierte Verfahren (900, 1000) ferner umfassend:
Empfangen, während der Ausführung des ersten Tourenplans, eines alternativen Tourenplans;
als Antwort auf das Empfangen des alternativen Tourenplans:
Erzeugen, auf Basis des Eingebens des alternativen Tourenplans und von Ergebnissen aus einem dem ersten Tourenplan zugehörigen Fahrzeugleistungsvalidierungsprozess in das Fahrzeugleistungsvorhersagemodell, einer Vorhergesagte-Energie-Überblendung (502a-c, 602, 802), die den dem alternativen Tourenplan zugehörigen vorhergesagten Energieverbrauch des Fahrzeugs (112) darstellt, wobei die Vorhergesagte-Energie-Überblendung (502a-c, 602, 802) einer oder mehreren definierten Reisestrecken zwischen zwei oder mehreren dem alternativen Tourenplan zugehörigen Wegpunkten (504a-n, 604a-n, 706) entspricht, wobei die dem alternativen Tourenplan zugehörige Vorhergesagte-Energie-Überblendung (502a-c, 602, 802) dazu konfiguriert ist, über der jeweiligen elektronischen Anzeige (500, 701, 800) angezeigt zu werden, die der einen oder den mehreren Rechenvorrichtungen zugehörig ist, die die Umgebung des Fahrzeugs (112) abbilden, und wobei die dem alternativen Tourenplan zugehörige Vorhergesagte-Energie-Überblendung (502a-c, 602, 802) auf Basis von dem einem oder den mehreren vorhergesagten Werten farbkodiert ist, die dem einem oder den mehreren Batterieparametern zugehörig sind, die dem Batteriesystem des Fahrzeugs (112) zugehörig sind, das in Zusammenhang zu dem vorhergesagten Energieverbrauch steht;
Veranlassen einer Anzeige der dem alternativen Tourenplan zugehörigen Vorhergesagte-Energie-Überblendung (502a-c, 602, 802) auf mindestens einer der einen oder der mehreren Rechenvorrichtungen;
Veranlassen einer Anzeige von einem oder mehreren interaktiven Schnittstellenelementen (704), die einer Auswahlbestätigung des alternativen Tourenplans zugehörig sind, auf mindestens einer der einen oder der mehreren Rechenvorrichtungen; und
Bestimmen, auf Basis einer Interaktion mit dem einen oder den mehreren interaktiven Schnittstellenelementen (704), die der Auswahlbestätigung des alternativen Tourenplans zugehörig sind, ob eine Ausführung des alternativen Tourenplans veranlasst werden soll.

13. Einrichtung (200), umfassend:
mindestens einen Prozessor (202); und
mindestens einen nicht transitorischen Speicher (204), der Anweisungen speichert, die bei Ausführung durch den mindestens einen Prozessor (204) die Einrichtung (200) veranlassen, eines der Verfahren nach einem der Ansprüche 1 bis 12 durchzuführen.

## Revendications

1. Procédé mis en œuvre par ordinateur (900, 1000), le procédé mis en œuvre par ordinateur (900, 1000) comprenant :
la surveillance (902) d'une consommation d'énergie actuelle d'un véhicule (112) lorsque le véhicule (112) exécute un premier plan de route ;
la détermination (904) que la consommation d'énergie actuelle du véhicule (112) ne correspond pas à une consommation d'énergie prévue du véhicule (112) ;
en réponse à la détermination que la consommation d'énergie actuelle du véhicule (112) ne correspond pas à la consommation d'énergie prévue du véhicule (112) :
la génération (906, 1006), sur la base d'une sortie provenant d'un modèle de prévision de performances de véhicule, d'une superposition de l'énergie prévue (502a-c, 602, 802) représentant la consommation d'énergie prévue du véhicule (112), dans lequel la superposition de l'énergie prévue (502a-c, 602, 802) comprend une visualisation d'un ou plusieurs segments de trajet définis entre deux points de cheminement (504a-n, 604a-n, 706) ou plus associés au premier plan de route, dans lequel la superposition de l'énergie prévue associée au premier plan de route est configurée pour s'afficher sur un affichage électronique (500, 701, 800) respectif associé à un ou plusieurs dispositifs informatiques décrivant un environnement du véhicule (112), et dans lequel la superposition de l'énergie prévue (502a-c, 602, 802) associée au premier plan de route est codée par couleurs sur la base d'une ou plusieurs valeurs prévues associées à un ou plusieurs paramètres de batterie associés à un système de batterie du véhicule (112) en rapport avec la consommation d'énergie prévue ;
la détermination (908) d'une limite de sécurité (506, 810) **caractérisée par** un temps de trajet maximal sûr, dans lequel la limite de sécurité (506, 810) est déterminée sur la base d'une ou plusieurs valeurs actuelles parmi les un ou plusieurs paramètres de batterie, un état opérationnel actuel d'un ou plusieurs systèmes de véhicule associés au véhicule (112) et une position actuelle du véhicule (112) ; et
l'entraînement (910) de l'affichage de la superposition de l'énergie prévue (502a-c, 602, 802) et facultativement de la limite de sécurité (506, 810), sur au moins l'un des un ou plusieurs dispositifs informatiques.

2. Procédé mis en œuvre par ordinateur (900, 1000) selon la revendication 1, le procédé mis en œuvre par ordinateur (900, 1000) comprenant en outre :
l'exécution (1002) d'un processus de validation de performances de véhicule en calculant un impact d'un ou plusieurs paramètres de route sur les un ou plusieurs systèmes de véhicule associés au véhicule (112), dans lequel les un ou plusieurs paramètres de route comprennent au moins l'un parmi un type de véhicule, un système de batterie de véhicule, un nombre de passagers, un poids de charge utile de véhicule ou un ou plusieurs facteurs environnementaux ;
la réception (1004) du premier plan de route ;
le fait de déterminer (1008), sur la base de résultats d'entrée provenant du processus de validation de performances de véhicule et du premier plan de route dans le modèle de prévision de performances de véhicule, si le premier plan de route est réalisable, dans lequel le fait de déterminer si le premier plan de route est réalisable comprend le fait de déterminer si le système de batterie du véhicule (112) aura une quantité de réserves d'énergie nécessaire par rapport à une capacité d'énergie disponible du système de batterie après l'arrivée à une destination finale associée au premier plan de route ;
en réponse à la détermination (1008) que le premier plan de route n'est pas réalisable lorsqu'il est déterminé que le système de batterie n'aura pas la quantité de réserves d'énergie nécessaire :
l'entraînement de la transmission d'une notification demandant l'entrée d'un deuxième plan de route, dans lequel la notification est configurée pour être affichée sur les un ou plusieurs dispositifs informatiques ; et
en réponse à la détermination (1008) que le premier plan de route est réalisable lorsqu'il est déterminé que le système de batterie aura la quantité de réserves d'énergie nécessaire :
l'entraînement de l'affichage d'un ou plusieurs éléments d'interface interactifs (704) associés à une confirmation de sélection de premier plan de route sur au moins l'un des un ou plusieurs dispositifs informatiques ; et
le fait de déterminer, sur la base d'une interaction avec les un ou plusieurs éléments d'interface interactifs (704) associés à la confirmation de sélection de premier plan de route, s'il faut entraîner l'exécution du premier plan de route.

3. Procédé mis en œuvre par ordinateur (900, 1000) selon la revendication 1, dans lequel le procédé mis en œuvre par ordinateur (900, 1000) comprend en outre :
la détection, sur la base au moins en partie d'une comparaison d'une ou plusieurs valeurs actuelles associées aux un ou plusieurs paramètres de batterie, à l'état opérationnel des un ou plusieurs systèmes de véhicule et à la consommation d'énergie prévue du véhicule (112), d'une situation problématique impactant le fonctionnement du véhicule (112) ;
en réponse à la détection d'une situation problématique impactant le fonctionnement du véhicule (112) :
la détermination d'un niveau de gravité associé à la situation problématique ;
la génération, sur la base au moins en partie du niveau de gravité de la situation problématique, d'une ou plusieurs recommandations pour atténuer la situation problématique ; et
l'entraînement de l'affichage d'un ou plusieurs éléments d'interface interactifs (704) associés aux une ou plusieurs recommandations sur les un ou plusieurs dispositifs informatiques, dans lequel les un ou plusieurs éléments d'interface interactifs (704) associés aux une ou plusieurs recommandations respectives sont configurés pour, en réponse à une interaction avec un élément d'interface interactif respectif des un ou plusieurs éléments d'interface interactifs (704), entraîner l'exécution d'une recommandation respective des une ou plusieurs recommandations.

4. Procédé mis en œuvre par ordinateur (900, 1000) selon la revendication 3, dans lequel les une ou plusieurs recommandations comprennent au moins une ou plusieurs parmi une recommandation visant à entraîner le véhicule (112) à naviguer vers un centre de trajet candidat, une recommandation visant à entraîner le véhicule (112) à naviguer vers un centre de trajet optimal (806), une recommandation visant à entraîner le véhicule (112) à activer un mode de fonctionnement économique ou une recommandation visant à entraîner le véhicule (112) à exécuter une procédure de navigation d'urgence.

5. Procédé mis en œuvre par ordinateur (900, 1000) selon la revendication 3, dans lequel le procédé mis en œuvre par ordinateur (900, 1000) comprend en outre :
en réponse à la détection d'une situation problématique impactant le fonctionnement du véhicule (112) :
la détermination d'un centre de trajet optimal (806) vers lequel le véhicule (112) doit naviguer,
dans lequel la détermination du centre de trajet optimal (806) comprend la classification d'un ou plusieurs centres de trajet candidats (812a-n) sur la base d'au moins l'une parmi une distance entre un centre de trajet candidat respectif des un ou plusieurs centres de trajet candidats (812a-n) et le véhicule (112), la limite de sécurité (506, 810) ou la consommation d'énergie prévue du véhicule (112) ;
l'entraînement de l'affichage des un ou plusieurs centres de trajet candidats (812a-n) et du centre de trajet optimal (806) pour sélection via les un ou plusieurs dispositifs informatiques ; et
l'entraînement du véhicule (112) à naviguer vers un centre de trajet candidat des un ou plusieurs centres de trajet candidats (812a-n) ou le centre de trajet optimal (806) sur la base de la sélection.

6. Procédé mis en œuvre par ordinateur (900, 1000) selon la revendication 5, dans lequel la sélection du centre de trajet candidat ou du centre de trajet optimal (806) est exécutée automatiquement par un système de connaissance d'état de batterie de véhicule, VBSA (301) embarqué, et dans lequel le véhicule (112) est entraîné à naviguer vers le centre de trajet candidat ou le centre de trajet optimal (806) sur la base de la sélection du centre de trajet candidat ou du centre de trajet optimal (806) par le système VBSA (301) embarqué.

7. Procédé mis en œuvre par ordinateur (900, 1000) selon la revendication 5, dans lequel les un ou plusieurs centres de trajet candidats (812a-n) et le centre de trajet optimal (806) sont codés par couleurs sur la base d'au moins l'une parmi une position relative par rapport à la limite de sécurité (506, 810), la distance entre les un ou plusieurs centres de trajet candidats (812a-n) et le véhicule (112), une distance entre le centre de trajet optimal (806) et le véhicule (112), ou la consommation d'énergie prévue du véhicule (112).

8. Procédé mis en œuvre par ordinateur (900, 1000) selon la revendication 1, dans lequel les un ou plusieurs paramètres de batterie comprennent au moins l'un parmi un état de charge, SoC, un état de santé, SoH, un état de fonction, SoF ou une température associée au système de batterie du véhicule (112).

9. Procédé mis en œuvre par ordinateur (900, 1000) selon la revendication 1, dans lequel un point de cheminement des deux points de cheminement (504a-n, 604a-n, 706) ou plus associés au premier plan de route est associé à au moins une valeur prévue parmi les une ou plusieurs valeurs prévues respectives associées aux un ou plusieurs paramètres de batterie.

10. Procédé mis en œuvre par ordinateur (900, 1000) selon la revendication 1, dans lequel la superposition de l'énergie prévue (602) est configurée selon une perspective subjective, et dans lequel la superposition de l'énergie prévue (602) est **caractérisée par** le premier plan de route de telle sorte qu'un ou plusieurs segments de trajet entre la position actuelle du véhicule (112) et un ou plusieurs points de cheminement à venir (604a-n) associés au premier plan de route peuvent être visualisés par rapport à un cap actuel, une altitude actuelle et une vitesse actuelle du véhicule (112).

11. Procédé mis en œuvre par ordinateur (900, 1000) selon la revendication 10, dans lequel la superposition de l'énergie prévue (602) est affichée sur un affichage de vol principal associé au véhicule (112).

12. Procédé mis en œuvre par ordinateur (900, 1000) selon la revendication 1, le procédé mis en œuvre par ordinateur (900, 1000) comprenant en outre :
la réception, lors de l'exécution du premier plan de route, d'un plan de route alternatif ;
en réponse à la réception du plan de route alternatif :
la génération, sur la base d'une entrée du plan de route alternatif et de résultats provenant d'un processus de validation de performances de véhicule associé au premier plan de route dans le modèle de prédiction de performances de véhicule, d'une superposition de l'énergie prévue (502a-c, 602, 802) représentant la consommation d'énergie prévue du véhicule (112) associée au plan de route alternatif, dans lequel la superposition de l'énergie prévue (502a-c, 602, 802) correspond à un ou plusieurs segments de trajet définis entre deux points de cheminement (504a-n, 604a-n, 706) ou plus associés au plan de route alternatif, dans lequel la superposition de l'énergie prévue (502a-c, 602, 802) associée au plan de route alternatif est configurée pour s'afficher sur l'affichage électronique (500, 701, 800) respectif associé aux un ou plusieurs dispositifs informatiques décrivant un environnement du véhicule (112), et dans lequel la superposition de l'énergie prévue (502a-c, 602, 802) associée au plan de route alternatif est codée par couleurs sur la base des une ou plusieurs valeurs prévues associées aux un ou plusieurs paramètres de batterie associés à un système de batterie du véhicule (112) en rapport avec la consommation d'énergie prévue ;
l'entraînement de l'affichage de la superposition de l'énergie prévue (502a-c, 602, 802) associée au plan de route alternatif sur au moins l'un des un ou plusieurs dispositifs informatiques ;
l'entraînement de l'affichage d'un ou plusieurs éléments d'interface interactifs (704) associés à une confirmation de sélection de plan de route alternatif sur au moins l'un des un ou plusieurs dispositifs informatiques ; et
le fait de déterminer, sur la base d'une interaction avec les un ou plusieurs éléments d'interface interactifs (704) associés à la confirmation de sélection de plan de route alternatif, s'il faut entraîner l'exécution du plan de route alternatif.

13. Appareil (200) comprenant :
au moins un processeur (202) ; et
au moins une mémoire non transitoire (204) stockant des instructions qui, lorsqu'elles sont exécutées par l'au moins un processeur (204), entraînent l'appareil (200) à réaliser le procédé selon l'une quelconque des revendications 1 à 12.
